# EUROPÄISCHE PATENTSCHRIFT

(11) **EP 3 658 616 B1**
(45) Veröffentlichungstag und Bekanntmachung des Hinweises auf die Patenterteilung: **22.10.2025**
(21) Anmeldenummer: 18749322.6
(22) Anmeldetag: 25.07.2018
(51) Int. Cl.: C08K 3/20, C08K 5/00, C08K 5/43, C08K 3/016, C09K 21/10, C08K 5/41, C08K 5/51, C08L 23/12

(54) **HALOGENFREIE SULFONSÄUREESTER UND/ODER SULFINSÄUREESTER ALS FLAMMSCHUTZMITTEL, FLAMMSCHUTZMITTELSYNERGISTEN UND RADIKALGENERATOREN IN KUNSTSTOFFEN**
HALOGEN-FREE SULPHONIC ACID ESTER AND/OR SULPHINIC ACID ESTER AS FLAME RETARDANT, FLAME RETARDANT SYNERGISTS AND RADICAL GENERATORS IN PLASTICS
ESTERS D'ACIDE SULFONIQUE ET/OU ESTERS D'ACIDE SULFINIQUE NON HALOGÉNÉS SOUS FORME DE RETARDATEURS DE FLAMMES, DE SYNERGISTES DE RETARDATEURS DE FLAMMES ET DE GÉNÉRATEURS DE RADICAUX DANS LES MATIÈRES PLASTIQUES

(30) Priorität: 25.07.2017 DE 102017212772
(43) Veröffentlichungstag der Anmeldung: 03.06.2020
(60) Teilanmeldung: 20170867.4
(73) Patentinhaber: Fraunhofer-Gesellschaft zur Förderung der angewandten Forschung e.V., 80686 München (DE)
(72) Erfinder: PFAENDNER, Rudolf, 64668 Rimbach (DE); DRIEVER, Thomas, 63517 Rodenbach (DE); LEIPOLD, Anina, 61130 Nidderau (DE); METZSCH-ZILLIGEN, Elke, 54597 Steffeln (DE)
(74) Vertreter: Pfenning, Meinig & Partner mbB
(86) Internationale Anmeldenummer: PCT/EP2018/070197
(87) Internationale Veröffentlichungsnummer: WO 2019/020699

(56) Entgegenhaltungen:
- EP-A1- 2 955 209
- WO-A1-2013/065448
- DE-A1- 2 648 701
- US-A1- 2012 301 662
- DATABASE CA [online] CHEMICAL ABSTRACTS SERVICE, COLUMBUS, OHIO, US; 20 May 2013 (2013-05-20), AOGO, TOSHIAKI ET AL: "Conductive composition, and conductive film and conductive laminate using same", XP002785570, retrieved from STN Database accession no. 2013:776139

## Beschreibung

Die vorliegende Erfindung betrifft die Verwendung von halogenfreien Sulfonsäureestern und/oder Sulfinsäureestern als Flammschutzmittel und/oder Flammschutzmittelsynergisten in Kunststoffen. Weiterhin betrifft vorliegende Erfindung die Verwendung der flammgeschützten Kunststoffzusammensetzungen in der Elektro- oder Elektronikindustrie, Bauindustrie, Transportindustrie, vorzugsweise Autos, Flugzeuge, Eisenbahnen und Schiffe, für medizinische Anwendungen, für Haushaltsgeräte, Fahrzeugteile, Konsumartikel, Verpackungen, Möbel und Textilien.

Die meisten Kunststoffe sind brennbar und vergleichsweise leicht entflammbar. Um das Brandrisiko von Kunststoffen in bestimmten Anwendungen zu vermindern oder auszuschließen, ist es deshalb zwingend erforderlich, die Entflammbarkeit zu verringern und flammfeste Kunststoffzusammensetzungen einzusetzen. Dazu werden in der Regel Flammschutzmittel dem Kunststoff beigegeben, mit dem Ziel, das Entzünden für eine bestimmte Zeit zu verhindern oder die Brandausbreitung signifikant zu verzögern. Traditionelle Flammschutzmittel basieren auf chlor- und bromhaltigen Verbindungen (letztere meist in Kombination mit Antimontrioxid), auf phosphorhaltigen, auf stickstoffhaltigen Verbindungen und auf Metallydroxiden wie Aluminiumhydroxid (ATH) oder Magnesiumhydroxid (MDH). In neuerer Zeit werden häufig aus toxikologischen und ökotoxikologischen Gründen halogenfreie Flammschutzlösungen bevorzugt.

Zur Herstellung von flammgeschützten Kunststoffen gibt es eine Vielzahl von Flammschutzmitteln, die in der Regel substratspezifisch für ein bestimmtes Polymer und einen bestimmten Einsatzbereich, entsprechend den dafür zugrundeliegenden Normen, eingesetzt werden. Flammgeschützte Kunststoffe werden hauptsächlich in Elektro- und Elektronikanwendungen, im Transportbereich (Bahn, Flugzeug, Auto), bei Textilien und im Bauwesen verwendet.

Eine in den letzten Jahren entwickelte Flammschutzmittelklasse sowie Additivklasse sind Radikalgeneratoren auf der Basis von Oxyimiden. Diese sind beispielsweise in WO 2014/154636 A1, WO 2015/180888 A1, WO 2015/189034 A1, WO 2016/042038 A1, WO 2016/042040 A1, WO 2016/042043 A1 von der Fraunhofer-Gesellschaft beschrieben.

Sulfonsäurederivate wurden als Flammschutzmittel bisher nur mit halogenhaltigen Substituenten beschrieben, wobei in bekannter Weise die Halogengruppen für die Flammschutzmittel-Wirkung verantwortlich sind, siehe z.B. US 4,108,906, DE 28 34 884 oder DE 27 36 696.

WO 2011/067197 A2 beschreibt eine Sauerstoff-Scavenger-Zusammensetzung für Lebensmittelverpackungsanwendungen enthaltend (I) ein Polymer, (II) ein organisches Oxidationsadditiv basierend auf einem cyclischen Oxyimid, (III) ein Metallsalz, (IV) eine oxidierende Substanz, die verbraucht wird, und (V) optional Additive.

WO 2007/028731 A1 betrifft einen abbaubaren Polymergegenstand, wobei ein N-Hydroxyimid-Derivat als Abbaubeschleuniger verwendet wird.

Die DE 26 48 701 A1 betrifft neuartige flammhemmendeMassen auf Basis chlorhaltiger aliphatischer Polymerisate. Insbesondere betrifft sie Polymerisate undMischpolymerisate auf Basis von Vinylchlorid.

Aus CHEMICAL ABSTRACTS SERVICE, COLUMBUS, OHIO, US; 20 May 2013 (2013-05-20), AOGO, TOSHIAKI ET AL ist eine leitfähige Zusammensetzung und ein leitfähiger Film sowie ein leitfähiges Laminat bekannt (XP002785570, abgerufen aus der STN Database).

In der EP 2 955 209 A1 wird eine dämmschichtbildende Zusammensetzung beschrieben, die ein Bindemittel auf Basis eines alkoxysilanfunktionalisierten Polymers, das alkoxyfunktionalisierte Silangruppen trägt, ein dämmschichtbildendes Additiv und gegebenenfalls ein Vernetzungsmittel enthält. Durch die Zusammensetzung, deren Expansionsrate relativ hoch ist, können in einfacher und schneller Weise Beschichtungen mit der für die jeweilige Feuerwiderstandsdauer erforderlichen Schichtdicke aufgetragen werden, wobei die Schichtdicke auf ein Minimum reduziert und dennoch eine große isolierende Wirkung erreicht werden kann. Die Zusammensetzung eignet sich besonders für den Brandschutz, insbesondere als Beschichtung von Stahlbauteilen, wie Stützen, Trägern, Fachwerkstäben, zur Erhöhung der Feuerwiderstandsdauer.

Die US 2012/301622 A1 beschreibt ein emulgiertes Trennmittel zur Verwendung bei der Herstellung von Holzprodukten aus Holzfasern oder Holzspänen mit pMDI-Klebstoffen, wobei das Trennmittel im Anwendungsprozess des Trennmittels normalerweise bewegt wird. Das emulgierte Trennmittel ist einfach herzustellen, hat eine gute Stabilität und Lagerung, sorgt für eine effektive Freisetzung zwischen dem Holzprodukt und den Metalloberflächen, ermöglicht die Herstellung von Holzprodukten aus Holzfasern oder Spänen bei hohen Temperaturen, ohne übermäßigen Pressenaufbau zu verursachen, verbessert die physikalischen Eigenschaften des Holzprodukts und verkürzt die Presszeit. Die emulgierte Trennmittelzusammensetzung zur Verwendung mit einem pMDI-Klebstoff umfasst eine emulgierte Mischung aus: (a) ein Natriumsalz einer Fettsäure mit 8-18 Kohlenstoffatomen und (b) ein Natriumsalz eines Phosphatester mit 6-22 Kohlenstoffatomen und einer HLB-Zahl von 4 oder weniger.

Die im Stand der Technik beschriebenen Flammschutzmittel und Radikalgeneratoren weisen einige Nachteile auf. So zeigen sie z.B. eine unzureichende Verträglichkeit oder Löslichkeit in Polymeren auf, woraus auch eine geringe Wirkung resultieren kann. Weiterhin sind die im Stand der Technik beschriebenen Verbindungen oft schwer zu synthetisieren.

Ausgehend davon bestand eine Aufgabe der vorliegenden Erfindung darin Verbindungen zur Verwendung als Flammschutzmittel und/oder Flammschutzmittelsynergisten bereitzustellen, die in Kunststoffen verwendbar sind und die eine gute Verträglichkeit oder Löslichkeit in diesen Kunststoffen aufweisen. Weiterhin soll durch die Verwendung dieser Stoffe eine verbesserte Wirkung erreicht werden, d.h. sie sollen schon in geringen Mengen wirksam sein. Außerdem sollen die Verbindungen einfach synthetisch zugänglich sein, bevorzugt aus großtechnisch verfügbaren Edukten, was es erlaubt diese kostengünstig herzustellen.

Diese Aufgabe wird durch die Verwendung von mindestens einem halogenfreien Sulfonsäureester und/oder mindestens einem halogenfreien Sulfinsäureester als Flammschutzmittel und/oder Flammschutzmittelsynergisten in Kunststoffen gemäß Anspruch 1 gelöst.

Vorteilhafte Ausführungsformen der erfindungsgemäßen Verwendung von halogenfreien Sulfonsäureestern und/oder halogenfreien Sulfinsäureestern werden in den Ansprüchen 2 bis 7 angegeben.

Weiterhin betrifft die vorliegende Erfindung gemäß Anspruch 9 eine flammgeschützte Kunststoffzusammensetzung mit den folgenden Merkmalen.

Flammgeschützte Kunststoffzusammensetzung bestehend aus den Komponenten (A) bis (D):
(A) 30 bis 99,9 Gew.-% mindestens eines Kunststoffes ausgewählt aus der Gruppe bestehend aus thermoplastischen Kunststoffen, elastomeren Kunststoffen, duroplastischen Kunststoffen und Mischungen daraus;
(B) 0,1 bis 20 Gew.-% mindestens eines Flammschutzmittels wie in einem der Ansprüche 1 bis 6 angegeben und Mischungen davon;
(C) 0 bis 70 Gew.-% mindestens eines von (B) verschiedenen Flammschutzmittels oder Flammschutzmittelsynergisten und Mischungen hiervon;
(D) 0 bis 50 Gew.-% mindestens eines Additivs oder Zusatzstoffes;
wobei sich die Gewichtsanteile der Komponenten (A) bis (D) auf 100 Gew.-% ergänzen.

Vorteilhafte Ausführungsformen dieser flammgeschützte Kunststoffzusammensetzung werden in den abhängigen Ansprüche 10 bis 13 angegeben.

Außerdem betrifft die vorliegende Erfindung nach Anspruch 14 die Verwendung der erfindungsgemäßen flammgeschützten Kunststoffzusammensetzung in der Elektro- oder Elektronikindustrie, Maschinen- und Apparatebau, Bauindustrie, Transportindustrie, vorzugsweise Autos, Flugzeuge, Eisenbahnen und Schiffe, für medizinische Anwendungen, für Haushaltsgeräte, Fahrzeugteile, Kabel, Konsumartikel, Verpackungen, Möbel und Textilien.

Zudem wird die Verwendung von Sulfonsäureazanylestern als Radikalgeneratoren zur Modifikation von Kunstoffen sowie vorteilhafte Verwendungen und Verfahren zu deren Durchführung werden beschrieben.

### Begriffsdefinitionen:

"Sulfonsäureester" im Sinne der vorliegenden Erfindung weisen die folgende Struktureinheit auf, wobei als R¹ die Gruppierung "O-N" ausgeschlossen ist. Diese Gruppierung fällt explizit nicht unter den Oberbegriff Heteroalkyl.

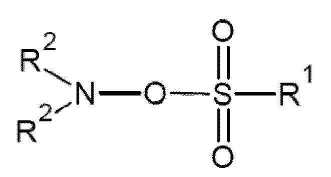

"Sulfinsäureester" im Sinne der vorliegenden Erfindung weisen die unten gezeigte Struktureinheit auf, wobei als R¹ die Gruppierung "O-N" ausgeschlossen ist. Diese Gruppierung fällt explizit nicht unter den Oberbegriff Heteroalkyl.

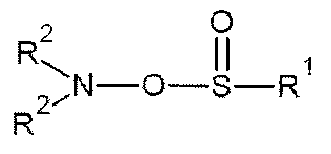

Unter "Sulfonsäureazanylestern" werden gemäß der vorliegenden Erfindungen Verbindungen mit der unten links abgebildeten Struktureinheit verstanden, unten rechts sind Sulfinsäureazanylester abgebildet, dabei ist für R¹ jeweils die Gruppierung "O-N" ausgeschlossen. Diese Gruppierung fällt explizit nicht unter den Oberbegriff Heteroalkyl. 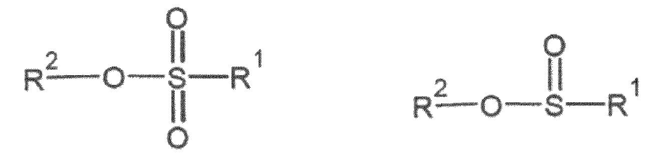 mere mit einer Doppel- oder Dreifachbindung.

Unter "Pfropfen" oder "grafting" wird im Sinne der vorliegenden Erfindung das Aufbringen von weiteren Ketten auf die Hauptkette eines Polymers verstanden. Eine "pfropfungsfähige Gruppe" meint eine funktionelle Gruppe, die in der Lage ist an die Hauptkette eines Polymers anzuknüpfen.

Ein "abbaufähiges Polyolefin" im Sinne vorliegender Erfindung, meint ein Polyolefin dessen Molekulargewicht durch radikalische Prozesse abgebaut werden kann.

Unter der "Halbwertszeit" eines halogenfreien Sulfon- oder Sulfinsäureesters wird im Sinn der vorliegenden Erfindung die Zeit verstanden nach der die Hälfte des halogenfreien Sulfon- oder Sulfinsäureesters bei einer bestimmten Temperatur in Radikale zerfallen ist, bevorzugt ist diese Temperatur im Bereich von 180 bis 280°C und insbesondere bevorzugt im Bereich von 200 bis 250°C.

"Kontrollierter Abbau von Polyolefinen" im Sinne der vorliegenden Erfindung meint die Erniedrigung des Molekulargewichts eines Polyolefins unter Zusatz von einer bestimmten Menge von Radikalgeneratoren in einem thermischen Prozess auf einen Zielwert hin.

Unter "Flammschutzmittelsynergisten" werden gemäß der vorliegenden Erfindung Verbindungen verstanden, die die flammhemmende Wirkung anderer Flammschutzmittel erhöhen, d.h. bei Zusatz des Flammschutzmittelsynergisten wird eine bessere flammhemmende Wirkung erzielt, als wenn die Gesamtmenge an Flammschutzmittel und Flammschutzmittelsynergist kleiner oder gleich der ursprünglichen Menge an Flammschutzmittel ist. Es ist nicht ausgeschlossen, dass Flammschutzmittelsynergisten auch selbst als Flammschutzmittel wirken.

Verwendung als Flammschutzmittel und/oder Flammschutzmittelsynergisten

Ein Aspekt der vorliegenden Erfindung betrifft die Verwendung von mindestens einem halogenfreien Sulfonsäureester und/oder mindestens einem halogenfreien Sulfinsäureestern als Flammschutzmittel und/oder Flammschutzmittelsynergisten in Kunststoffen. Im Folgenden werden bevorzugte Ausführungsformen der erfindungsgemäßen Verwendung angegeben.

Gemäß der vorliegenden Erfindung handelt es sich bei den halogenfreien Sulfonsäureestern und/oder halogenfreien Sulfinsäureestern um halogenfreie Sulfonsäureazanylester der allgemeinen Formel (la) und/oder um halogenfreie Sulfinsäureazanylester der allgemeinen Formel (Ib); 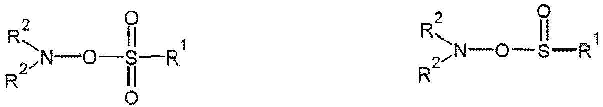 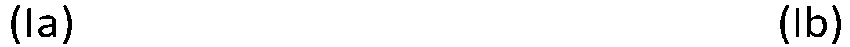 wobei die Reste R¹ und R² jeweils unabhängig voneinander ausgewählt sind aus der Gruppe bestehend aus substituierten oder unsubstituierten Alkylgruppen, Heteroalkylgruppen, Cycloalkylgruppen, Heterocycloalkylgruppen, Acylgruppen, Arylgruppen und Heteroarylgruppen, wobei 2 Reste R² ein zyklisches System bilden können.

Nach einer weiteren bevorzugten Ausführungsform der vorliegender Erfindung ist der halogenfreie Sulfonsäureester ein Sulfonsäureazanylester ausgewählt aus der Gruppe bestehend aus einer der Verbindungen mit den nachfolgenden Formeln oder Mischungen daraus: 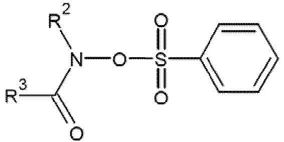 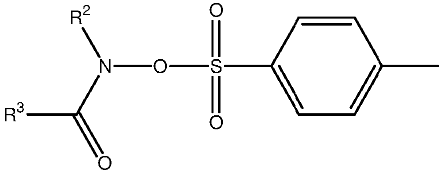 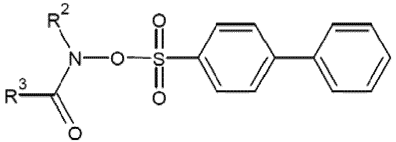 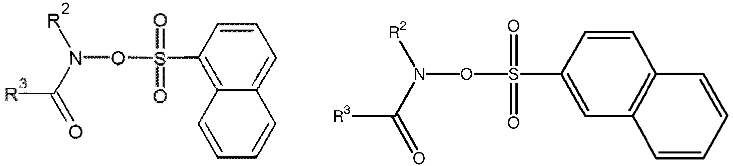 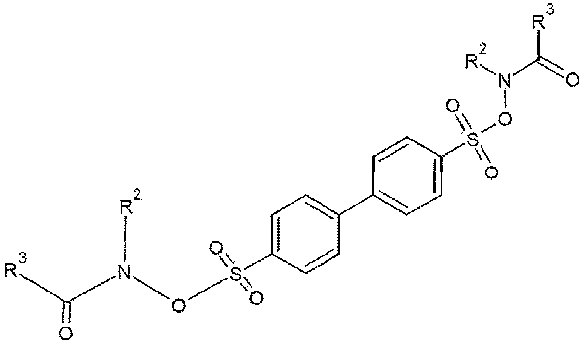 wobei R² die gleiche Bedeutung hat wie oben angegeben und bevorzugt ausgewählt ist aus der Gruppe bestehend aus substituierten oder unsubstituierten Alkylgruppen, Heteroalkylgruppen, Cycloalkylgruppen, Heterocycloalkylgruppen; und R³ ist ausgewählt aus der Gruppe bestehend aus substituierten oder unsubstituierten Alkylgruppen, Heteroalkylgruppen, Cycloalkylgruppen, Heterocycloalkylgruppen; wobei R² und R³ ein zyklisches System bilden können; und wobei die aromatischen Struktureinheiten substituiert sein können; wobei Alkylgruppen als Substituenten bevorzugt sind.

Gemäß einer anderen bevorzugten Ausführungsform der vorliegenden Erfindung ist der halogenfreie Sulfonsäureester ein Sulfonsäureazanylester mit der unten angegebenen Formel: 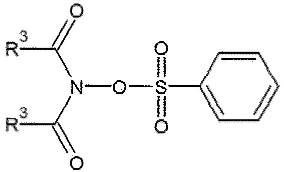 wobei R³ ausgewählt ist aus der Gruppe bestehend aus substituierten oder unsubstituierten Alkylgruppen, Heteroalkylgruppen, Cycloalkylgruppen, Heterocycloalkylgruppen und einem zyklischen System gebildet aus 2 Resten R³.

Eine weitere bevorzugte Ausführungsform der vorliegenden Erfindung sieht vor, dass der halogenfreie Sulfonsäureester ein Sulfonsäureazanylester ausgewählt aus der Gruppe bestehend aus einer der Verbindungen mit den nachfolgenden Formeln oder Mischungen daraus ist:

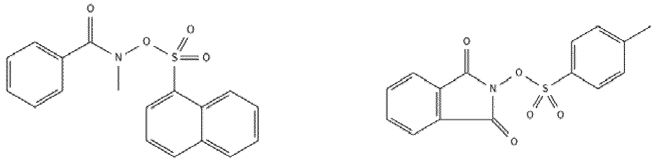

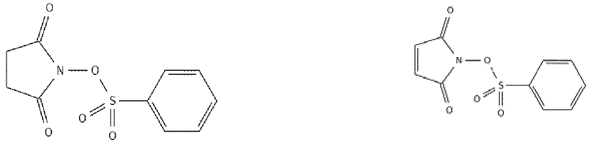

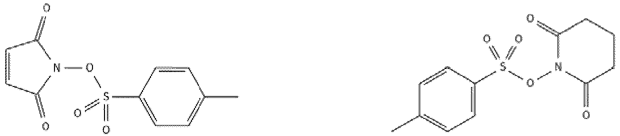

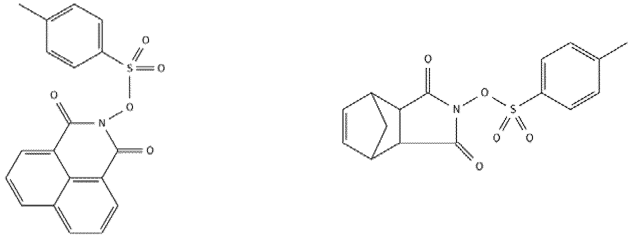

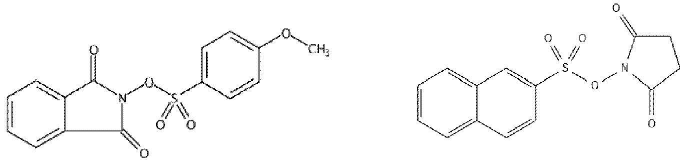

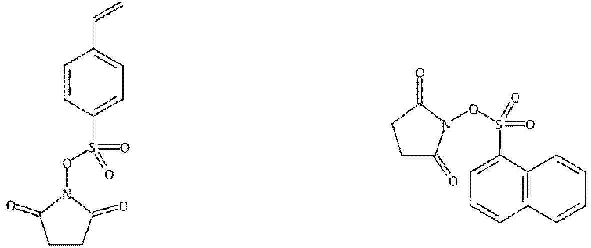

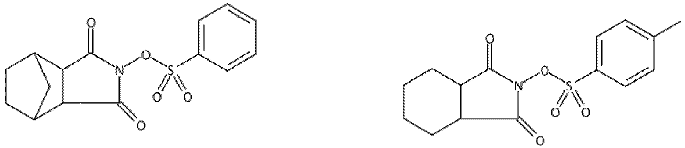

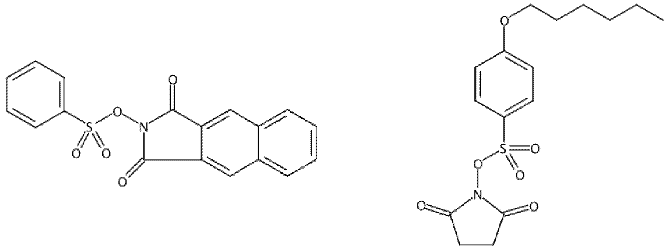

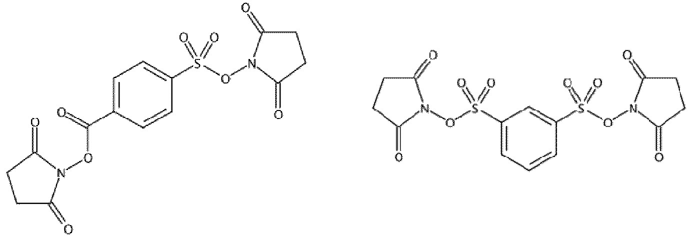

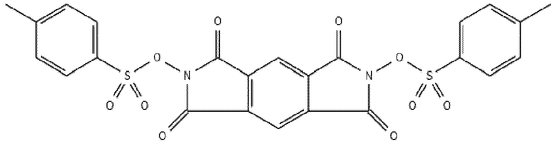

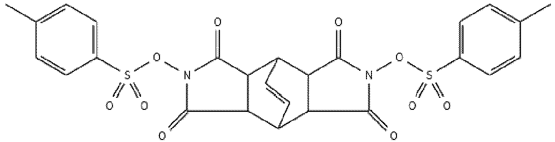

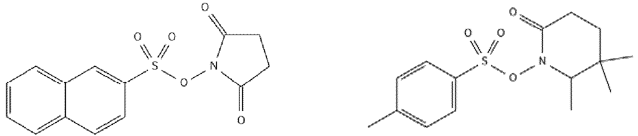

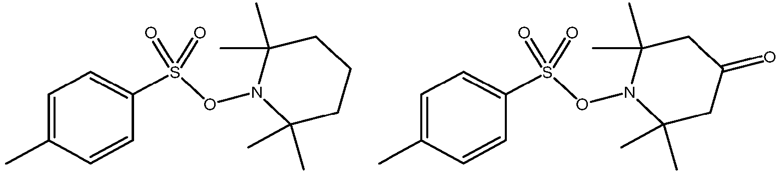

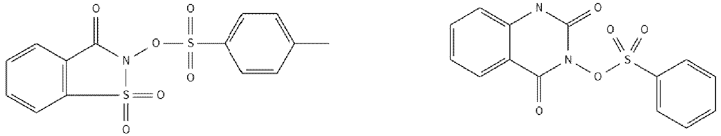

Beispiele für erfindungsgemäße Sulfonsäureester, die eine Heteroarylgruppe enthalten sind:

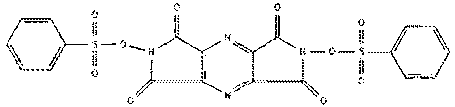

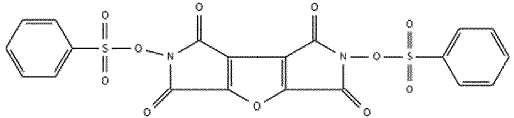

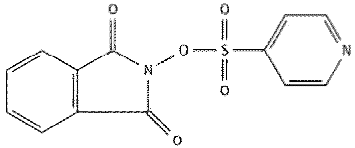

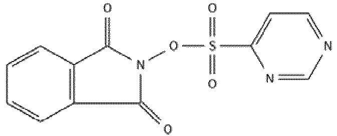

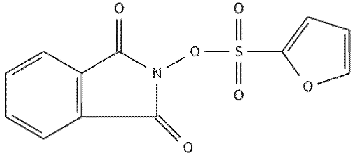

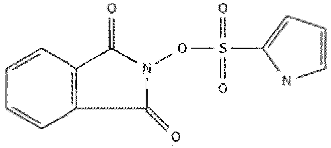

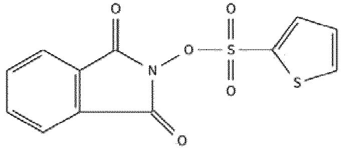

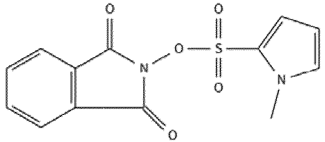

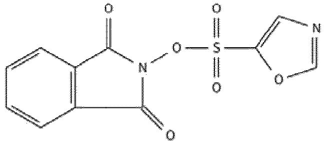

Nach einer anderen bevorzugten Ausführungsform der vorliegenden Erfindung ist der halogenfreie Sulfonsäureester ein Sulfonsäureazanylester in oligomerer oder polymerer Form, der durch Polymerisation oder polymeranaloge Umsetzung hergestellt wird besonders bevorzugt ausgewählt ist aus Monomeren der Gruppe bestehend aus einer der Verbindungen mit den nachfolgenden Formeln oder Mischungen daraus:

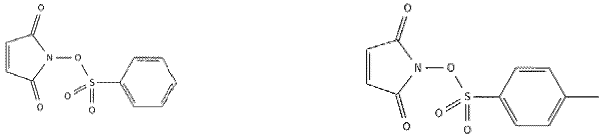

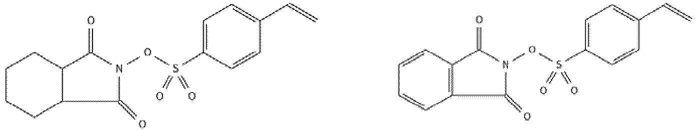

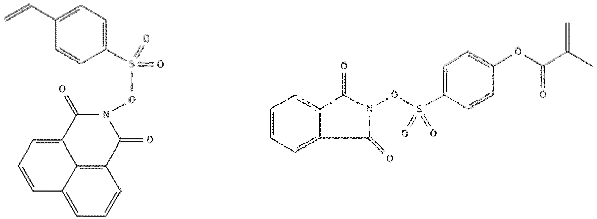

Nach einer weiteren bevorzugten Ausführungsform vorliegender Erfindung ist der Kunststoff ausgewählt aus der Gruppe bestehend aus
a) Polymeren aus Olefinen oder Diolefinen, bevorzugt Polyethylen, insbesondere bevorzugt LDPE, LLDPE, VLDPE, ULDPE, MDPE, HDPE, UHMWPE, durch Einsatz von Metallocen-Katalysatoren hergestelltes Polyethylen, Polypropylen, langkettenverzweigte Polypropylen-Copolymere die mit alpha-Olefinen als Comonomere hergestellt werden wie z.B. mit 1-Buten, 1-Hexen, 1-Octen oder 1-Octadecen, Polyisobutylen, Poly-4-methyl-penten-1, Polybutadien, Polyisopren, wie z.B. auch Naturkautschuk (NR), Polycycloocten, Polyalkylen-Kohlenmonoxid-Copolymere, Copolymeren in Form von statistischen oder Blockstrukturen, insbesondere Polypropylen-Polyethylen (EP), EPM oder EPDM mit z.B. 5-Ethyliden-2-Norbornen als Comonomer, Ethylen-Vinylacetat (EVA), Ethylen-Acrylester, insbesondere Ethylen-Butylacrylat, Ethylen-Acrylsäure und deren Salze, sowie Terpolymere, insbesondere Ethylen Acrylsäure-Glycidylacrylat, Pfropfpolymere, insbesondere Polypropylen-g Maleinsäureanhydrid, Polypropylen-g-Acrylsäure und Polyethylen-g-Acrylsäure, Polyethylen-Polybutylacrylat-graft-Maleinsäureanhydrid;
b) Polystyrol, Poly-alpha-methylstyrol, Polyvinylnaphthalin, Polyvinylbiphenyl, Polyvinyltoluol, Styrol-Butadien (SB), Styrol Butadien-Styrol (SBS), Styrol-Ethylen-Butylen-Styrol (SEBS), Styrol-Ethylen-Propylen Styrol, Styrolisopren, Styrol-Isopren-Styrol (SIS), Styrol-butadien-acrylnitril (ABS), Styrol-acrylnitril (SAN), Styrol-acrylnitrilacrylat (ASA), Styrol-Ethylen, Styrol-Maleinsäureanhydrid-Polymere einschießlich entsprechender Pfropfcopolymere, insbesondere Styrol auf Butadien, Maleinsäureanhydrid auf Styrol, Butadien-Styrol oder Styrol-Ethylen-Butylen-Styrol, sowie Pfropfcopolymere aus Methylmethacrylat, Styrol-Butadien und Styrol-butadien-acrylnitril (ABS) oder Styrol-butadien-methacrylnitril (MABS) sowie hydrierte Polystyrol-Derivate wie z.B. Polyvinylcyclohexan;
c) halogenenthaltenden Polymeren, insbesondere Polyvinylchlorid (PVC), Polychloropren und Polyvinylidenchlorid (PVDC), Copolymeren aus Vinylchlorid und Vinylidenchlorid oder aus Vinylchlorid und Vinylacetat, chloriertes Polyethylen, Polyvinylidenfluorid, Epichlorhydrin-Homo und Copolymere insbes. mit Ethylenoxid (ECO);
d) Polymeren von ungesättigten Estern, insbesondere Polyacrylate und Polymethacrylate, besonders bevorzugt, Polymethylmethacrylat (PMMA), Polybutylacrylat, Polylaurylacrylat, Polystearylacrylat, Polyacrylnitril, Polyacrylamide, Copolymere, insbesondere Polyacrylnitril-Polyalkylacrylat;
e) Polymeren aus ungesättigten Alkoholen und Derivaten, insbesondere Polyvinylalkohol, Polyvinylacetat, Polyvinylbutyral, Polyallylphthalat, Polyallylmelamin;
f) Polyacetalen, insbesondere Polyoxymethylen (POM) oder Copolymere insbesondere mit Butanal;
g) Polyphenylenoxiden und Blends mit Polystyrol oder Polyamiden;
h) Polymeren von cyclischen Ethern insbesondere Polyethylen-glycol, Polypropylenglycol, Polyethylenoxid und Polypropylenoxid;
i) Polyurethanen, bevorzugt aus hydroxyterminierten Polyethern oder Polyestern und aromatischen oder aliphatischen Isocyanaten, wie z.B. 2,4- oder 2,6 Toluylendiisocyanat oder Methylendiphenyldiisocyanat insbesondere auch lineare Polyurethane (TPU), Polyharnstoffen,
j) Polyamiden, insbesondere PA 6, PA 6.6, PA 6.10, PA 4.6, PA 4.10, PA 6.12, PA 10.10, PA 12.12, PA 11, PA 12 sowie teilaromatische und aromatische Polyamide, insbesondere Polyphthalamide, besonderes bevorzugt hergestellt aus Terephthalsäure und/oder Isophthalsäure und aliphatischen Diaminen wie z.B. Hexamethylendiamin oder m-Xylylendiamin oder aus aliphatischen Dicarbonsäuren, insbesondere Adipinsäure oder Sebazinsäure und aromatischen Diaminen, insbesondere 1,4- oder 1,3-Diaminobenzol;
k) Polyimiden, insbesondere Polyamidimiden, Polyetherimiden, Polyesterimiden, Poly(ether)ketonen, Polysulfonen, insbesondere Polyethersulfonen, Polyarylsulfonen, Polyphenylensulfiden, Polybenzimidazolen, Polyhydantoinen;
l) Polyestern aus aliphatischen oder aromatischen Dicarbonsäuren und Diolen oder aus Hydroxy-Carbonsäuren wie z.B. Polyethylenterephthalat (PET), Polybutylenterephthalat (PBT), Polypropylenterephthalat (PTT), Polyethylennaphthylat (PEN), Poly-1,4-dimethylolcyclohexanterephthalat, Polyhydroxybenzoat, Polyhydroxynaphthalat, Polymilchsäure (PLA), Polybutylensuccinat (PBS), Polyhydroxyalkanoate (PHA) wie z.B. Polyhydroxybuttersäure (PHB) oder Polyhydroxyvaleriansäure (PHV); Polycaprolacton;
m) Polycarbonaten, Polyestercarbonaten, sowie Blends von Polycarbonaten mit anderen Polymeren, insbesondere PC/ABS, PC/PBT, PC/PET/PBT;
n) Cellulosederivate, insbesondere Cellulosenitrat, Celluloseacetat, Cellulosepropionat, Cellulosebutyrat;
o) Epoxidharzen, bestehend aus di- oder polyfunktionellen Epoxidverbindungen in Kombination mit z.B. Härtern auf der Basis von Aminen, Anhydriden, Dicyandiamid, Mercaptanen, Isocyanaten oder katalytisch wirkenden Härtern,
p) Phenolharzen wie z.B. Phenol-Formaldehyd-Harze, Harnstoff-Formaldehyd-Harze, Melamin-Formaldehydharze,
q) ungesättigten Polyesterharzen aus ungesättigten Dicarbonsäuren und Diolen mit Vinylverbindungen z.B. Styrol, Alkydharze
r) Silikonen, z.B. auf der Basis von Dimethylsiloxanen, Methyl-Phenylsiloxanen oder Diphenylsiloxanen z.B. Vinylgruppen terminiert
s) sowie Mischungen, Kombinationen oder Blends aus zwei oder mehr der unter a) bis o) genannten Polymere.

Sofern es sich bei den unter a) bis r) angegebenen Polymeren um Copolymere handelt, können diese in Form von statistischen ("random"), Block- oder "tapered" Strukturen vorliegen. Weiterhin können die genannten Polymeren in Form von linearen, verzweigten, sternförmigen oder hyperverzweigten Strukturen vorliegen.

Sofern es sich bei den unter a) bis r) angegebenen Polymeren um stereoreguläre Polymere handelt, können diese in Form von isotaktischen, stereotaktischen, aber auch ataktischen Formen oder als Stereoblockcopolymere vorliegen.

Weiterhin können die unter a) bis r) angegebenen Polymere sowohl amorphe als auch (teil-)kristalline Morphologien aufweisen.

Ggf. können die unter a) genannten Polyolefine auch vernetzt vorliegen, z.B. vernetztes Polyethylen, das dann als X-PE bezeichnet wird.

Die genannten Polymeren a) bis r) können dabei nicht nur als Neuware sondern auch in Form von Rezyklaten vorliegen, z.B. als Produktionsabfälle oder aus Wertstoffsammlungen ("post-consumer" Rezyklate).

### Flammgeschützte Kunststoffzusammensetzung

Ein anderer Aspekt der vorliegenden Erfindung betrifft eine flammgeschützte Kunststoffzusammensetzung bestehend aus den Komponenten (A) bis (D):
(A) 30 bis 99,9 Gew.-% mindestens eines Kunststoffes ausgewählt aus der Gruppe bestehend aus thermoplastischen Kunststoffen, elastomeren Kunststoffen, duroplastischen Kunststoffen und Mischungen daraus;
(B) 0,1 bis 20 Gew.-% mindestens eines Flammschutzmittels wie oben für die Verwendung definiert;
(C) 0 bis 70 Gew.-% mindestens eines von (B) verschiedenen Flammschutzmittels oder Flammschutzmittelsynergisten und Mischungen hiervon;
(D) 0 bis 50 Gew.-% mindestens eines Additivs oder Zusatzstoffes; wobei sich die Gewichtsanteile der Komponenten (A) bis (D) auf 100 Gew.% ergänzen.

Im Folgenden werden bevorzugte Ausführungsformen der erfindungsgemäßen flammgeschützten Kunststoffzusammensetzung angegeben.

Erfindungsgemäß ist Komponente (C) ausgewählt aus der Gruppe bestehend aus
i. anorganischen Flammschutzmitteln, bevorzugt Al(OH)3, Mg(OH)2, AlO(OH), MgCO₃, Schichtsilikaten, insbesondere Montmorillonit der unmodifiziert oder organisch modifiziert sein kann, Sepiolit, Attapulgit, Vermiculit, Wollastonit, Doppelsalzen, insbesondere Mg-Al-Silikate, POSS-(Polyhedral Oligomeric Silsesquioxane) Verbindungen, Huntit, Hydromagnesit oder Halloysit sowie Sb₂O₃, Sb₂O₅ MoO₃, Zinkstannat, Zinkhydroxystannat, Mica, Calciumcarbonat;
ii. stickstoffhaltigen Flammschutzmitteln, bevorzugt Melamin, Melem, Melam, Melon, Melaminderivaten, Melaminkondensationsprodukten oder Melaminsalzen, Benzoguanamin, Polyisocyanuraten, Allantoin, Phosphazenen, insbesondere Melamincyanurat, Melaminphosphat, Dimelaminphosphat, Melaminpyrophosphat, Melaminpolyphosphat, Melaminhypophosphit, Melamin-Metall-Phosphaten, insbesondere Melaminaluminumphosphat, Melaminzinkphosphat, Melaminmagnesiumphosphat, sowie den entsprechenden Pyrophosphaten und Polyphosphaten, Poly-[2,4-(piperazin-1,4-yl)-6-(morpholin-4-yl)-1,3,5-triazin], Ammoniumpolyphosphat, Melaminborat und Melaminhydrobromid; Polymer aus Ethylendiamin und 4,6-dichloro-N-phenyl-1,3,5-triazin-2-amine, Poly(1,3,5-triazin-2-aminoethanol diethylentriamin, Ammoniumsulfamat;
iii. Radikalbildnern, bevorzugt Alkoxyaminen, Hydroxylaminestern, Azoverbindungen, Dicumyl oder Polycumyl
iv. Phosphorhaltigen Flammschutzmitteln, bevorzugt roter Phosphor, Phosphate, insbesondere Resorcindiphosphat, Bisphenol-A-diphosphat und ihre Oligomere, Bisphenol-A-bis (dicresyl)-phosphat, Triphenylphosphat, Ethylendiamindiphosphat, Phosphinate, insbesondere Salze der hypophosphorigen Säure und ihrer Derivate, insbesondere Alkylphosphinatsalzen, besonders bevorzugt Aluminiumdiethylphosphinat, Zinkdiethylphosphinat oder Aluminiumphosphinat, Aluminiumhypophosphit, Calciumhypophosphit, Natriumhypophosphit, Aluminiumphosphit, Aluminiumphosphonat, Phosphonatester, Aluminiummethylmethylphosphonat, oligomere und polymere Derivate der Methanphosphonsäure, wie z.B. Poly(1,3-phenylen methylphosphonat) 9,1O Dihydro-9-oxa-1O-phosphorylphenanthren-10-oxid (DOPO) und deren substituierte Verbindungen wie z.B. Glycerol tri(DOPO-acrylat) und deren polymeren Salze wie z.B. Poly-Zinc-DOPO, polymeres Phosphordiamidat, 4,4'-Bishydroxydeoxybenzoin-polyphosphonat, 2-Carboxy-ethylmethylphosphinsäure-2-carboxyethylphenyl-phosphinsäure, Diethyl-N,N'-bis(2-hydroxyethyl)aminomethyl-phosphonat, Dimethyl propyl phosphonat, Dimethylspirophosphonat, Diphenylcresyl phosphate, Hydrochinon-bis-(diphenyl phosphat);
v. Halogenhaltigen Flammschutzmitteln auf Chlor- und Brombasis, bevorzugt polybromierte Diphenyloxide, insbesondere Decabromdiphenyloxid, Tris(3-bromo-2,2-bis(bromomethyl)propylphosphat, Tris(tribromneopentyl)phosphat, Tetrabromphthalsäure, 1,2-Bis(tribromphenoxy)ethan, Hexabromcyclododecan, Dibromoneopentylglycol, bromiertes Diphenylethan, 1,3,5-Tris-(2,3-di-brompropyl)isocyanurat, Ethylen bis(tetrabromophthalimid), Tetrabromo-bisphenol A, Tris(tribromoneopentyl)alkohol, bromiertes Polystyrol, bromiertes Polybutadien, PolystyrolbromiertesPolybutadien-Copolymere, bromiertes Epoxidharz, bromiertes Polycarbonat mit oder ohne Endgruppen-Blockierung, Polypentabrombenzylacrylat, bevorzugt in Kombination mit Sb₂O₃ und/oder Sb₂O₅
vi. Boraten, insbesondere Zinkborat oder Calciumborat mit und ohne Trägermaterial;
vii. Schwefelhaltigen Verbindungen, bevorzugt elementarer Schwefel, Disulfide und Polysulfide, Thiuramsulfid, Dithiocarbamate, Mercaptobenzthiazol und Sulfenamiden;
viii. Antidrip-Mitteln, insbesondere Polytetrafluorethylen;
ix. siliciumhaltigen Verbindungen, insbesondere Polyphenylsiloxanen;
x. Salze von Sulfonsäuren wie z.B. Phosphonium sulfonat, Kaliumperfluorobutansulfonat, Kalium-p-toluolsulfonat, Kaliumdiphenylsulfonsulfonat
xi. Smoke suppressants wie z.B. Molybdänoxid, Ammoniumoctamolybdat, Kupfermolybdat, Zinkmolybdat, Molybdatkomplexe z.B. Calcium-molybdat, Calcium-molybdat-zink, Zinkmolybdat auf MagnesiumSilikat Träger;
xii. Naturstoffe mit flammhemmender Wirkung wie Lignin, Chitosan, Phytinsäure
xiii. sowie Mischungen, Kombinationen oder Blends aus zwei oder mehr der unter i. bis xii. genannten Stoffe.

Bei den unter e) genannten halogenhaltigen Flammschutzmitteln handelt es sich häufig um kommerzielle Produkte, die z.B. von den Firmen Albemarle, Lanxess/Great Lakes oder ICL-IP im Handel erhältlich sind.

Bevorzugte Flammschutzmittel aus der Gruppe (C) sind insbesondere:
Radikalbildner im Sinne der vorliegenden Erfindung sind Verbindungen, die durch thermische und Licht-induzierte Spaltung Radikale erzeugen können. Geeignete Radikalbildner für die hier vorliegenden Anwendungen sind solche, die für die Kunststoff- oder Beschichtungs-Verarbeitungsprozesse eine ausreichende thermische Stabilität aufweisen, d.h. bei der Verarbeitung noch keine oder nur sehr geringe Mengen an Radikalen bilden und erst bei höheren Temperaturen, wie sie erst im Brandfall auftreten, spontan Radikale erzeugen. Die jeweiligen Verarbeitungsprozesse und Temperaturen für Beschichtungen und Kunststoff-Verarbeitungsprozesse sind dem Fachmann bekannt. Kunststoff-Verarbeitungsprozesse und dazugehörige Temperaturen können aber auch der Fachliteratur entnommen werden wie z.B. H. Domininghaus, P. Elsner, P. Eyerer. T. Hirth, Kunststoffe , 8. Auflage, Springer 2012.

Der Radikalbildner ist dabei bevorzugt ausgewählt aus der Gruppe bestehend aus N-Alkoxyaminen, -C-C- Radikalbildnern, Radikalbildnern mit Azogruppen (-N=N-), Radikalbildnern mit Hydrazingruppen (-NH-HN-), Radikalbildnern mit Hydrazongruppen (>C=N-NH-), Radikalbildnern mit Azingruppen (>C=N-N=C<), Radikalbildnern mit Triazengruppen (-N=N-N<).

Die Herstellung geeigneter Azoverbindungen ist beispielsweise in M. Aubert et. al. Macromol. Sci. Eng. 2007, 292, 707-714 oder in WO 2008101845, die Herstellung von Hydrazonen und Azinen in M. Aubert et al., Pol. Adv. Technol. 2011, 22, 1529-1538, die Herstellung von Triazenen in W. Pawelec et al., Pol. Degr. Stab. 2012, 97, 948-954 beschrieben.

Der Radikalbildner ist dabei besonders bevorzugt ausgewählt aus der Gruppe bestehend aus
a) N-Alkoxyaminen gemäß der nachfolgend abgebildeten Strukturformel 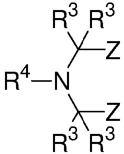 wobei
   - R³: für Wasserstoff oder einen gegebenenfalls substituierter Alkyl-, Cycloalkyl-, Aryl-, Heteroaryl- oder Acyl-Rest steht, insbesondere ein C1 bis C4- Alkylrest ist,
   - R⁴: für einen Alkoxy-, Aryloxy-, Cycloalkoxy-, Aralkoxy- oder Acyloxy-Rest steht,
   - Z: für Wasserstoff oder einen gegebenenfalls substituierter Alkyl-, Cycloalkyl-, Aryl-, Heteroaryl- oder Acyl-Rest steht, wobei die beiden Reste Z auch einen geschlossenen Ring bilden können, der ggf. durch Ester-, Ether-, Amin, Amid, Carboxy- oder Urethangruppen substituiert sein kann,
b) Azo-Verbindungen gemäß der nachfolgend abgebildeten Strukturformeln
   oder 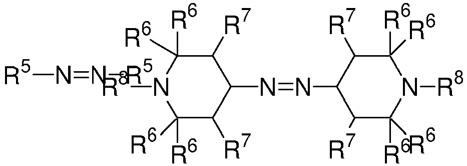 wobei
   - R⁵: einen Alkly-, Cycloalkyl- oder Arylrest bedeutet,
   - R⁶: bei jedem Auftreten gleich oder verschieden ist und einen linearen oder verzweigten Alkylrest bedeutet,
   - R⁷: bei jedem Auftreten gleich oder verschieden ist und Wasserstoff oder einen linearen oder verzweigten Alkylrest bedeutet, und
   - R⁸: bei jedem Auftreten gleich oder verschieden ist und einen Alkyl, Alkoxy-, Aryloxy- Cycloalkyloxy-, Aralkoxy oder Acyloxyrest bedeutet,
c) Dicumyl gemäß der nachfolgend abgebildeten Strukturformel 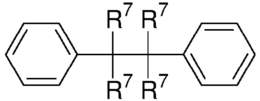 wobei R⁷ die zuvor angegebene Bedeutung aufweist, bevorzugt Methyl ist,
d) und/oder Polycumyl gemäß der nachfolgend abgebildeten Strukturformel 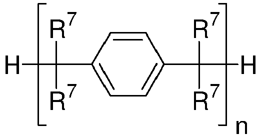 wobei R⁷ die zuvor angegebene Bedeutung aufweist, bevorzugt Methyl ist, und 2 < n < 100.

Typische Beispiele für die zuvor genannten N-Alkoxyamine der angegebenen Struktur sind dabei:
1-Cyclohexyloxy-2,2,6,6-Tetramethyl-4-Octadecylaminopiperidin; Bis(1-Octyloxy-2,2,6,6-Tetramethylpiperidin-4-yl) Sebacat; 2,4-Bis[(1-Cyclohexyloxy-2,2,6,6-Tetramethylpiperidin-4-yl)Butylamino]-6-(2-Hydroxyethylamino-S-Triazin; Bis(1-Cyclohexyloxy-2,2,6,6-Tetramethylpiperidin-4-yl) Adipat; 2,4-Bis[(1-Cyclohexyloxy-2,2,6,6-Tetramethylpiperidin-4-yl)Butylamino]-6-Chloro-S-Triazin; 1-(2-Hydroxy-2-Methylpropoxy)-4-Hydroxy-2,2,6,6-Tetramethylpiperidin; 1-(2-Hydroxy-2-Methylpropoxy)-4-Oxo-2,2,6,6-Tetramethylpiperidin; 1-(2-Hydroxy-2-Methylpropoxy)-4-Octadecanoyloxy-2,2,6,6-Tetramethylpiperidin; Bis(1-(2-Hydroxy-2-Methylpropoxy)-2,2,6,6-Tetramethylpiperidin-4-yl) Sebacat; Bis(1-(2-Hydroxy-2-Methylpropoxy)-2,2,6,6-Tetramethylpiperidin-4-yl) Adipat; 2,4-Bis{N-[1-(2-Hydroxy-2-Methylpropoxy)-2,2,6,6-Tetramethylpiperidin-4-yl]-N-Butylamino}-6-(2-Hydroxyethylamino)-S-Triazin); 4-Piperidinol, 2,2,6,6-tetramethyl-1-(undecyloxy)-4,4'-carbonat; das Reaktionsprodukt von 2,4-Bis[(1-Cyclohexyloxy-2,2,6,6-Tetramethylpiperidin-4-yl)Butylamino]-6-Chloro-S-Triazin mit N,N'-Bis(3-Aminopropylethylendiamin); die Oligomer-Verbindung, welche das Kondensationsprodukt ist von 4,4'-Hexamethylen-Bis(Amino-2,2,6,6-Tetramethylpiperidin) und 2,4-Dichloro-6-[(1-Cyclohexyloxy-2,2,6,6-Tetramethyl-4-yl)Butylamino]-S-Triazin, an den Enden verschlossen mit 2-Chloro-4,6-Bis(Dibutylamino)-S-Triazin; aliphatische Hydroxylamin wie z.B. Disterarylhydroxylamin; sowie Verbindungen der Formel 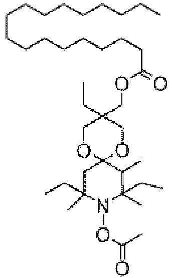 or 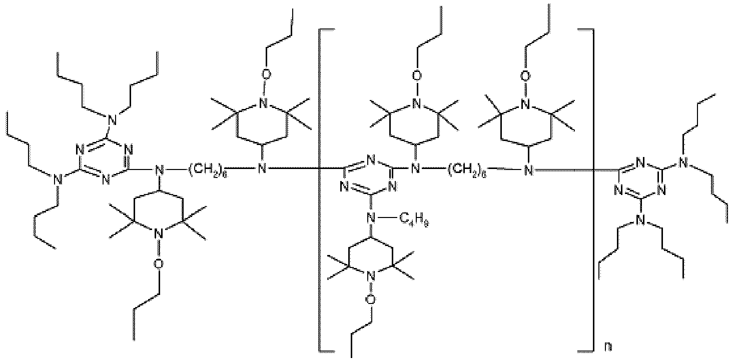 in denen n = 1-15 ist.

Die oben genannten Verbindungen sind teilweise kommerzielle Produkte und werden unter den folgenden Handelsnamen gehandelt: FLAMESTAB NOR 116 (RTM), TINUVIN NOR 371 (RTM), IRGATEC CR 76 (RTM) von BASF SE, Hostavin NOW (RTM) von Clariant oder ADK Stab LA 81 (RTM) von Adeka. Dicumyl und Polycumyl sind Handelsprodukte, die z.B. von United Initiators erhältlich sind.

Schwefelhaltige Flammschutzmittel sind ebenfalls Radikalbildner mit Disulfid- bzw. Polysulfidgrupen (-S-S-) oder Thiolgruppen (-S-H), sowie Thiuramsulfide wie z.B. Tetramethylthiuramdisulfid, Dithiocarbamate, wie z.B. Zinkdiethyldithiocarbamat oder Natriumdimethyldithiocarbamat, Mercaptobenzthiazole wie z.B. 2-Mercaptobenzthiazol und Sulfenamide wie z.B. N,N-Dicyclohexyl-2-benzothiazolsulfenamid Beispiel für ein Polysulfid ist elementarer Schwefel, andere Polysulfide sind beispielsweise in US 4218332 beschrieben.

Disulfide, Polysulfide, Thiole, Thiuramsulfide, Dithiocarbamate, Mercaptobenzthiazole und Sulfenamide sind im Handel erhältlich. Sulfenamide können z.B. gemäß T.Tirri et al. Polymers, 8, 360 hergestellt werden.

Weitere geeigneter Radikalbildner sind Oxyimide und deren Derivate wie Hydroxyimidester oder Hydroxyimidether, wie sie gemäß WO 2014/154636 A1, WO 2015/180888 A1, WO 2015/189034 A1, WO 2016/042038 A1, WO 2016/042040 A1, WO 2016/042043 beschrieben werden. Der Offenbarungsgehalt dieser Patentanmeldungen bezüglich der zuvorgenannten Oxyimide und deren Derivate wie Hydroxyimidester oder Hydroxyimidether ist auch Mitbestandteil der vorliegenden Patentanmeldung.

Die Kombination der erfindungsgemäßen Sulfonsäurederivate mit einem anderen Radikalbildner kann insbes. vorteilhaft sein, da hier die Radikalbildung bei unterschiedlichen Zersetzungstemperaturen erfolgen kann bzw. nach Bedarf eingestellt werden kann.

Das mindestens eine weitere Flammschutzmittel kann insbesondere auch ein phosphorhaltiges Flammschutzmittel sein. Bevorzugte phosphorhaltige Flammschutzmittel sind dabei Phosphinate der folgenden Strukturen: 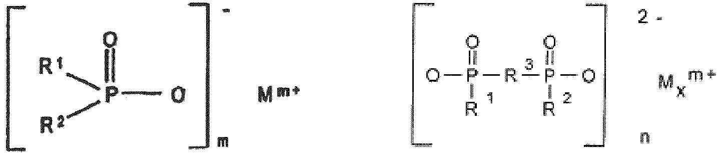 wobei bevorzugt R1 und R2 identisch oder verschieden sind und ausgewählt sind aus linearem oder verzweigtem C1-C6-Alkyl und/oder Aryl; M ausgewählt ist aus der Gruppe bestehend aus Mg, Ca, Al, Sb, Sn, Ge, Ti, Fe, Zr, Ce, Bi, Sr, Mn, Li, Na, K, Zn und/oder einem protonierten Stickstoff-Base, vorzugsweise Calcium-Ionen, Magnesium-Ionen, Aluminium-Ionen, und/oder Zink-Ionen; und m = 1-4, bevorzugt 2 oder 3, ist; n = 1-4, bevorzugt 1 oder 3, ist; x = 1-4, bevorzugt 1 oder 2, ist. In einer besonders bevorzugten Ausführungsform ist R₁ = Alkyl, R₂ = Alkyl und M = Al oder Zn.

Ein besonders bevorzugtes Beispiel für ein erfindungsgemäßes Phosphinat sind die kommerziell erhältlichen Produkte Exolit OP (RTM) von Clariant SE.

Weitere bevorzugte phosphorhaltige Flammschutzmittel sind Metallsalze der hypophosphorigen Säure mit einer Struktur gemäß der Formel 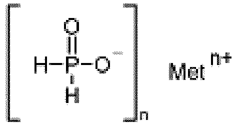 wobei Met ein Metall ist, ausgewählt aus den Gruppen I, II, III und IV des Periodensystems der Elemente, und n eine Zahl von 1 bis 4 ist, die der Ladung des entsprechenden Metall-Ions Met entspricht. Metⁿ⁺ ist beispielsweise Na⁺, Ca²⁺, Mg²⁺, Zn²⁺, Ti⁴⁺ oder Al³⁺, wobei Ca²⁺, Zn²⁺ und Al³⁺ besonders bevorzugt sind.

Die oben genannten Salze der hypophosphorigen Säure sind teilweise kommerziell erhältlich z.B. unter der Bezeichnung Phoslite (RTM) von Italmatch Chemicals.

Eine weitere bevorzugte Gruppe von phosphorhaltigen Flammschutzmitteln sind Phosphonate oder Phosphonsäurediarylester einer Struktur gemäß der folgenden Formel: 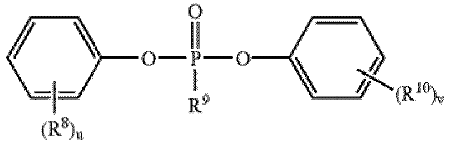 wobei R₈ und R₁₀ = H, Alkyl, vorzugsweise C1-C4-Alkyl sind, R₉ = C1-C4-Alkyl, u = 1-5 ist und v = 1-5 ist.

Entsprechende Strukturen können auch in der Form von Phosphonat-Oligomeren, Polymeren und Co-Polymeren vorliegen. Linear oder verzweigte Phosphonat-Oligomere und Polymere sind aus dem Stand der Technik bekannt. Für verzweigte Phosphonat-Oligomere und Polymere wird auf die US-Patente US 2 716 101, US 3 326 852, US 4 328 174, US 4 331 614, US 4 374 971, US 4 415 719, US 5 216 113, US 5 334 692, US 3 442 854, US 6 291 630 B1 US 6 861 499 B2 und US 7816486 B2 verwiesen. Für Phosphonat-Oligomere wird auf die US-Patentanmeldungen US 2005/0020800 A1, US 2007/0219295 A1 und US 2008/0045673 A1 verwiesen. In Bezug auf lineare Phosphonat-Oligomere und Polymere wird auf die US-Patent-Dokumente US 3 946 093, US 3 919 363, US 6 288 210 B1, US 2 682 522 und US 2 891 915 verwiesen.

Polymere und oligomere Phosphonate sind beispielsweise unter dem Handelsnamen Nofia (RTM) von FRX Polymers erhältlich.

Eine weitere bevorzugte Gruppe von phosphorhaltigen Flammschutzmitteln sind Verbindungen auf Basis von Oxaphosphorinoxid und deren Derivate mit beispielsweise den folgenden Strukturen: 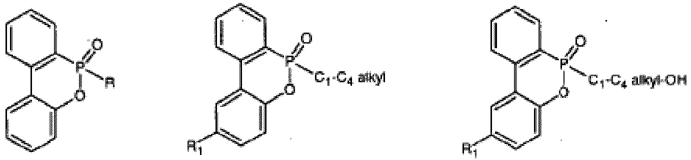 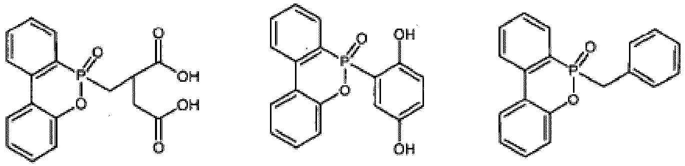 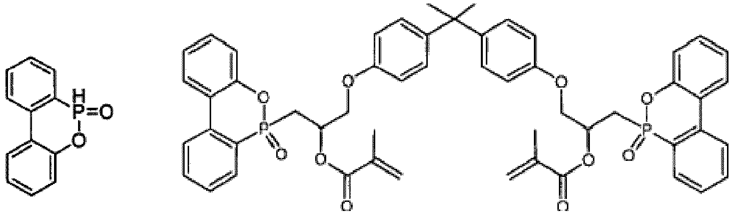 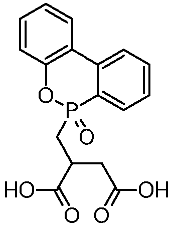 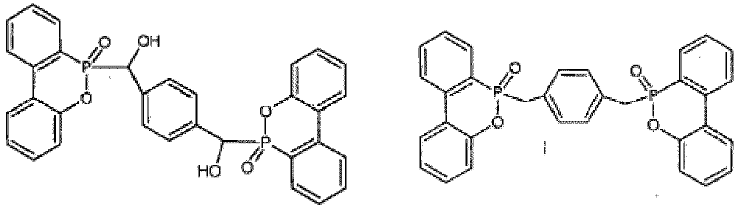 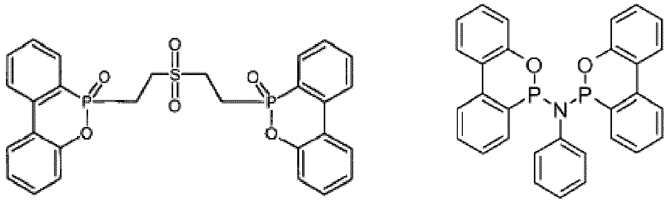 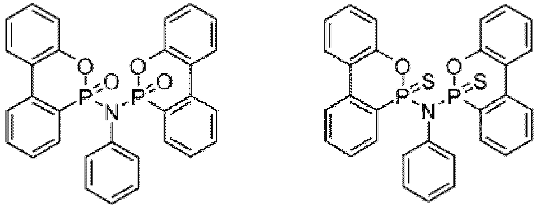 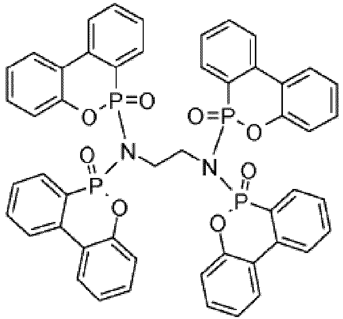 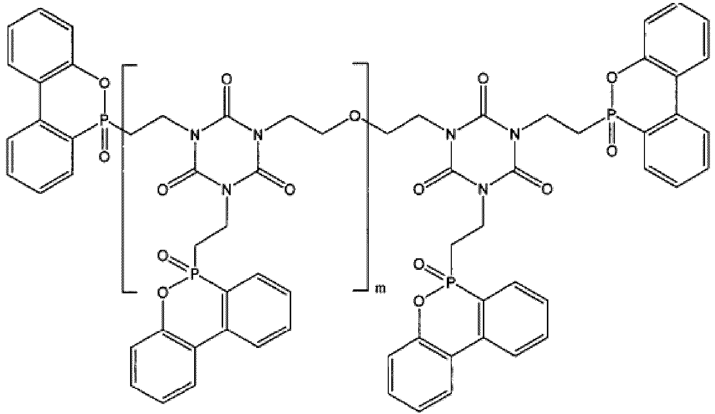 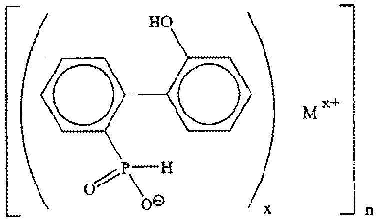 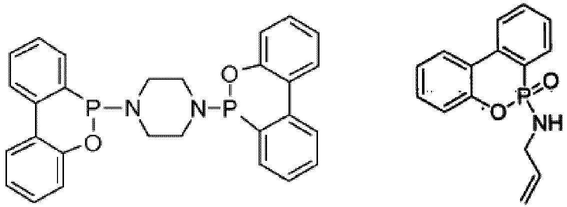 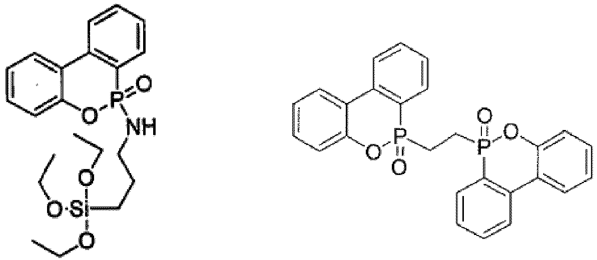 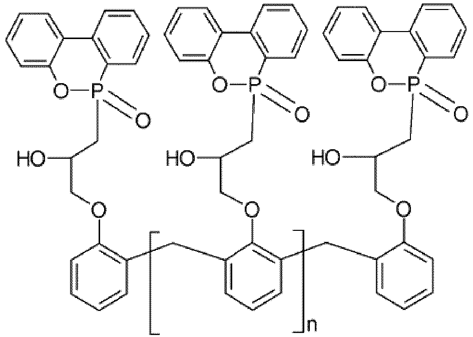 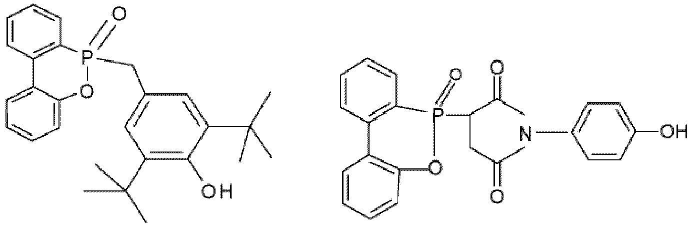 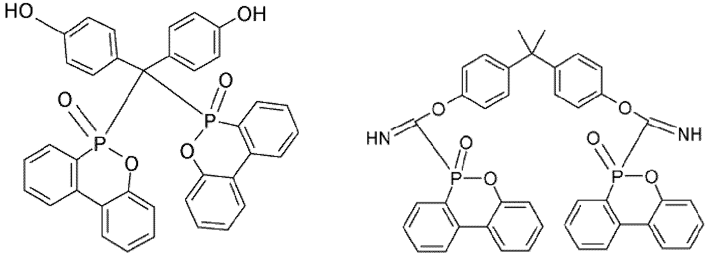 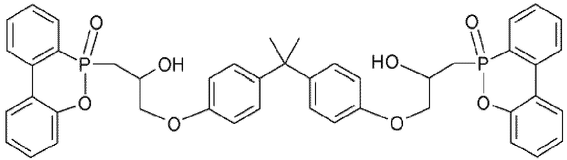 wobei M ein Metall ist, ausgewählt aus der zweiten, dritten, zwölften oder dreizehnten Gruppe des Periodensystems der Elemente ist, x = 2 oder 3 ist, n ≥ 10 ist, m= 0-25ist, R = H, Halogen oder ein aliphatischer oder aromatischer Rest mit 1-32 C-Atomen ist und R₁ = H, C1-C6-Alkyl ist.

Produkte auf der Basis von Oxophosphorinoxid sind beispielsweise unter dem Handelsnamen Ukanol (RTM) von Schill und Seilacher GmbH im Handel. Weitere Verbindungen können beispielsweise gemäß der Patentschriften WO 2013020696, WO 2010135398, WO03070736, WO2006084488, WO 2006084489, WO2011000019, WO2013068437, WO2013072295 hergestellt werden.

Weitere synergistische phosphorhaltige Flammschutzmittel sind zyklische Phosphonate einer Struktur gemäß einer der folgenden Formeln: 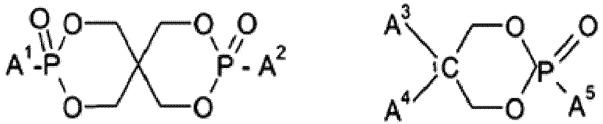 wobei A¹ und A² unabhängig voneinander eine substituierte oder nicht substituierte, geradkettige oder verzweigte Alkylgruppe mit 1 bis 4 Kohlenstoffatomen, substituiertes oder nicht substituiertes Benzyl, substituiertes oder nicht substituiertes Phenyl, substituiertes oder nicht substituiertes Naphthyl darstellen und wobei A³ und A⁴ unabhängig voneinander Methyl oder Ethyl sind und A⁵ eine geradkettige oder verzweigte Alkylgruppe mit 1 bis 4 Kohlenstoffatomen oder eine Phenyl- oder Benzylgruppe ist, die jeweils bis zu 3 Methylgruppen aufweisen kann, ist.

Zyklische Phosphonate sind beispielsweise von der Fa. Thor GmbH unter dem Handelsnamen Aflammit (RTM) im Handel oder können gemäß EP 2450401 hergestellt werden.

Weitere synergistische phosphorhaltige Flammschutzmittel sind Phosphacene, insbes. polymere Phosphacene. Ein entsprechendes Produkt ist z.B. unter der Bezeichnung SPB-100 von Otsuka Chemicals im Handel.

Das mindestens eine weitere Flammschutzmittel kann insbesondere auch ein Stickstoffhaltiges Flammschutzmittel sein. Bevorzugte Stickstoffhaltige Flammschutzmittel sind Melaminpolyphosphat, Melamincyanurat, Melamin-Metall-Phosphate, Poly-[2,4-(piperazin-1,4-yl)-6-(morpholin-4-yl)-1,3,5-triazin] und Ammoniumpolyphosphat. Diese Verbindungen sind kommerzielle Produkte und unter den Handelsnamen Melapur (RTM) von BASF SE, Budit (RTM) von Budenheim Chemische Fabrik, Exolit AP (RTM) von Clariant, Safire (RTM) von J.M. Huber Corporation oder MCA PPM Triazine von MCA Technologies GmbH erhältlich.

Ganz besonders bevorzugt ist die Kombination der erfindungsgemäßen Sulfonsäurederivate mit einem Phosphonat und/oder einem (Poly)phosphazen und/oder einem Phosphat.

Ein weitere bevorzugte Zusammensetzung ist der Ersatz von Antimonoxid in halogenhaltigen Flammschutzmittelkombinationen, d.h. die Kombination der erfindungsgemäßen Sulfonsäurederivate mit bromhaltigen Flammschutzmitteln.

Erfindungsgemäß ist vorgesehen, dass Komponente (D) ausgewählt ist aus der Gruppe bestehend aus UV-Absorbern, Lichtstabilisatoren, UV-Stabilisatoren, bevorzugt phenolischen, aminischen und/oder schwefelhaltigen Antioxidantien, sterisch gehinderten Aminen, Phosphiten, Phosphoniten, Hydroxylaminen, Benzofuranonen, Metalldesaktivatoren, Füllstoffdesaktivatoren, Nukleierungsmittel, Schlagzähigkeitsverbesserer, Weichmacher, Gleitmittel, Rheologiemodifikatoren, Verarbeitungshilfsmitteln, Pigmenten, Farbstoffen, optischen Aufhellern, antimikrobiellen Wirkstoffen, Antistatika, Slipmitteln, Antiblockmitteln, Kopplungsmitteln, Dispergiermitteln, Kompatibilisatoren, Sauerstofffänger, Säurefänger, Markierungsmittel oder Antifoggingmittel und Mischungen hiervon.

Dabei sind bevorzugte Säurefänger ausgewählt aus der Gruppe bestehend aus Salzen von langkettigen Carbonsäuren, insbesondere Calciumstearat, Magnesiumstearat, Zinkstearat, Calciumlactat, Calciumstearoyl-2-lactylat, Hydrotalciten.

Geeignete Lichtstabilisatoren sind beispielsweise Verbindungen auf der Basis von 2-(2'-Hydroxyphenyl)-benzotriazolen, 2-Hydroxybenzophenonen, Estern von Benzoesäuren, Acrylaten, Oxamiden und 2-(2-Hydroxyphenyl)-1,3,5-Triazinen.

Geeignete 2-(2'-Hydroxyphenyl)benzotriazole sind beispielsweise 2-(2'-Hydroxy-5'methylphenyl)benzotriazol, 2-(3',5'-Di-tert-butyl-2'-hydroxyphenyl)benzotriazol, 2-(5'-tert-Butyl-2'-hydroxy-phenyl)benzotriazol, 2-(2'-Hydroxy-5'-(1,1,3,3-tetramethylbutyl)phenyl)benzotriazol, 2-(3',5'-Di-tert-butyl-2'-hydroxyphenyl)-5-chlorobenzotriazol, 2-(3'-tert-Butyl-2'-hydroxy-5'-methylphenyl-5-chlorobenzotriazol, 2-(3'-sec-Butyl-5'-tert-butyl-2'-hydroxyphenyl)benzotriazol, 2-(2'-Hydroxy-4'-octyloxyphenyl)benzotriazol, 2-(3',5'-Di-tert-amyl-2'-hydroxyphenyl)benzotriazol, 2-(3',5'-Bis(α,α-dimethylbenzyl)-2'-hydroxyphenyl)benzotriazol, 2-(3'-tert-Butyl-2'-hydroxy-5'-(2-octyloxy-carbonylethyl)phenyl)-5-chlorobenzotriazol, 2-(3'-tert-Butyl-5'-[2-(2-ethyl-hexyloxy)carbonylethyl]-2'-hydroxyphenyl)-5-chlorobenzotriazol, 2-(3'-tert-Butyl-2'-hydroxy-5'-(2-methoxycarbonylethyl) phenyl)-5-chlorobenzotriazol, 2-(3'-tert-Butyl-2'-hydroxy-5'-(2-methoxycarbonylethyl)phenyl)benzotriazol, 2-(3'-tert-Butyl-2'-hydroxy-5'-(2-octyloxycarbonylethyl) phenyl)benzotriazol, 2-(3'-tert-Butyl-5'-[2-(2-ethylhexyloxy)carbonylethyl]-2'-hydroxyphenyl)-benzotriazol, 2-(3'-Dodecyl-2'-hydroxy-5'-methylphenyl) benzotriazol, 2-(3'-tert-Butyl-2'-hydroxy-5'-(2-isooctyloxycarbonylethyl)phenylbenzotriazol, 2,2'-Methylenbis [4-(1,1,3,3-tetramethylbutyl)-6-benzotriazol-2-ylphenol]; das Produkt der Umesterung von 2-[3'-tert-Butyl-5'-(2-methoxycarbonylethyl)-2'-hydroxyphenyl]-2H-benzotriazol mit Polyethylenglycol 300; [R-CH2CH2-COO-CH2CH2-]-2, wobei R = 3'-tert-Butyl-4'-hydroxy-5'-2H-benzotriazol-2-ylphenyl, 2-[2'-Hydroxy-3'-(α,α-dimethylbenzyl)-5'-(1,1,3,3-tetramethylbutyl)-phenyl]benzotriazol, 2-[2'-hydroxy-3'-(1,1,3,3-tetramethylbutyl)-5'-(α,α-dimethylbenzyl)phenyl]benzotriazol.

Geeignete 2-Hydroxybenzophenone sind beispielsweise 4-Hydroxy-, 4-Methoxy-, 4-Octyloxy-, 4-Decyloxy- 4-Dodecyloxy, 4-Benzyloxy, 4,2',4'-Trihydroxy- und 2'-Hydroxy-4,4'-dimethyoxy-Derivate der 2-Hydroxybenzophenone.

Geeignete Acrylate sind beispielsweise Ethyl-α-cyano-β,β-diphenylacrylat, Isooctyl-α-cyano-β,β-diphenylacrylat, Methyl-α-carbomethoxycinnamat, Methyl-α-cyano-β-methyl-p-methoxycinnamat, Butyl-α-cyano-β-methyl-p-methoxycinnamat, Methyl-α-carbomethoxy-p-methoxycinnamat und N-(β-carbomethoxy-β-cyanovinyl)-2-methylindolin.

Geeignete Ester von Benzoesäuren sind beispielsweise 4-tert-Butylphenylsalicylat, Phenylsalicylat, Octylphenylsalicylat, Dibenzoylresorcinol, Bis(4-tert-butylbenzoyl)resorcinol, Benzoylresorcinol, 2,4-Di-tert-butylphenyl-3,5-di-tert-butyl-4-hydroxybenzoat, Hexadecyl-3,5-di-tert-butyl-4-hydroxybenzoat, Octadecyl-3,5-di-tert-butyl-4-hydroxybenzoat, 2-Methyl-4,6-di-tert-butylphenyl-3,5-di-tert-butyl-4-hydroxybenzoat.

Geeignete Oxamide sind beispielsweise 4,4'-Dioctyloxyoxanilid, 2,2'-diethoxyoxanilid, 2,2'-Dioctyloxy-5,5'-di-tert-butoxanilid, 2,2'-didodecyloxy-5,5'-di-tert-butoxanilid, 2-Ethoxy-2'-ethyloxanilid, N,N'-Bis(3-dimethylaminopropyl)-oxamid, 2-Ethoxy-5-tert-butyl-2'-ethoxanilid und seine Mischungen mit 2-Ethoxy-2'-ethyl-5,4'-di-tert-butoxanilid, Mischungen von o- und p-Methoxydisubstituierten Oxaniliden und Mischungen von o- und p-Ethoxydisubstituierten Oxaniliden.

Geeignete 2-(2-Hydroxyphenyl)-1,3,5-Triazine sind beispielsweise 2,4,6-Tris(2-hydroxy-4-octyloxyphenyl)-1,3,5-triazin, 2-(2-Hydroxy-4-octyloxyphenyl)-4,6-bis(2,4-dimethylphenyl)-1,3,5-triazin, 2-(2,4-Dihydroxyphenyl)-4,6-bis(2,4-dimethylphenyl)-1,3,5-triazin, 2,4-Bis(2-hydroxy-4-propyloxyphenyl)-6-(2,4-dimethylphenyl)-1,3,5-triazin, 2-(2-Hydroxy-4-octyloxyphenyl)-4,6-bis(4-methylphenyl-1,3,5-triazin, 2-(2-Hydroxy-4-dodecyloxyphenyl)-4,6-bis(2,4-dimethylphenyl)-1,3,5-triazin, 2-(2-Hydroxy-4-tridecyloxyphenyl)-4,6-bis(2,4-dimethylphenyl)-1,3,5-triazin, 2-[2-Hydroxy-4-(2-hydroxy-3-butyloxypropoxy)-phenyl]-4,6-bis(2,4-dimethyl)-1,3,5-triazin, 2-[2-Hydroxy-4-(2-hydroxy-3-octyloxypropyloxy)phenyl]-4,6-bis(2,4-dimethyl)-1,3,5-triazin, 2-[4-(Dodecyloxy/Tridecyloxy-2-hydroxypropoxy)-2-hydroxyphenyl]-4,6-bis(2,4-dimethylphenyl)-1,3,5-triazin, 2-[2-Hydroxy-4-(2-hydroxy-3-dodecyloxypropoxy)-phenyl]-4,6-bis(2,4-dimethylphenyl-1,3,5-triazin, 2-(2-Hydroxy-4-hexyloxy)-phenyl-4,6-diphenyl-1,3,5-triazin, 2-(2-Hydroxy-4-methoxyphenyl)-4,6-diphenyl-1,3,5-triazin, 2,4,6-Tris[2-hydroxy-4-(3-butoxy-2-hydroxypropoxy)-phenyl]-1,3,5-triazin, 2-(2-Hydroxyphenyl)-4-(4-methoxyphenyl)-6-phenyl-1,3,5-triazin, 2-{2-Hydroxy-4-[3-(2-ethylhexyl-1-oxy)-2-hydroxypropyloxy]-phenyl}-4,6-bis(2,4-dimethylphenyl-1,3,5-triazin.

Geeignete phenolische Antioxidantien sind beispielsweise:
Alkylierte Monophenole, wie z.B. 2,6-Di-tert-butyl-4-methylphenol, 2-tert-Butyl-4,6-dimethylphenol, 2,6-Di-tert-butyl-4-ethylphenol, 2,6-Di-tert-butyl-4-n-butylphenol, 2,6-Di-tert-butyl-4-isobutylphenol, 2,6-Dicyclopentyl-4-methylphenol, 2-(α-Methylcyclohexyl)-4,6-dimethylphenol, 2,6-Dioctadecyl-4-methylphenol, 2,4,6-Tricyclohexylphenol, 2,6-Di-tert-butyl-4-methoxymethyl-phenol, lineare oder verzweigte Nonylphenole, wie z.B. 2,6-Dinonyl-4-methylphenol, 2,4-Dimethyl-6-(1'-methylundec-1'-yl)phenol, 2,4-Dimethyl-6-(1'-methylheptadec-1'-yl)phenol, 2,4-Dimethyl-6-(1'-methyltridec-1'-yl)phenol und Mischungen hiervon;
Alkylthiomethylphenole, wie z.B. 2,4-Dioctylthiomethyl-6-tert-butylphenol, 2,4-Dioctylthiomethyl-6-methylphenol, 2,4-Dioctylthiomethyl-6-ethylphenol, 2,6-Didodecylthiomethyl-4-nonylphenol;
Hydrochinone und alkylierte Hydrochinone, wie z.B. 2,6-Di-tert-butyl-4-methyoxyphenol, 2,5-Di-tert-butylhydrochinon, 2,5-Di-tert-amylhydrochinon, 2,6-Diphenyl-4-octadecyloxyphenol, 2,6-Di-tert-butylhydrochinon, 2,5-Di-tert-butyl-4-hydroxyanisol, 3,5-Di-tert-butyl-4-hydroxyanisol, 3,5-Di-tert-butyl-4-hydroxyphenylstearat, Bis(3,5-di-tert-butyl-4-hydroxylphenyl)adipat; Tocopherole, wie z.B. α-, β-, γ-, δ-Tocopherol und Mischungen aus diesen (Vitamin E);
hydroxylierte Thiodiphenylether, wie z.B. 2,2'-Thiobis(6-tert-butyl-4-methylphenol), 2,2'-Thiobis(4-octylphenol), 4,4'-Thiobis(6-tert-butyl-3-methylphenol), 4,4'-Thiobis(6-tert-butyl-2-methylphenol), 4,4'-Thiobis(3,6-di-sec-amylphenol), 4,4'-Bis(2,6-dimethyl-4-hydroxyphenyl)disulfid; Alkylidenbisphenole, wie z.B. 2,2'Methylenbis(6-tert-butyl-4-methylphenol), 2,2'-Methylenbis(6-tert-butyl-4-ethylphenol), 2,2'-Methylenbis[4-methyl-6-(α-methylcyclohexyl)phenol], 2,2'-Methylenbis(4-methyl-6-cyclhexylphenol), 2,2'-Methylenbis(6-nonyl-4-methylphenol), 2,2'-Methylenbis(4,6-di-tert-butylphenol), 2,2'-Ethylidenbis(4,6-di-tert-butylphenol), 2,2'-Ethylidenbis(6-tert-butyl-4-isobutylphenol), 2,2'-Methylenbis[6-(α-methylbenzyl)-4-nonylphenol], 2,2'-Methylenbis[6-(α,α-dimethylbenzyl)-4-nonylphenol], 4,4'-Methylenbis(2,6-di-tert-butylphenol, 4,4'-Methylenbis(6-tert-butyl-2-methylphenol), 1,1-bis(5-tert-butyl-4-hydroxy-2-methylphenyl)butan, 2,6-Bis(3-tert-butyl-5-methyl-2-hydroxybenzyl)-4-methylphenol, 1,1,3-Tris(5-tert-butyl-4-hydroxy-2-methylphenyl)butan, 1,1-bis(5-tert-butyl-4-hydroxy-2-methylphenyl)-3-n-dodecylmercaptobutan, Ethylenglycol-bis[3,3-bis(3'-tert-butyl-4'-hydroxyphenyl)butyrat], Bis(3-tert-butyl-4-hydroxy-5-methylphenyl)-dicyclopentadien, Bis[2-(3'-tert-butyl-2'-hydroxy-5'-methylbenzyl)-6-tert-butyl-4-methylphenyl]terephthalat, 1,1-Bis-(3,5-dimethyl-2-hydroxyphenyl)-butan, 2,2-Bis(3,5-di-tert-butyl-4-hydroxyphenyl)propan, 2,2-Bis-(5-tert-butyl-4-hydroxy-2-methylphenyl)-4-n-dodecylmercaptobutan, 1,1,5,5-Tetra(5-tert-butyl-4-hydroxy-2-methylphenyl)pentan;
O-, N- und S-Benzyl-Verbindungen, wie z.B. 3,5,3',5'-Tetra-tert-butyl-4,4'-dihydroxydibenzylether, Octadecyl-4-hydroxy-3,5-dimethylbenzylmercapto-acetat, Tridecyl-4-hydroxy-3,5-di-tert-butylbenzylmercaptoacetat, Tris(3,5-di-tert-butyl-4-hydroxybenzyl)amin, , Bis(4-tert-butyl-3-hydroxy-2,6-dimethylbenzyl)dithioterephthalat, Bis(3,5-di-tert-butyl-4-hydroxybenzyl)sulfid, Isooctyl-3,5-di-tert-butyl-4-hydroxybenzylmercaptoacetat; hydroxybenzylierte Malonate, wie z.B. Dioctadecyl-2,2-bis(3,5-di-tert-butyl-2-hydroxybenzyl)malonat, Dioctadecyl-2-(3-tert-butyl-4-hydroxy-5-methylbenzyl)malonat, Didodecylmercaptoethyl-2,2-bis(3,5-di-tert-butyl-4-hydroxybenzyl)malonat, Bis[4-(1,1,3,3-tetramethylbutyl)phenyl]-2,2-bis(3,5-di-tert-butyl-4-hydroxybenzyl)malonat;
aromatische Hydroxybenzylverbindungen, wie z.B. 1,3,5-Tris(3,5-di-tert-butyl-4-hydroxybenzyl)-2,4,6-trimethylbenzol, 1,4-Bis(3,5-di-tert-butyl-4-hydroxybenzyl)-2,3,5,6-tetramethylbenzol, 2,4,6-Tris(3,5-di-tert-butyl-4-hydroxybenzyl)phenol;
Triazinverbindungen, wie z.B. 2,4-Bis(octylmercapto)-6-(3,5-di-tert-butyl-4-hydroxyanilino)-1,3,5-triazin, 2-Octylmercapto-4,6-bis(3,5-di-tert-butyl-4-hydroxyanilino)-1,3,5-triazin, 2-Octylmercapto-4,6-bis(3,5-di-tert-butyl-4-hydroxyphenoxy)-1,3,5-triazin, 2,4,6-Tris(3,5-di-tert-butyl-4-hydroxyphenoxy)-1,2,3-triazin, 1,3,5-Tris(3,5-di-tert-butyl-4-hydroxybenzyl)isocyanurat, 1,3,5-Tris(4-tert-butyl-3-hydroxy-2,6-dimethylbenzyl)isocyanurat, 2,4,6-Tris(3,5-di-tert-butyl-4-hydroxphenylethyl)-1,3,5-triazin, 1,3,5-Tris(3,5-di-tert-butyl-4-hydroyphenylpropionyl)hexahydro-1,3,5-triazin, 1,3,5-Tris(3,5-dicyclohexyl-4-hydroxybenzyl)isocyanurat;
Benzylphosphonate, wie z.B. Dimethyl-2,5-di-tert-butyl-4-hydroxybenzyl-phosphonat, Dietyhl-3,5-di-tert-butyl-4-hydroxybenzylphosphonat, Di-octadecyl-3,5-di-tert-butyl-4-hydroxybenzylphosphonat, Dioctadecyl-5-tert-butyl-4-hydroxy-3-methylbenzylphosphonat, das Calciumsalz des Monoethylesters der 3,5-Di-tert-butyl-4-hydroxybenzylphosphonsäure; Acylaminophenole, wie z.B. 4-Hydroxylauranilid, 4-Hydroxystearanilid, Octyl-N-(3,5-di-tert-butyl-4-hydroxyphenyl)carbamat;
Ester der β-(3,5-Di-tert-butyl-4-hydroxyphenyl)propionsäure mit ein- oder mehrwertigen Alkoholen, z.B. Methanol, Ethanol, n-Octanol, i-Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythritol, Tris(hydroxyethyl)isocyanurat, N,N'-Bis(hydroxyethyl)oxamid, 3-Thiaundecanol, 3-Thiapentadecanol, Trimethylhexandiol, Trimethylolpropan, 4-Hydroxymethyl-1-phospha-2,6,7-trioxabicyclo[2.2.2]octan; Ester der β-(5-tert-Butyl-4-hydroxy-3-methylphenyl)propionsäure mit ein-oder mehrwertigen Alkoholen, z.B. Methanol, Ethanol, n-Octanol, i-Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythritol, Tris(hydroxyethyl)isocyanurat, N,N'-bis(hydroxyethyl)oxamid, 3-Thiaundecanol, 3-Thiapentadecanol, Trimethylhexandiol, Trimethylolpropan, 4-Hydroxymethyl-1-phospha-2,6,7-trioxabicyclo[2.2.2]octan, 3,9-Bis[2-{3-(3-tert-butyl-4-hydroxy-5-methylphenyl)propionyloxy}-1,1-dimethylethyl]-2,4,8,10-tetraoxaspiro[5.5]undecan;
Ester der β-(3,5-Dicyclohexyl-4-hydroxyphenyl)propionsäure mit ein- oder mehrwertigen Alkoholen, z.B. Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythritol, Tris-(hydroxyethyl)isocyanurat, N,N'-bis(hydroxyethyl)oxamid, 3-Thiaundecanol, 3-Thiapentadecanol, Trimethylhexandiol, Trimethylolpropan, 4-Hydroxymethyl-1-phospha-2,6,7-trioxabicyclo[2.2.2]octan;
Ester der 3,5-Di-tert-butyl-4-hydroxyphenyl)essigsäure mit ein- oder mehrwertigen Alkoholen, z.B. Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythritol, Tris(hydroxyethyl)isocyanurat, N,N'-bis(hydroxyethyl)oxamid, 3-Thiaundecanol, 3-Thiapentadecanol, Trimethylhexandiol, Trimethylolpropan, 4-Hydroxymethyl-1-phospha-2,6,7-trioxabicyclo[2.2.2]octan;
Amide der β-(3,5-Di-tert-butyl-4-hydroxyphenyl)propionsäure, wie z.B. N,N'-Bis(3,5-di-tert-butyl-4-hydroxyphenylpropionyl)hexamethylendiamid, N,N'-Bis(3,5-di-tert-butyl-4-hydroxyphenylpropionyl) hexamethylendiamid, N,N'-Bis(3,5-di-tert-butyl-4-hydroxyphenylpropionyl)hexamethylendiamid, N,N'-Bis(3,5-di-tert-butyl-4-hydroxyphenylpropionyl)hydrazid, N,N'-Bis[2-(3-[3,5-di-tert-butyl-4-hydroxyphenyl] propionyloxy)ethyl]oxamid; Ascorbinsäure (Vitamin C).

Besonders bevorzugte phenolische Antioxidantien sind die folgenden Strukturen:

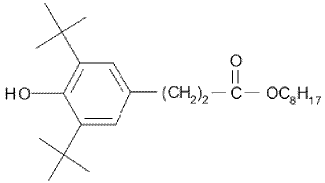

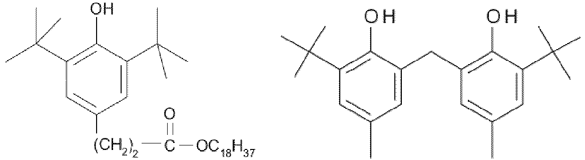

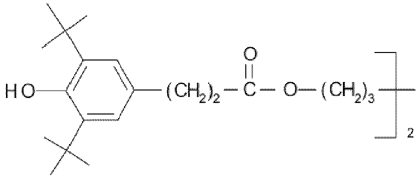

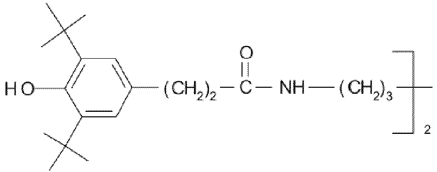

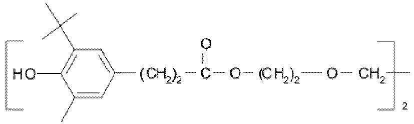

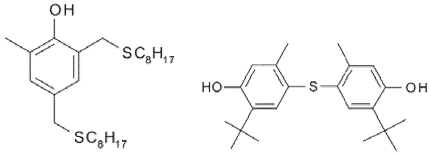

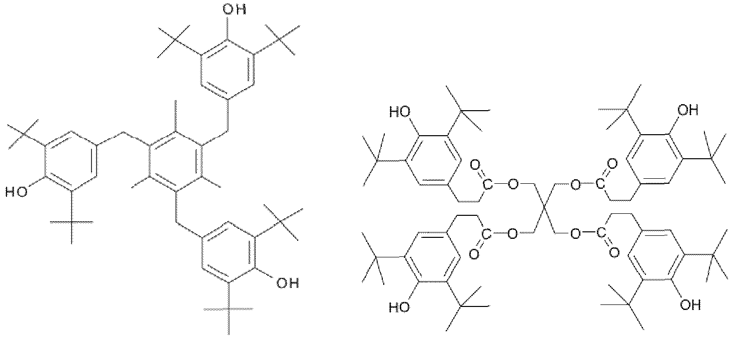

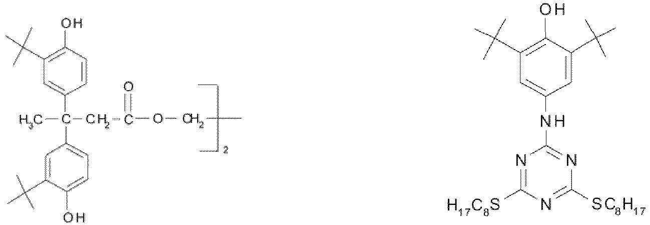

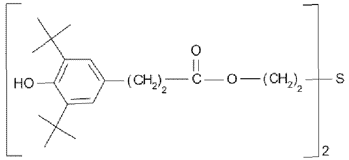

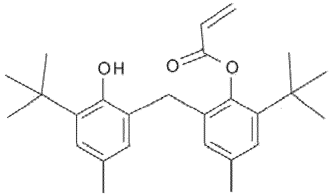

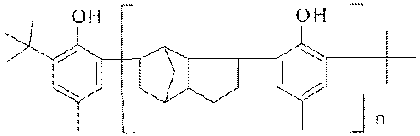

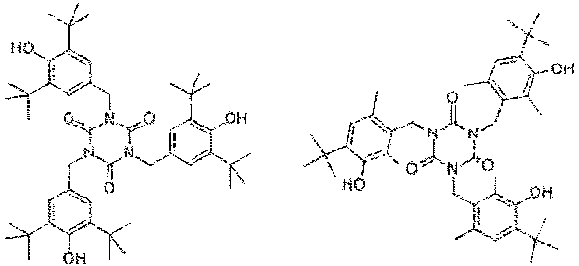

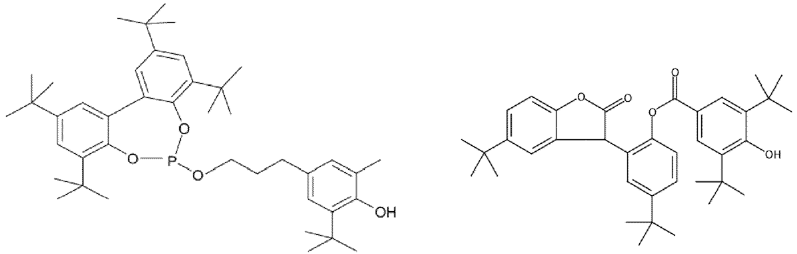

Geeignete Phosphite/Phosphonite sind beispielsweise:
Triphenylphosphit, Diphenylalkylphosphite, Phenyldialkylphosphite, Tri(nonylphenyl)phosphit, Trilaurylphosphite, Trioctadecylphosphit, Distearylpentaerythritoldiphosphit, Tris-(2,4-di-tert-butylphenyl) phosphit, Diisodecylpentaerythritoldiphosphit, Bis(2,4-di-tert-butylphenyl)pentaerythritoldiphosphit, Bis(2,4-di-cumylphenyl)pentaerythritoldiphosphit, Bis(2,6-di-tert-butyl-4-methylphenyl)pentaerythritoldiphosphit, Diisodecyloxypentaerythritoldiphosphit, Bis(2,4-di-tert-butyl-6-methylphenyl)pentaerythritoldiphosphit, Bis(2,4,6-tris(tert-butylphenyl)pentaerythritoldiphosphit, Tristearylsorbitoltriphosphit, Tetrakis(2,4-di-tert-butylphenyl)-4,4'-biphenylendiphosphonit, 6-Isooctyloxy-2,4,8,10-tetra-tert-butyl-12H-dibenz[d,g]-1,3,2-dioxaphosphocin, Bis(2,4-di-tert-butyl-6-methylphenyl)methylphosphit, Bis(2,4-di-tert-butyl-6-methylphenyl) ethylphosphit, 6-Fluoro-2,4,8,10-tetra-tert-butyl-12-methyl-dibenz[d,g]-1,3,2-dioxaphosphocin, 2,2'2"-Nitrilo[triethyltris(3,3",5,5'-tetra-tert-butyl-1,1'-biphenyl-2,2'-diyl)phosphit], 2-Ethylhexyl(3,3',5,5'-tetra-tert-butyl-1,1'-biphenyl-2,2'-diyl))phosphit, 5-Butyl-5-ethyl-2-(2,4,6-tri-tert-butylphenoxy)-1,3,2-dioxaphosphiran.

Weitere geeignete Phosphite sind die Handelsprodukte Weston 705 (Hersteller: Addivant) und Doverphos LGP 11 (Hersteller: Dover Chemical Corporation), wobei es sich um flüssige Phosphite handelt.

Besonders bevorzugte Phosphite/Phosphonite sind:

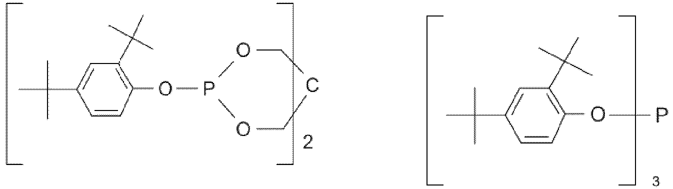

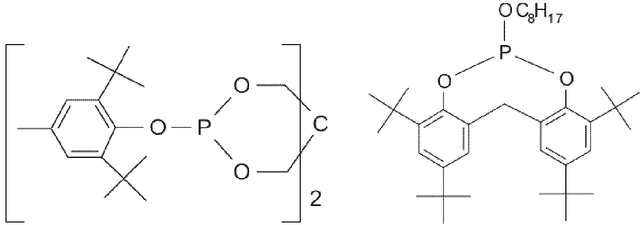

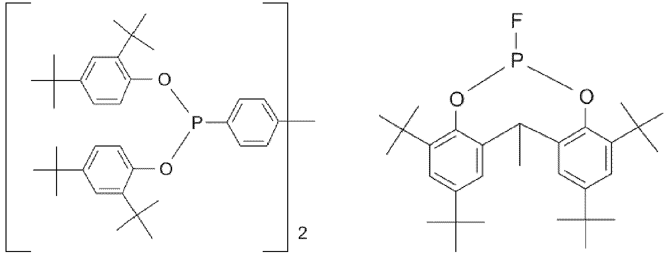

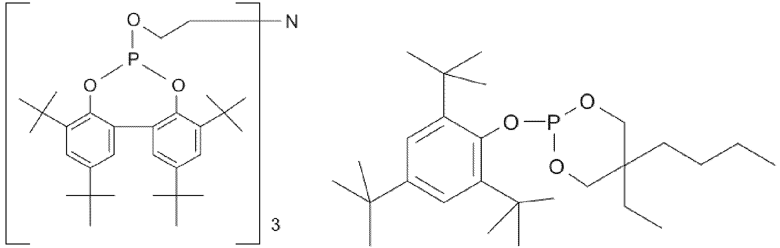

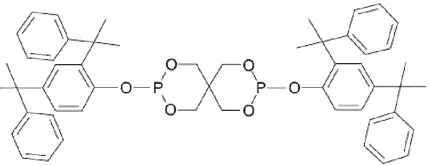

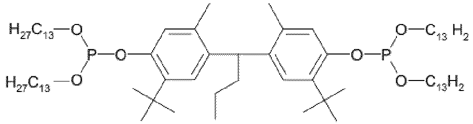

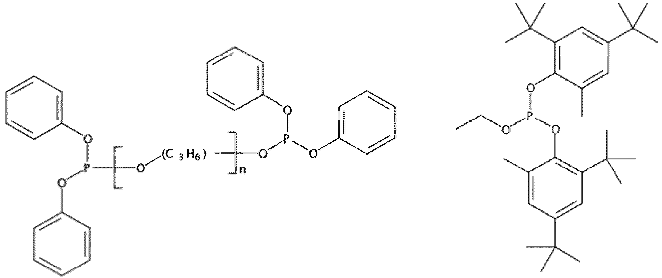

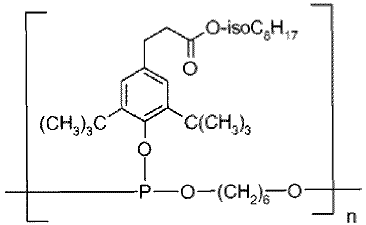

Geeignete aminische Antioxidantien sind beispielsweise:
N,N'-Di-isopropyl-p-phenylendiamin, N,N'-Di-sec-butyl-p-phenylendiamin, N,N'-Bis(1,4-dimethylpentyl)-p-phenylendiamin, N,N'-Bis(1-ethyl-3-methylpentyl)-p-phenylendiamin, N,N'-Bis(1-methylheptyl)-p-phenylendiamin, N,N'-Dicyclohexyl-p-phenylendiamin, N,N'-Diphenyl-p-phenylendiamin, N,N'-Bis(2-naphthyl)-p-phenylendiamin, N-Isopropyl-N'-phenyl-p-phenylendiamin, N-(1,3-Dimethylbutyl)-N'-phenyl-p-phenylen-diamin, N-(1-Methylheptyl)-N'-phenyl-p-phenylendiamin, N-Cyclohexyl-N'-phenyl-p-phenylendiamin, 4-(p-Toluolsulfamoyl)diphenylamin, N,N'-Dimethyl-N,N'-di-*sec*-butyl-p-phenylendiamin, Diphenylamin, N-Allyldiphenylamin, 4-Isopropoxydiphenylamin, N-Phenyl-1-naphthylamin, N-(4-tert-Octylphenyl)-1-naphthylamin, N-Phenyl-2-naphthylamin, octyliertes Diphenylamin, z.B. p,p'-Di-tert-octyldiphenylamin, 4-n-Butylaminophenol, 4-Butyrylaminophenol, 4-Nonanoylaminophenol, 4-Dodecanoylaminophenol, 4-Octadecanoylamino-phenol, Bis(4-methoxyphenyl)amin, 2,6-Di-tert-butyl-4-dimethylaminomethyl-phenol, 2,4'-Diaminodiphenylmethan, 4,4'-Diaminodiphenylmethan, N,N,N',N'-Tetramethyl-4,4'-diaminodiphenylmethan, 1,2-Bis[(2-methyl-phenyl)amino]ethan, 1,2-Bis(phenylamino)propan, (o-Tolyl)biguanid, Bis[4-(1',3'-dimethylbutyl)-phenyl]amin, *tert*-octyliertes N-Phenyl-1-naphthylamin, ein Gemisch aus mono- und dialkylierten *tert*-Butyl/*tert*-Octyldiphenylaminen, ein Gemisch aus mono- und dialkylierten Nonyldiphenylaminen, ein Gemisch aus mono-und dialkylierten Dodecyldiphenylaminen, ein Gemisch aus mono- und dialkylierten Isopropyl/Isohexyl-diphenylaminen, ein Gemisch aus mono-und dialkylierten *tert*-Butyldiphenylaminen, 2,3-Dihydro-3,3-dimethyl-4H-1,4-benzothiazin, Phenothiazin, ein Gemisch aus mono- und dialkylierten *tert*-Butyl/*tert*-Octylphenothiazinen, ein Gemisch aus mono- und dialkylierten *tert*-Octylphenothiazinen, N-Allylphenothiazin, N,N,N',N'-Tetraphenyl-1,4-diaminobut-2-en sowie Mischungen oder Kombinationen hiervon.

Weitere geeignete aminische Antioxidantien sind Hydroxylamine bzw. N-oxide (Nitrone), wie z.B. N,N-Dialkylhydroxylamine, N,N-Dibenzylhydroxyl-amin, N,N-Dilaurylhydroxylamin, N,N-Distearylhydroxylamin, N-Benzyl-α-phenylnitron, N-Octadecyl-α-hexadecylnitron, sowie Genox EP (Addivant) gemäß der Formel: 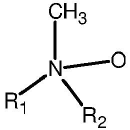 R₁, R₂ = C₁₄- C₂₄ Alkyl
Genox EP

Weitere geeignete Stabilisatoren sind Thiosynergisten. Geeignete Thiosynergisten sind beispielsweise Distearylthiodipropionat, Dilaurylthiodipropionat, oder die Verbindung gemäß der folgenden Formel: 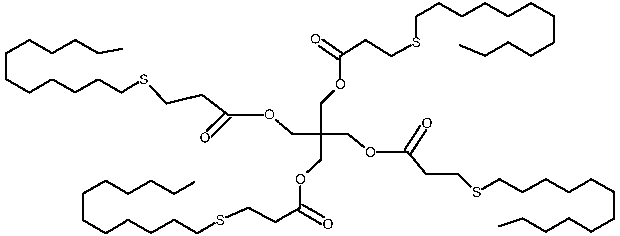 Weitere geeignete Stabilisatoren insbesondere für Polyamide sind Kupfersalze wie z.B. Kupfer-(I)-iodid, Kupfer-(I)-bromid oder Kupferkomplexe wie z.B. Triphenylphosphin-Kupfer-(I)-Komplexe

Geeignete gehinderte Amine sind beispielsweise 1,1-Bis(2,2,6,6-tetramethyl-4-piperidyl)succinat, Bis(1,2,2,6,6-pentamethyl-4-piperidyl)sebazat, Bis(1-octyloxy-2,2,6,6-tetramethyl-4-piperidyl)sebazat, Bis(1,2,2,6,6-pentamethyl-4-piperidyl)-n-butyl-3,5-di-tert-butyl-4-hydroxybenzylmalonat, das Kondensationsprodukt aus 1-(2-Hydroxyethyl)-2,2,6,6-tetramethyl-4-hydroxypiperidin und Succinsäure, lineare oder zyklische Kondensationsprodukte von N,N'-Bis(2,2,6,6-tetramethyl-4-piperidyl) hexamethylendiamin und 4-*tert*-Octylamino-2,6-dichloro-1,3,5-triazin, Tris(2,2,6,6-tetramethyl-4-piperidyl)nitrilotriacetat, Tetrakis(2,2,6,6-tetramethyl-4-piperidyl)-1,2,3,4-butantetracarboxylat, 1,1'-(1,2-Ethandiyl)-bis(3,3,5,5-tetramethylpiper-azinon), 4-Benzoyl-2,2,6,6-tetramethylpiperidin, 4-Stearyloxy-2,2,6,6-tetramethylpiperidin, lineare oder zyklische Kondensationsprodukte aus N,N'-Bis(2,2,6,6-tetramethyl-4-piperidyl)hexamethylendiamin und 4-Morpholino-2,6-dichloro-1,3,5-triazin das Reaktionsprodukt von 7,7,9,9-Tetramethyl-2-cycloundecyl-1-oxa-3,8-diaza-4-oxospiro-[4,5]decan und Epichlorhydrin.

Bevorzugte gehinderte Amine weisen weiterhin die folgenden Strukturen auf:

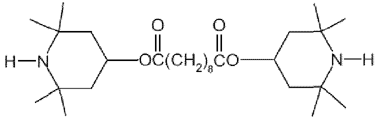

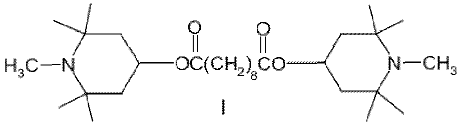

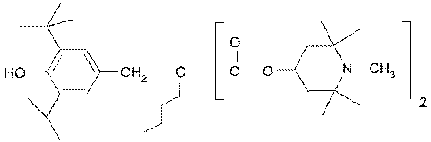

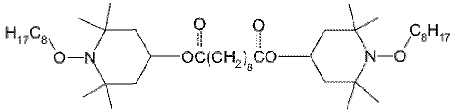

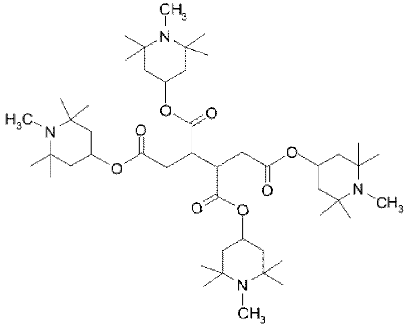

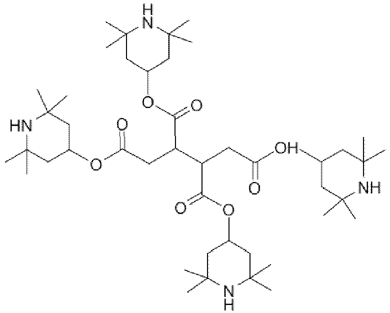

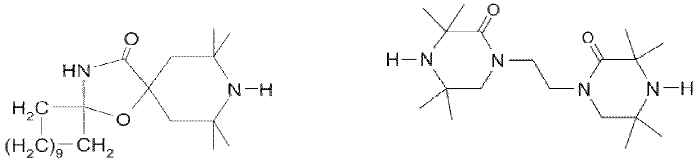

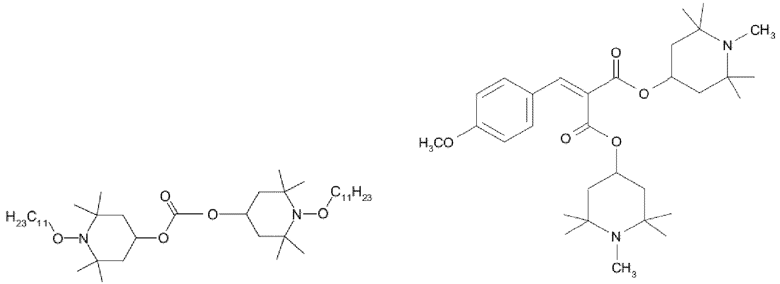

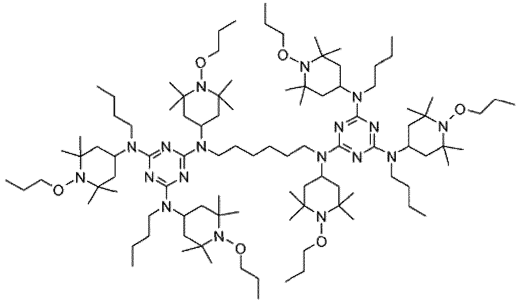

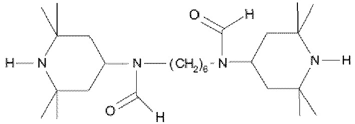

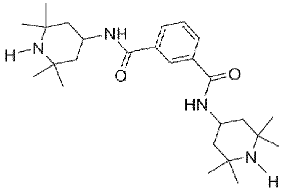

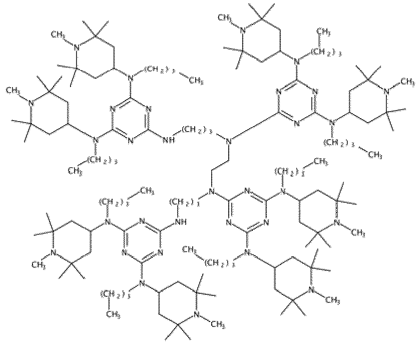

Bevorzugte oligomere und polymere gehinderte Amine weisen die folgenden Strukturen auf:

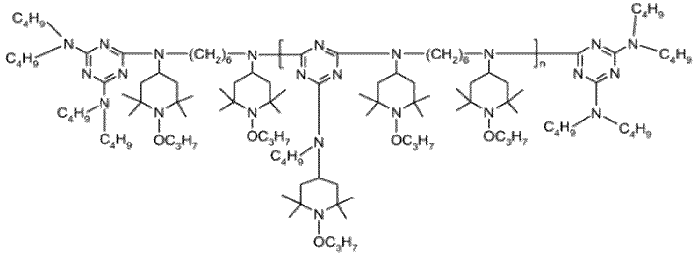

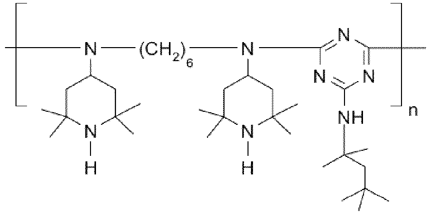

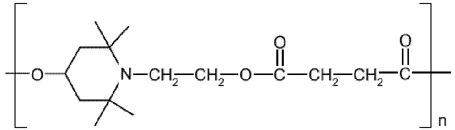

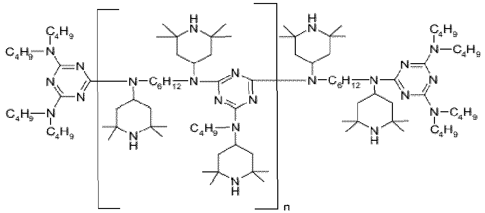

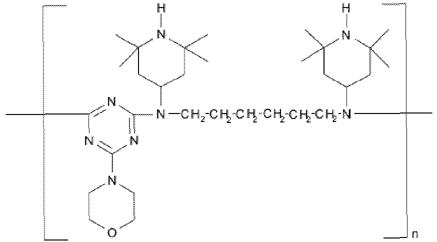

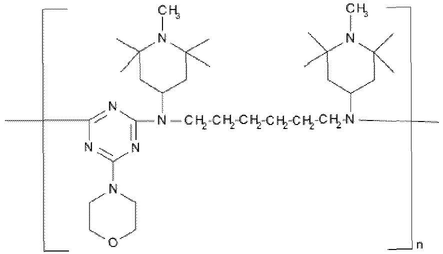

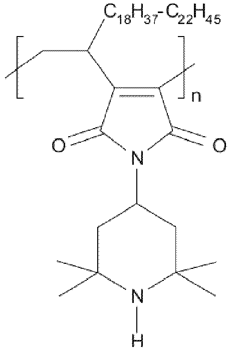

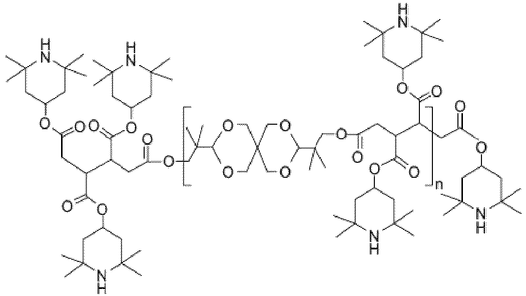

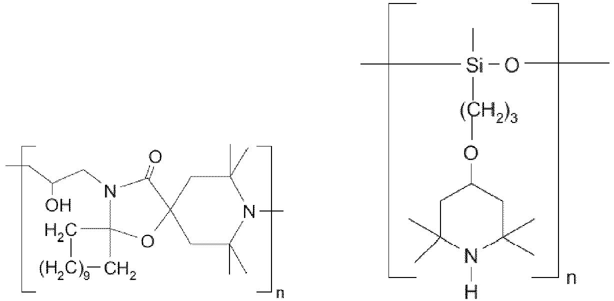

Geeignete Lactone sind bespielsweise: 5,7-di-tert-butyl-3-(3,4-dimethylphenyl)-3H-benzofuran-2-on, 5,7-di-tert-butyl-3-[-4-(2-stearoyloxyethoxy)-phenyl]-benzofuran-2-on, 3-(4-acetoxy-3,5-dimethylphenyl)-5,7-di-tert-butyl-benzofuran-2-on), sowie phosphorhaltige 3-Phenylbenzofuran-2one.

Geeignete Metalldeaktivatoren sind beispielsweise N,N'-Diphenyloxamid, N-Salicylal-N'-salicyloylhydrazin, N,N'-Bis(salicyloyl)hydrazin, N,N'-Bis(3,5-di-tert-butyl-4-hydroxyphenylpropionyl)hydrazin, 3-Salicyloylamino-1,2,4-triazol, Bis(benzyliden)oxalyldihydrazid, Oxanilid, Isophthaloyldihydrazid, Sebacoylbisphenylhydrazid, N,N'-Diacetyladipoyldihydrazid, N,N'-Bis(salicyloyl)oxylyldi-hydrazid, N,N'-Bis(salicyloyl)thiopropionyldihydrazid.

Geeignete Dispergiermittel sind beispielsweise:
Polyacrylate, z.B. Copolymere mit langkettigen Seitengruppen, Polyacrylat-Blockcopolymere, Alkylamide: z.B. N,N'-1,2-Ethandiylbisoctadecanamid Sorbitanester, z.B. Monostearylsorbitanester, Titanate und Zirconate, reaktive Copolymere mit funktionellen Gruppen z.B. Polypropylen-co-Acrylsäure, Polypropylen-co-Maleinsäureanhydrid, Polyethylen-co-Glycidylmethacrylat, Polystyrol-alt-Maleinsäureanhydrid-Polysiloxane: z.B. Dimethylsilandiol-Ethylenoxid Copolymer, Polyphenylsiloxan Copolymer, Amphiphile Copolymere: z.B. Polyethylen-block-Polyethylenoxid, Dendrimere, z.B. hydroxylgruppenhaltige Dendrimere.

Geeignete Nukleierungsmittel sind beispielsweise Talkum, Alkali oder Erdalkalisalze von mono- und polyfunktionellen Carbonsäuren wie z.B. Benzoesäure, Bernsteinsäure, Adipinsäure, z.B. Natriumbenzoat, Zinkglycerolat, Aluminium-hydroxy-bis(4-*tert*-butyl)benzoat, Benzylidensorbitole wie z.B. 1,3:2,4-Bis-(Benzyliden)sorbitol oder 1,3:2,4-Bis(4-Methylbenzyliden)sorbitol, 2,2'-Methylen-bis-(4,6-di-*tert*-butylphenyl)phosphat, sowie Trisamide und Diamide wie z.B. Trimesinsäuretricyclohexylami, Trimesinsäuretri(4-methylcyclohexyl-amid), Trimesinsäure tri(tert.butylamid), N,N',N"-1,3,5-Benzoltriyltris(2,2-dimethyl-propanamid) oder 2,6-Naphthalindicarbosäuredicyclohexylamid.

Geeignete Antinukleierungsmittel sind beispielsweise Azinfarbstoffe wie z.B. Nigrosin, ionische Flüssigkeiten und/oder Lithiumsalze.

Geeignete Füllstoffe und Verstärkungsstoffe sind beispielsweise synthetische oder natürliche Materialien wie z.B. Calciumcarbonat, Silikate, Glasfasern, Glaskugeln (massiv oder hohl), Talkum, Glimmer, Kaolin, Bariumsulfat, Metalloxide und Metallhydroxide, Ruß, Graphit, Kohlenstoffnanoröhrchen, Graphen, Holzmehl oder Fasern von Naturprodukten wie z.B. Cellulose oder synthetische Fasern. Weitere geeignete Füllstoffe sind Hydrotalcite oder Zeolithe oder Schichtsilikate wie z.B. Montmorillonit, Bentonit, Beidelit, Mica, Hectorit, Saponit, Vermiculit, Ledikit, Magadit, Illit, Kaolinit, Wollastonit, Attapulgit, Halloysit.

Geeignete Pigmente können anorganischer oder organischer Natur sein. Anorganische Pigmente sind beispielsweise Titandioxid, Zinkoxid, Zinksulfid, Eisenoxid, Ultramarin, Ruß, organische Pigmente sind beispielsweise Anthrachinone, Anthanthrone, Benzimidazolone, Chinacridone, Diketopyrrolopyrrole, Dioxazine, Indanthrone, Isoindolinone, Azo-Verbindungen, Perylene, Phthalocyanine oder Pyranthrone. Weitere geeignete Pigmente sind Effektpigmente auf Metallbasis oder Perlglanzpigmente auf Metalloxid-Basis.

Geeignete Kettenverlängerer für den linearen Molekulargewichtsaufbau von Polykondensationspolymeren wir Polyestern oder Polyamiden sind beispielsweise Diepoxide, Bis-Oxazoline, Bis-Oxazolone, Bis-Oxazine, Diisocyanate, Dianhydride, Bis-Acyllactame, Bis-Maleimide, Dicyanate, (Poly-)Carbodiimide. Weitere geeignete Kettenverlängerer sind polymere Verbindungen wie z.B. Polystyrol-Polyacrylat-Polyglycidyl(meth)acrylat- Copolymere, Polystyrol-Maleinsäureanhydrid-Copolymere und Polyethylen-Maleinsäureanhydrid-Copolymere.

Geeignete Optische Aufheller sind beispielsweise Bisbenzoxazole, Phenylcumarine oder Bis(styryl)biphenyle und insbesondere optische Aufheller der Formeln:

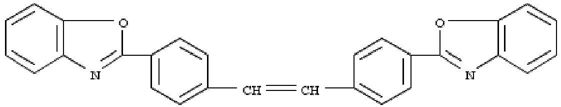

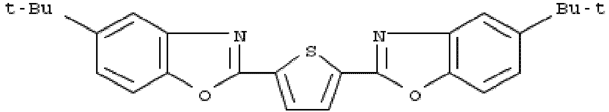

Geeignete Füllstoffdeaktivatoren sind beispielsweise Polysiloxane, Polyacrylate insbesondere Blockcopolymere wie Polymethacrylsäurepolyalkylenoxid oder Polyglycidyl(meth)acrylate und deren Copolymere z.B. mit Styrol sowie Epoxide z.B. der folgenden Strukturen:

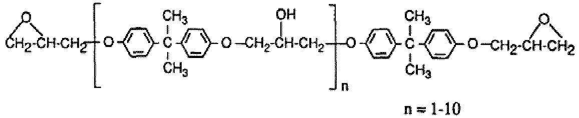

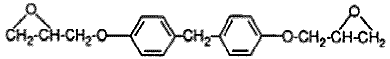

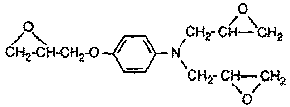

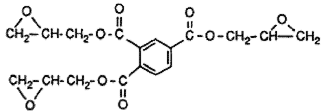

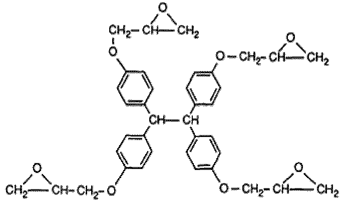

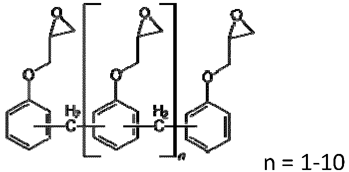

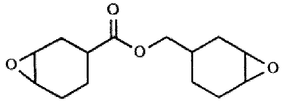

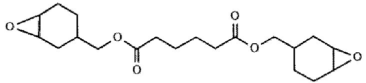

Geeignete Antistatika sind beispielsweise ethoxylierte Alkylamine, Fettsäureester, Alkylsulfonate und Polymere wie z.B. Polyetheramide.

Geeignete Antiozonantien sind die oben genannten Amine wie z.B. N,N'-Diisopropyl-p-phenylendiamin, N,N'-Di-sec-butyl-p-phenylendiamin, N,N'-Bis(1,4-dimethylpentyl)-p-phenylendiamin, N,N'-Dicyclohexyl-p-phenylendiamin, N-Isopropyl-N'-phenyl-p-phenylendiamin, N-(1,3-Dimethylbutyl)-N'-phenyl-p-phenylen-diamin, N-(1-Methylheptyl)-N'-phenyl-p-phenylendiamin, N-Cyclohexyl-N'-phenyl-p-phenylendiamin.

Geeignete Entformungshilfsmittel sind beispielsweise Montanwachse.

Geeignete Kunststoffe für die Zwecke der vorliegenden Erfindung sind voranstehend beschrieben.

Gemäß einer anderen bevorzugten Ausführungsform vorliegender Erfindung ist Komponente (A) zu 60 bis 99 Gew.-%, bevorzugt 60 bis 95 Gew.-% und besonders bevorzugt zu 60 bis 90 Gew.-% bezogen auf das Gesamtgewicht der flammgeschützten Kunststoffzusammensetzung in der Kunststoffzusammensetzung enthalten.

Nach einer anderen bevorzugten Ausführungsform der Erfindung ist Komponente (B) zu 0,5 bis 15 Gew.-%, bevorzugt 1,0 bis 12 Gew.-% und besonders bevorzugt zu 2 bis 10 Gew.-% bezogen auf das Gesamtgewicht der flammgeschützten Kunstoffzusammensetzung in dieser enthalten.

Eine andere bevorzugte Ausführungsform der vorliegenden Erfindung sieht vor, dass Komponente (C) zu 1 bis 60 Gew.-%, bevorzugt 2 bis 30 Gew.-% und besonders bevorzugt zu 5 bis 25 Gew.-% bezogen auf das Gesamtgewicht der flammgeschützten Kunststoffzusammensetzung in dieser enthalten ist.

Nach einer weiteren bevorzugten Ausführungsform vorliegender Erfindung ist Komponente (D) zu 0,05 bis 50 Gew.-%, bevorzugt 0,1 bis 40 Gew.-% und besonders bevorzugt zu 0,2 bis 30 Gew.-% oder 0,1 bis 1 Gew.-% bezogen auf das Gesamtgewicht der flammgeschützten Kunststoffzusammensetzung in dieser enthalten.

Eine weitere bevorzugte Ausführungsform der vorliegenden Erfindung sieht vor, dass Komponente (A) zu 60 bis 99 Gew.-%, bevorzugt 60 bis 95 Gew.-% und besonders bevorzugt zu 60 bis 90 Gew.-% bezogen auf das Gesamtgewicht der flammgeschützten Kunststoffzusammensetzung in der Kunststoffzusammensetzung enthalten ist und Komponente (B) zu 0,5 bis 15 Gew.-%, bevorzugt 1,0 bis 12 Gew.-% und besonders bevorzugt zu 2 bis 10 Gew.-% bezogen auf das Gesamtgewicht der flammgeschützten Kunststoffzusammensetzung in dieser enthalten ist und Komponente (C) zu 1 bis 60 Gew.-%, bevorzugt 2 bis 30 Gew.-% und besonders bevorzugt zu 5 bis 25 Gew.-% bezogen auf das Gesamtgewicht der flammgeschützten Kunststoffzusammensetzung in dieser enthalten ist und Komponente (D) zu 0,05 bis 50 Gew.-%, bevorzugt 0,1 bis 40 Gew.-% und besonders bevorzugt zu 0,2 bis 30 Gew.-% oder 0,1 bis 1 Gew.-% bezogen auf das Gesamtgewicht der flammgeschützten Kunststoffzusammensetzung in dieser enthalten ist.

### Verwendungen

### Verwendung als Radikalgenerator

Weiterhin eignen sich die oben definierten halogenfreien Sulfonsäureazanylester und/oder halogenfreien Sulfinsäureazanylester als Radikalgeneratoren zur Modifikation von Kunststoffen.

Eine bevorzugte Ausführungsform hiervon betrifft die folgenden Modifikationen der Kunststoffe:
- das Molekulargewicht der Kunststoffe wird erhöht; und/oder
- eine Verzweigung oder Vernetzung der Kunststoffe erfolgt; und/oder
- das Molekulargewicht der Kunststoffe wird verringert; und/oder
- die Molekulargewichtsverteilung der Kunststoffe wird beinflusst; und/oder
- ungesättigte Monomere werden auf die Kunststoffe gepfropft.

Dabei ist es weiterhin bevorzugt, dass die Verwendung in einem der oben angegeben Kunststoffe a) bis o) oder Mischungen daraus erfolgt.

### Kontrollierter Abbau von Polyolefinen

Vorgestellt wird ebenso ein Verfahren zum kontrollierten Abbau von Polyolefinen mit folgenden Schritten:
I. Bereitstellen zumindest eines halogenfreien Sulfonsäureesters und/oder zumindest eines halogenfreien Sulfinsäureesters;
II. Bereitstellen zumindest eines abbaufähigen Polyolefins;
III. Kontaktieren und Aufschmelzen der in Schritt I. und II. bereitgestellten Verbindungen;
IV. Erhitzen der Schmelze aus Schritt III. für mehr als 1 Minute.

Nach einer bevorzugten Ausführungsform des Verfahrens zum kontrollierten Abbau von Polyolefinen handelt es sich bei dem in Schritt I. bereitgestellten zumindest einen halogenfreien Sulfonsäureester und/oder zumindest einen halogenfreien Sulfinsäureester um eine der oben definierten Verbindungen.

Weiterhin ist es bevorzugt, dass die Temperatur während der Schritte III. und IV. so gewählt wird, dass die Halbwertszeit des zumindest einen halogenfreien Sulfonsäureesters und/oder zumindest einen halogenfreien Sulfinsäureesters kleiner als 2 Minuten und bevorzugt kleiner als 1 Minute ist.

Außerdem ist es bevorzugt, dass Schritt IV. für mehr als 2 Minuten, bevorzugt für 2 bis 10 Minuten durchgeführt wird.

Bevorzugte Aufschmelztemperaturen sind im Bereich von 180 bis 280 °C, besonders bevorzugt sind 200 bis 250°C.

Ganz besonders bevorzugt ist das Verfahren zum kontrollierten Abbau von Polypropylen und zur Herstellung von CRPP ("controlled rheology polypropylene).

### Vernetzung von Polyolefinen

Ein Verfahren zur Vernetzung von Polyolefinen enthält die folgenden Schritte:
(1) Bereitstellen zumindest eines halogenfreien Sulfonsäureesters und/oder zumindest eines halogenfreien Sulfinsäureesters;
(2) Bereitstellen zumindest eines abbaufähigen Polyolefins;
(3) Kontaktieren und Aufschmelzen der in Schritt (1) und (2) bereitgestellten Verbindungen;
(4) Erhitzen der Schmelze aus Schritt (3) für mehr als 1 Minute.

Nach einer bevorzugten Ausführungsform des Verfahrens zum Vernetzen von Polyolefinen weist das Verfahren einen weiteren Schritt (5) auf, der vor oder während Schritt (4) ausgeführt wird und vorsieht, dass ein Vernetzungsadditiv ausgewählt aus der Gruppe bestehend aus Triallylisocyanurat, Triisoallylcyanurat, Diallylterephthalat, mehrfunktionellen Acrylaten und Methacrylaten, insbesondere Trimethylolpropantrimethacrylat und Mischungen hiervon, zugesetzt wird.

Nach einer bevorzugten Ausführungsform des Verfahrens zum Vernetzen von Polyolefinen handelt es sich bei dem in Schritt (1) bereitgestellten zumindest einen halogenfreien Sulfonsäureester und/oder zumindest einen halogenfreien Sulfinsäureester um eine der oben definierten Verbindungen.

Weiterhin ist es bevorzugt, dass die Temperatur während der Schritte (3) und (4) so gewählt wird, dass die Halbwertszeit des zumindest einen halogenfreien Sulfonsäureesters und/oder zumindest einen halogenfreien Sulfinsäureesters kleiner als 2 Minuten und bevorzugt kleiner als 1 Minute ist.

Außerdem ist es bevorzugt, dass Schritt (4) für mehr als 2 Minuten, bevorzugt für 2 bis 10 Minuten durchgeführt wird.

Bevorzugte Aufschmelztemperaturen sind im Bereich von 180 bis 280 °C, besonders bevorzugt sind 200 bis 250 °C.

### Pfropfen von Polyolefinen

Ein Verfahren zum Pfropfen von Polyolefinen enthält die folgenden Schritte:
a. Bereitstellen zumindest eines halogenfreien Sulfonsäureesters und/oder zumindest eines halogenfreien Sulfinsäureesters;
b. Bereitstellen zumindest eines abbaufähigen Polyolefins;
c. Bereitstellen mindestens eines Monomers, das eine pfropfungsfähige Gruppe aufweist;
d. Kontaktieren und Aufschmelzen der in Schritt a. bis c. bereitgestellten Verbindungen;
e. Erhitzen der Schmelze aus Schritt d. für mehr als 1 Minute.

Nach einer bevorzugten Ausführungsform des Verfahrens zum Pfropfen von Polyolefinen handelt es sich bei dem in Schritt a. bereitgestellten zumindest einen halogenfreien Sulfonsäureester und/oder zumindest einen halogenfreien Sulfinsäureester um eine der oben definierten Verbindungen.

Weiterhin ist es bevorzugt, dass die Temperatur während der Schritte c. und d. so gewählt wird, dass die Halbwertszeit des zumindest einen halogenfreien Sulfonsäureesters und/oder zumindest einen halogenfreien Sulfinsäureesters kleiner als 2 Minuten und bevorzugt kleiner als 1 Minute ist.

Außerdem ist es bevorzugt, dass Schritt d. für mehr als 2 Minuten, bevorzugt für 2 bis 10 Minuten durchgeführt wird.

Das Monomer in Schritt c. wird so ausgewählt, dass es bei der Verarbeitungstemperatur wenig oder nicht flüchtig ist.

Weiterhin ist es bevorzugt, dass das Monomer in Schritt c. ausgewählt ist aus der Gruppe bestehend aus Maleinsäureanhydrid, Itaconsäureanhydrid, Acrylsäure, (Meth)acrylsäureester und Mischungen hiervon.

Bevorzugte Aufschmelztemperaturen sind im Bereich von 180 bis 280 °C, besonders bevorzugt sind 200 bis 250 °C.

Grundsätzlich können der mindestens einen halogenfreien Sulfonsäureester und/oder mindestens einem halogenfreien Sulfinsäureester in verschiedenen Formen in das Polymere bzw. die Polymerschmelze eingebracht werden, z.B. in Form von Pulver, Granulat, Lösung, Dispersion, Emulsion oder Schuppen eingebracht werden. Vorzugsweise werden der mindestens eine halogenfreien Sulfonsäureester und/oder der mindestens eine halogenfreie Sulfinsäureester mit dem Polymer oder Kunststoffgemisch gemischt, die Polymermatrix in die Schmelze überführt und anschließend abgekühlt. Alternativ hierzu ist es ebenso möglich, die Verbindung in einem schmelzflüssigen Zustand in eine Polymerschmelze einzubringen.

Für den Fall, dass der Polymerzusammensetzung weitere Bestandteile zugefügt werden, können diese separat, in Form von Flüssigkeiten, Dispersionen, Emulsionen, Pulvern, Granulaten oder kompaktierten Produkten oder zusammen mit dem halogenfreien mindestens einen Sulfonsäureester und/oder mindestens einem halogenfreien Sulfinsäureestern wie zuvor beschrieben den Polymeren zugesetzt werden.

Die Einarbeitung der oben beschriebenen erfindungsgemäßen Verbindungen und ggf. der zusätzlichen Additive in den Kunststoff erfolgt durch übliche Verarbeitungsmethoden, wobei das Polymer aufgeschmolzen und mit der erfindungsgemäßen Verbindung und den ggf. weiteren Zusätzen gemischt wird, vorzugsweise durch Mischer, Kneter und Extruder. Als Verarbeitungsmaschinen bevorzugt sind Extruder wie z.B. Einschneckenextruder, Zweischneckenextruder, Planetwalzenextruder, Ringextruder, Co-Kneter, die vorzugsweise mit einer Vakuumentgasung ausgestattet sind. Die Verarbeitung kann dabei unter Luft oder ggf. unter Inertgasbedingungen wie z.B. unter Stickstoff erfolgen.

Weiterhin können die erfindungsgemäßen Verbindungen in Form von sogenannten Masterbatchen oder Konzentraten, die beispielsweise 10-90 % der erfindungsgemäßen Zusammensetzungen in einem Polymeren enthalten, hergestellt und eingebracht werden.

Die Polymeren, die die hier beschriebenen erfindungsgemäßen Verbindungen enthalten, können zur Herstellung von Formkörpern, extrudierten Gegenständen, Rotationsgießformkörpern, Spritzgießformkörpern, Blasformkörpern, ein- und mehrschichtigen Folien, extrudierten Profilen, Bändern, Fasern, Filamenten, Schäumen, Oberflächenbeschichtungen und dergl. verwendet werden.

### Anwendungen

Ein anderer Aspekt vorliegender Erfindung betrifft die Verwendungen einer erfindungsgemäßen flammgeschützten Kunststoffzusammensetzung in der Elektro- oder Elektronikindustrie, Maschinen- und Apparatebau, Bauindustrie, Transportindustrie, vorzugsweise Autos, Flugzeuge, Eisenbahn und Schiffe, für Kabel, für medizinische Anwendungen, für Haushaltsgeräte, Fahrzeugteile, Konsumartikel, Verpackungen, Möbel und Textilien.

Beispiele für Anwendungen sind Autoteile, z.B. Stoßfänger, Amaturenbretter, Motorteile, Airbags, Front- und Rücklichtgläser, Verkleidungsteile innen und außen wie z.B. Türverkleidungen, Innen- und Außenspiegel, Kunststoff-Kraftstoffbehälter, Motorradanwendungen, Marineanwendungen wie Bootsteile, Deckplanken, Flugzeug- und Eisenbahnteile wie z.B. Sitze und Sitzverkleidungen, Teile für Raumfahrzeuge und Satelliten, (Dach-)Folien und Schäume für Bauanwendungen, Straßenbau wie z.B. Straßenpfosten, Gehäuseteile für Fernseher, Telefone, Mobiltelefone, Drucker, Computer, Schalter, elektronische Teile wie Stecker, Leiterplatten, Datenspeicherung, Haushaltsgeräte wie Waschmaschinen, Trockner, Mikrowellengeräte, Spülmaschinen, Kühlschränke, Kaffeemaschinen, Staubsauger, Mixer und Bügeleisen, Kabelanwendungen, technische Artikel jeglicher Art wie Dübel, Schrauben, Teile für Solaranlagen und für Windenergie, Rohre für Trink-, Abwasser und Heizung, Profile für Fenster, Rohrverbindungselemente ("Fittings"), Duschkabinen, Tapeten, Dekorfolien, Vorhänge, Teppiche, Folien und Platten für Gewächshäuser, Holzersatz, Kunstrasen, Dachschindeln, Ziegel, Stadionsitze, Fußboden, Möbelteile wie Scharniere, Hygieneartikel wie z.B. Zahnbürsten, Windeln, Kleidung, Seile, Stapelfasern, Membranen, Geomembranen, Transport- und Lagersysteme wie Kisten, Kästen und Container, Flaschen für Getränke, Reinigungsmittel u.a.

Die vorliegende Erfindung wird anhand der nachfolgenden Ausführungsbeispiele näher erläutert ohne die Erfindung auf die dort dargestellten speziellen Parameter zu beschränken.

### Verbindung A: 1H-Isoindole-1,3(2H)-dione, 2-[[(4-methylphenyl)sulfonyl]oxy]

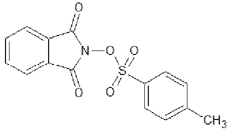

In einem ausgeheizten Dreihalskolben werden 16,028 g N-Hydroxyphthalimid (98,25 mmol), 20,576 g para-Toluolsulfonsäurechlorid (107,9 mmol) und 320 mL Dichlormethan vorgelegt. Unter Stickstoffatmosphäre werden 16 ml Pyridin dazugegeben. Die Suspension wird 1 h bei Raumtemperatur gerührt. Nach der Reaktion wird die Lösung drei Mal mit Wasser (150 mL) ausgeschüttelt und das Lösungsmittel anschließend am Rotationsverdampfer entfernt. Hierbei fällt ein gelber Feststoff aus. Das Produkt wird mit Wasser in einem Filter gewaschen. Es werden 29,7679g (98,1 mmol, 99,8%) des Produktes erhalten.

¹H NMR (CDCl₃, 300 MHz) δ 2,43 (s, 3H), 7,32-7,35 (m, 2H), 7,71-7,81 (m, 4H), 7,87-7,90 (m, 2H).

### Verbindung B: Benzo[1,2-c:4,5-c']dipyrrole-1,3,5,7(2H,6H)-tetrone, 2,6-bis[[(4-methylphenyl)sulfonyl]oxy]

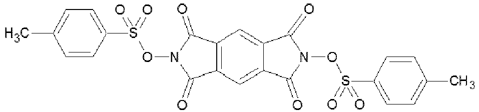

In einem ausgeheizten Schlenkkolben werden unter Stickstoffatmosphäre 5,9096 g para-Toluolsulfonsäure (31,0 mmol) und 3,4453 g N-dihydroxypyromellitimid (13,9 mmol) in Dichlormethan (120 mL) gelöst. Die Reaktionslösung wird mit 11 mL Pyridin versetzt. Nach der Zugabe von Pyridin fällt ein gelber Feststoff aus. Die Suspension wird 16 h bei Raumtemperatur gerührt. Anschließend wird das Rohprodukt mit Dichlormethan und Wasser gewaschen. Es werden 5,9507 g (10,7 mmol, 77,0 %) des Produktes erhalten.

¹H NMR (DMSO, 300 MHz) δ 2,47 (s, 6H), 7,52-7,55 (m, 4H), 7,96-7,99 (m, 4H), 8,39 (s, 2H).

### Verbindung C: 4,8-Ethenobenzo[1,2-c:4,5-c']dipyrrole-1,3,5,7(2H,6H)-tetrone, 3a,4,4a,7a,8,8a-hexahydro-2,6-bis[[(4-methylphenyl)sulfonyl]oxy]

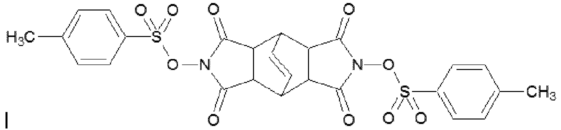

Die Synthese wird in einem ausgeheizten Schlenkkolben unter Stickstoffatmosphäre durchgeführt. 15,4331 g para-Toluolsulfonsäure (80,9 mmol) und 9,0077 g Bicyclo[2.2.2]oct-7-ene-2,3,5,6-tetracarboxyldiimid (32,4 mmol) werden in Dichlormethan (350 mL) gelöst. Zu der Reaktionslösung werden 15 mL Pyridin gegeben. Die Lösung wird 17 h bei Raumtemperatur gerührt, wobei ein weißer Feststoff ausfällt. Das ausgefallene Rohprodukt wird filtriert und mit Wasser gewaschen. Es werden 17.860 g (30,44 mmol, 94,0 %) des Produktes erhalten.

¹H NMR (DMSO, 300 MHz) δ 2,47 (s, 6H), 6,22 (s, 2H), 7,53-7,56 (m, 4H), 7,85-7,88 (m, 4H).

### Herstellung und Prüfung von flammgeschützten erfindungsgemäßen Kunststoffzusammensetzungen

Die Extrusionen der Polypropylen-Proben (Braskem Inspire 153) erfolgen bei einer Temperatur von 200°C und einer Schneckendrehzahl von 200 U/min auf einem 11 mm Doppelschneckenextruder (Process 11 von Thermo Scientific). Das gewünschte Verhältnis aus Polymer und Flammschutzmittel wird zunächst durch Mischen homogenisiert und über eine volumetrische Dosierung der Extrusion zugeführt. Der Polymerstrang wird im Anschluss an die Extrusion granuliert.

Probekörper für die Brandprüfung werden aus dem erhaltenen Granulat bei 200°C für insgesamt 3 Minuten gepresst, wobei für 1 Minute mit einer Tonne Druck und für 2 Minuten mit 2 Tonnen Druck gepresst wird. Die Probenkörper haben gemäß Norm die folgenden Dimensionen: 125 x 13 x 1,6 mm.

Die in der Tabelle enthaltenen erfindungsgemäßen Beispiele und Vergleichsbeispiele wurden nach DIN EN 60695-11-10 geprüft und die Brennzeiten und Klassifizierung gemäß Norm erhalten:

| Beispiele | Zusammensetzung Flammschutzmittel^{a} | Brennzeiten Summe der Nachbrennzeiten von 5 Prüfkörper bei 2 Beflammungen [in Sekunden] | | Klassifizierung nach DIN EN 60695-11-10 |
|---|---|---|---|---|
| VB1 | ohne Flammschutzmittel | | > 100 | n.k. |
| VB2 | 10 % Phosphazen | | > 100 | n.k. |
| B1 | 2%A | 0 | | V-2 |
| | 5 % Phosphonat | | | |
| B2 | 2%A | 0 | | V-0 |
| | 8 % Phosphonat | | | |
| B3 | 2%A | 0 | | V-0 |
| | 15 % Phosphonat | | | |
| B4 | 2% B | 4,3 | | V-2 |
| | 8 % Phosphonat | | | |
| B5 | 2% B | 1,9 | | V-2 |
| | 15 % Phosphonat | | | |
| B6 | 5 % B | 0 | | V-2 |
| | 10 % Phosphazen | | | |
| B7 | 2%C | 0,9 | | V-2 |
| | 5 % Phosphonat | | | |
| B8 | 2%C | 1,3 | | V-2 |
| | 8 % Phosphonat | | | |
| B9 | 2%C | 0 | | V-2 |
| | 15 % Phosphonat | | | |
| B10 | 5 % C | 28,2 | | V-2 |
| | 10 % Phosphazen | | | |

| | | | | |
|---|---|---|---|---|
| a) Angaben in Gew.-% bezogen auf die Gesamtmenge an Flammschutzmittel(n) und Polymer; n.k. = nicht klassifiziert. | | | | |

Das Phosphonat ist ein Handelsprodukt, das unter der Bezeichnung Aflammit PCO 900 von der Firma Thor erhältlich ist. Das Phosphazen ist ein Handelsprodukt, das unter der Bezeichnung SPB-100 von Otsuka Chemicals erhältlich ist. Die erfindungsgemäßen Beispiele sind nach Entfernen der Zündquelle selbstverlöschend und weisen sehr kurze Brennzeiten auf, es wird eine Klassifizierung nach V-0 bzw. V-2 erhalten.

Analog der Beispiele B1 bis B10 wurden die folgenden Zusammensetzungen verarbeitet und hinsichtlich ihres Flammverhaltens untersucht. Abweichend wurden die Prüfkörper durch Spritzguss bei einer Maximaltemperatur von 210 °C hergestellt.

| Beispiele | Zusammensetzung Flammschutzmittel^{a} | Brennzeiten Summe der Nachbrennzeiten von 5 Prüfkörper bei 2 Beflammungen [in Sekunden] | | | Klassifizierung nach DIN EN 60695-11-10 |
|---|---|---|---|---|---|
| VB 3 | 15 % PSPPP | | | > 100 | n.k. |
| VB 4 | 8 % Phoslite B 85 | | | > 100 | n.k. |
| VB 5 | 15 % PX-202 | | | > 100 | n.k. |
| B11 | 2%A | | | 7.5 | V-2 |
| | 8 % PSPPP | | | | |
| B12 | 2 % A | | 0 | | V-0 |
| | 8 % Phoslite B 85 | | | | |
| B13 | 1.5 % A | 0 | | | V-0 |
| | 4 % PCO 910 | | | | |
| B14 | 2%A | 0 | | | V-0 |
| | 15 % PX-202 | | | | |

| | | | | | |
|---|---|---|---|---|---|
| a) Angaben in Gew.-% bezogen auf die Gesamtmenge an Flammschutzmittel(n) und Polymer; PSPPP = Polysulfonyldiphenylenphenylphosphonat Phoslite B 85 = Aluminiumhypophosphit als Hauptkomponente (Hersteller: Italmatch) PCO 910 = Aflammit PCO 910, Phosphonat, Handelsprodukt der Firma Thor. PX-202 = Phosphatester, Handelsprodukt der Firma Daihachi, Osaka, JP | | | | | |

C) Analog der Beispiele B11 bis B14 wurden die folgenden Zusammensetzungen in Polyethylen (LDPE, LD 185, Exxon Mobile) bei einer Maximaltemperatur von 190 °C und einer Drehzahl von 150 rpm verarbeitet und hinsichtlich ihres Flammverhaltens untersucht. Die Prüfkörper wurden durch Spritzguss bei einer Maximaltemperatur von 190 °C hergestellt.

| Beispiele | Zusammensetzung Flammschutzmittel^{a} | Brennzeiten Summe der Nachbrennzeiten von 5 Prüfkörper bei 2 Beflammungen [in Sekunden] | | Klassifizierung nach DIN EN 60695-11-10 |
|---|---|---|---|---|
| C1 | 2%A | | 0 | V-0 |
| | 5 % PCO 910 | | | |
| C2 | 2%A | 0 | | V-0 |
| | 8 % PCO 910 | | | |

D) Analog der Beispiele B1 bis B 10 wurden aus den extrudierten Granulaten anstelle von Prüfkörpern Folien aus Polypropylen bei in der Tabelle angegebenen Temperaturen durch Pressen hergestellt. Die erhaltenen Folien wurden nach der Norm DIN 4102 B2 geprüft und zusätzlich die Brandzeit und die Brandhöhe bestimmt.

| Beispiele | Zusammensetzung Flammschutzmittel^{a} | Verarbeitungstemperatur [°C] | Foliendicke [mm] | DIN 4102 B2 | Brennzeiten [in Sekunden] | Brandhöhe [mm] |
|---|---|---|---|---|---|---|
| VD1 | Ohne Zusatz | 190 | 0.20 | Nicht bestanstanden | Verbrennt vollständig | Verbrennt vollständig |
| D1 | 0.5 % A | 190 | 0.23 | Bestanstanden | | 43 |
| D2 | 0.5 % A | 220 | 0.18 | Bestanstanden | 0 | 43 |
| D3 | 0.5 % A | 250 | 0.27 | Bestanstanden | 0 | 52 |
| D4 | 1.0 A | 220 | 0.27 | Bestanstanden | 0 | 45 |

Die die erfindungsgemäßen Verbindungen enthaltenden Polymerfolien erfüllen die Norm B 4102 B2 im Gegensatz zum Vergleichsbeispiel.

E) Analog der Beispiele C1 bis C2 wurden aus den extrudierten Granulaten anstelle von Prüfkörpern Folien aus LD-Polyethylen bei 190 °C durch Pressen hergestellt. Die erhaltenen Folien wurden nach der Norm DIN 4102 B2 geprüft und zusätzlich die Brandzeit und die Brandhöhe bestimmt.

| Beispiele | Zusammensetzung Flammschutzmittel^{a} | Foliendicke [mm] | DIN 4102 B2 | Brennzeiten [in Sekunden] | Brandhöhe [mm] |
|---|---|---|---|---|---|
| VE1 | Ohne Zusatz | 0.35 | Nicht bestanstanden | Verbrennt vollständig | Verbrennt vollständig |
| E1 | 2 % A | 0.36 | Bestanstanden | 0 | 47 |
| | 5 % PCO 910 | | | | |
| E2 | 2 % A | 0.36 | Bestanstanden | 0 | 39 |
| | 8 % PCO 910 | | | | |

Die die erfindungsgemäßen Verbindungen enthaltenden Polymerfolien erfüllen die Norm B 4102 B2 im Gegensatz zum Vergleichsbeispiel.

## Patentansprüche

1. Verwendung von mindestens einem halogenfreien Sulfonsäureester und/oder mindestens einem halogenfreien Sulfinsäureester als Flammschutzmittel und/oder Flammschutzmittelsynergist in Kunststoffen, **dadurch gekennzeichnet, dass** es sich bei den halogenfreien Sulfonsäureestern und/oder halogenfreien Sulfinsäureestern um halogenfreie Sulfonsäureazanylester der allgemeinen Formel (la) und/oder um halogenfreie Sulfinsäureazanylester der allgemeinen Formel (Ib) handelt; 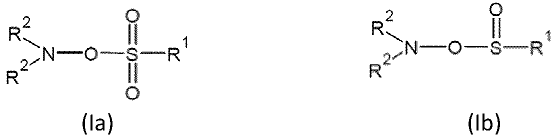 wobei die Reste R¹ und R² jeweils unabhängig voneinander ausgewählt sind aus der Gruppe bestehend aus substituierten oder unsubstituierten Alkylgruppen, Heteroalkylgruppen, Cycloalkylgruppen, Heterocycloalkylgruppen, Acylgruppen, Arylgruppen und Heteroarylgruppen, wobei 2 Reste R² ein zyklisches System bilden können.

2. Verwendung nach Anspruch 1, **dadurch gekennzeichnet, dass** der halogenfreie Sulfonsäureester ein Sulfonsäureazanylester ausgewählt ist aus der Gruppe bestehend aus einer der Verbindungen mit den nachfolgenden Formeln oder Mischungen daraus: 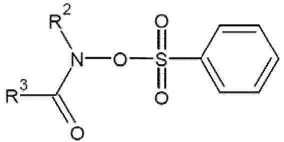 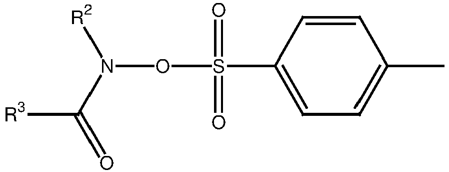 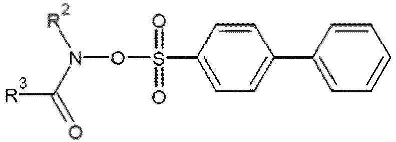 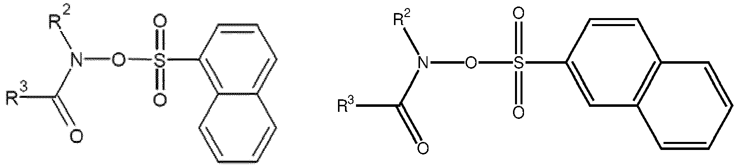 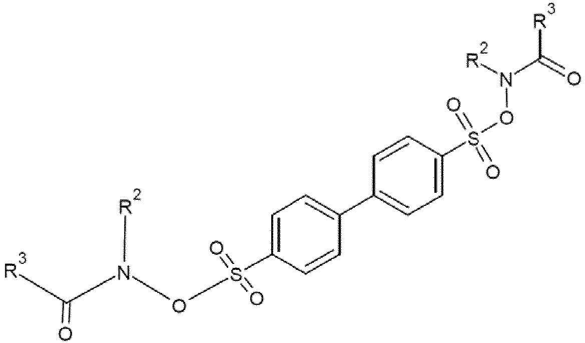
wobei R² die gleiche Bedeutung hat wie oben angegeben und bevorzugt ausgewählt ist aus der Gruppe bestehend aus substituierten oder unsubstituierten Alkylgruppen, Heteroalkylgruppen, Cycloalkylgruppen, Heterocycloalkylgruppen; und
R³ ausgewählt ist aus der Gruppe bestehend aus substituierten oder unsubstituierten Alkylgruppen, Heteroalkylgruppen, Cycloalkylgruppen, Heterocycloalkylgruppen;
wobei R² und R³ ein zyklisches System bilden können; und
wobei die aromatischen Struktureinheiten substituiert sein können;
wobei Alkylgruppen als Substituenten bevorzugt sind.

3. Verwendung nach Anspruch 1 oder 2, **dadurch gekennzeichnet, dass** der halogenfreie Sulfonsäureester ein Sulfonsäureazanylester mit der unten angegebenen Formel ist; 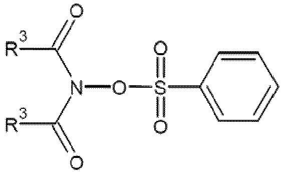 wobei R³ ausgewählt ist aus der Gruppe bestehend aus substituierten oder unsubstituierten Alkylgruppen, Heteroalkylgruppen, Cycloalkylgruppen, Heterocycloalkylgruppen und einem zyklischen System gebildet aus 2 Resten R³.

4. Verwendung nach Anspruch 1 oder 2, **dadurch gekennzeichnet, dass** der halogenfreie Sulfonsäureester ein Sulfonsäureazanylester ausgewählt ist aus der Gruppe bestehend aus einer der Verbindungen mit den nachfolgenden Formeln oder Mischungen daraus:

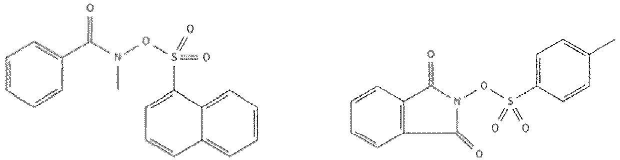

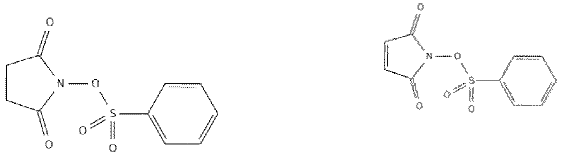

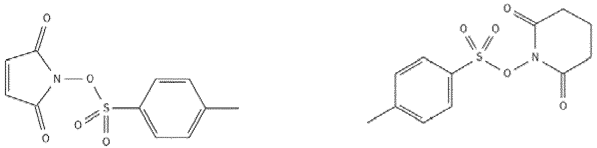

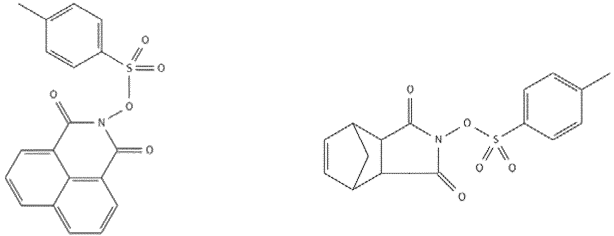

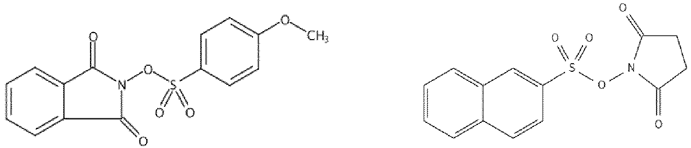

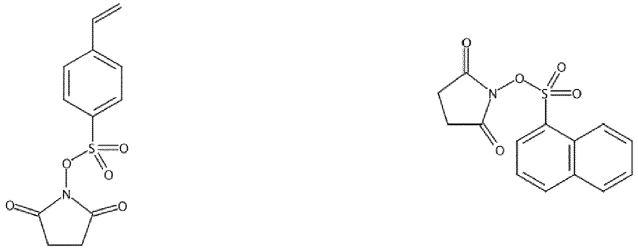

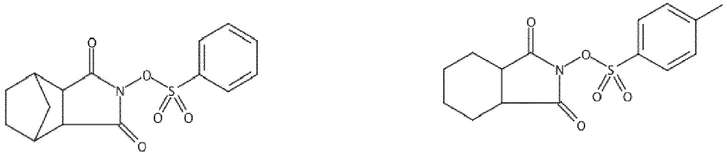

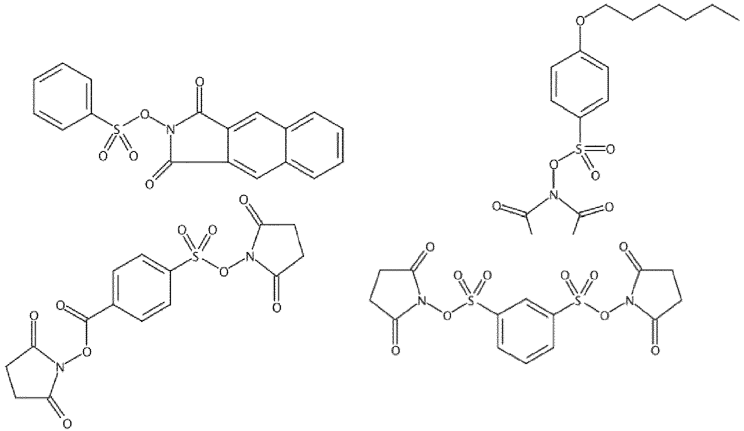

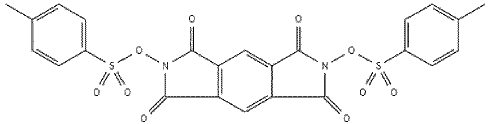

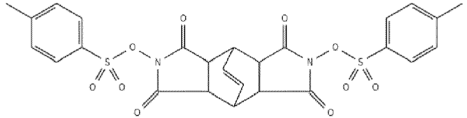

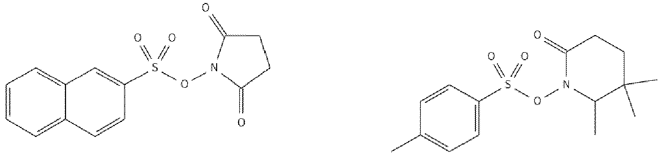

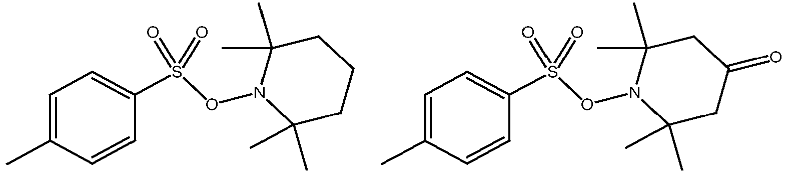

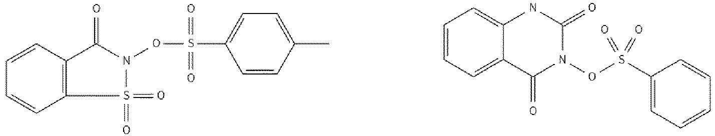

5. Verwendung nach Anspruch 1, **dadurch gekennzeichnet, dass** der halogenfreie Sulfonsäureester ein Sulfonsäureazanylester in oligomerer oder polymerer Form ist, der bevorzugt durch Polymerisation oder polymeranaloge Umsetzung hergestellt wird aus Monomeren ausgewählt aus der Gruppe bestehend aus einer der Verbindungen mit den nachfolgenden Formeln oder Mischungen daraus:

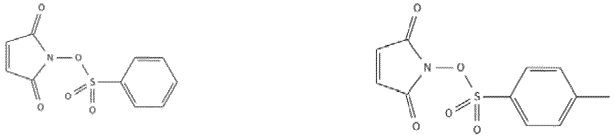

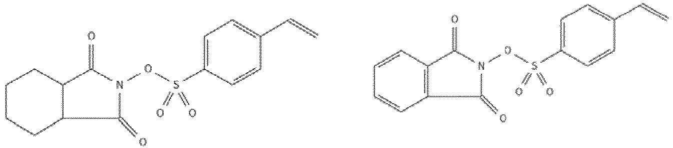

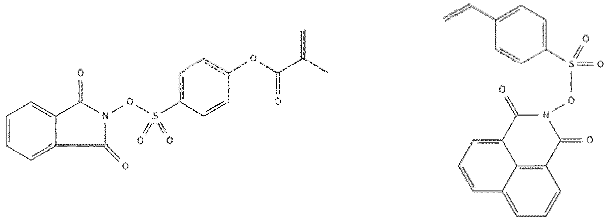

6. Verwendung nach einem der vorhergehenden Ansprüche, **dadurch gekennzeichnet, dass** der Kunststoff ausgewählt ist aus der Gruppe bestehend aus
a) Polymeren aus Olefinen oder Diolefinen, bevorzugt Polyethylen, insbesondere bevorzugt LDPE, LLDPE, VLDPE, ULDPE, MDPE, HDPE, UHMWPE, durch Einsatz von Metallocen-Katalysatoren hergestelltes Polyethylen, Polypropylen, langkettenverzweigte Polypropylen-Copolymere die mit alpha-Olefinen als Comonomere hergestellt werden Polyisobutylen, Poly-4-methyl-penten-1, Polybutadien, Polyisopren, Polycycloocten, Polyalkylen-Kohlenmonoxid-Copolymere, Copolymeren in Form von statistischen oder Blockstrukturen, insbesondere Polypropylen-Polyethylen (EP), EPM oder EPDM, EthylenVinylacetat (EVA), Ethylen-Acrylester, insbesondere Ethylen-Butylacrylat, Ethylen-Acrylsäure und deren Salze, sowie Terpolymere, insbesondere Ethylen- Acrylsäure-Glycidylacrylat, Pfropfpolymere, insbesondere Polypropylen-g- Maleinsäureanhydrid, Polypropylen-g-Acrylsäure und Polyethylen-g-Acrylsäure, Polyethylen-Polybutylacrylat-graft-Maleinsäureanhydrid;
b) Polystyrol, Poly-alpha-methylstyrol, Polyvinylnaphthalin, Polyvinylbiphenyl, Polyvinyltoluol, Styrol-Butadien (SB), Styrol-Butadien-Styrol (SBS), Styrol-Ethylen-Butylen-Styrol (SEBS), Styrol-Ethylen-Propylen- Styrol, Styrolisopren, Styrol-Isopren-Styrol (SIS), Styrol-butadien-acrylnitril (ABS), Styrol-acrylnitril (SAN), Styrol-acrylnitril-acrylat (ASA), Styrol-Ethylen, Styrol-Maleinsäureanhydrid-Polymere einschießlich entsprechender Pfropfcopolymere, insbesondere Styrol auf Butadien, Maleinsäureanhydrid auf Styrol- Butadien-Styrol oder Styrol-Ethylen-Butylen-Styrol, sowie Pfropfcopolymere aus Methylmethacrylat, Styrol-Butadien und Styrol-butadien-acrylnitril (ABS) oder Styrol-butadien-methacrylnitril (MABS) sowie hydrierte Polystyrol-Derivate wie z.B. Polyvinylcyclohexan;
c) halogenenthaltenden Polymeren, insbesondere Polyvinylchlorid (PVC), Polychloropren und Polyvinylidenchlorid (PVDC), Copolymeren aus Vinylchlorid und Vinylidenchlorid oder aus Vinylchlorid und Vinylacetat, chloriertes Polyethylen, Polyvinylidenfluorid, Epichlorhydrin-Homo und Copolymere insbes. mit Ethylenoxid (ECO);
d) Polymeren von ungesättigten Estern, insbesondere Polyacrylate und Polymethacrylate, besonders bevorzugt, Polymethylmethacrylat (PMMA), Polybutylacrylat, Polylaurylacrylat, Polystearylacrylat, Polyacrylnitril, Polyacrylamide, Copolymere, insbesondere Polyacrylnitril-Polyalkylacrylat;
e) Polymeren aus ungesättigten Alkoholen und Derivaten, insbesondere Polyvinylalkohol, Polyvinylacetat, Polyvinylbutyral, Polyallylphthalat, Polyallylmelamin;
f) Polyacetalen, insbesondere Polyoxymethylen (POM) oder Copolymere insbesondere mit Butanal;
g) Polyphenylenoxiden und Blends mit Polystyrol oder Polyamiden;
h) Polymeren von cyclischen Ethern insbesondere Polyethylenglycol, Polypropylenglycol, Polyethylenoxid, Polypropylenoxid;
i) Polyurethanen, bevorzugt aus hydroxyterminierten Polyethern oder Polyestern und aromatischen oder aliphatischen Isocyanaten, insbesondere lineare Polyurethane und Polyharnstoffe;
j) Polyamiden, insbesondere PA 6, PA 6.6, PA 6.10, PA 4.6, PA 4.10, PA 10.10, PA 6.12, PA 12.12, PA 11, PA 12 sowie teilaromatische und aromatische Polyamide, insbesondere Polyphthalamide, besonderes bevorzugt hergestellt aus Terephthalsäure und/oder Isophthalsäure und aliphatischen Diaminen oder aus aliphatischen Dicarbonsäuren, insbesondere Adipinsäure oder Sebazinsäure und aromatischen Diaminen, insbesondere 1,4- oder 1,3-Diaminobenzol;
k) Polyimiden, insbesondere Polyamidimiden, Polyetherimiden, Polyesterimiden, Poly(ether)ketonen, Polysulfonen, insbesondere Polyethersulfonen, Polyarylsulfonen, Polyphenylensulfiden, Polybenzimidazolen, Polyhydantoinen;
l) Polyestern aus aliphatischen oder aromatischen Dicarbonsäuren und Diolen oder aus Hydroxy-Carbonsäuren wie z.B. Polyethylenterephthalat (PET), Polybutylenterephthalat (PBT), Polypropylenterephthalat, Polyethylennaphthylat, Poly-1,4-dimethylolcyclohexanterephthalat, Polyhydroxybenzoat, Polyhydroxynaphthalat, Polymilchsäure (PLA), Polybutylensuccinat (PBS), Polyhydroxyalkanoate (PHA) wie z.B. Polyhydroxybuttersäure (PHB) oder Polyhydroxyvaleriansäure (PHV), Polycaprolacton;
m) Polycarbonaten, Polyestercarbonaten, sowie Blends von Polycarbonaten mit anderen Polymeren, insbesondere PC/ABS, PC/PBT, PC/PET/PBT;
n) Cellulosederivate, insbesondere Cellulosenitrat, Celluloseacetat, Cellulosepropionat, Cellulosebutyrat;
o) Epoxidharzen, bestehend aus di- oder polyfunktionellen Epoxidverbindungen in Kombination mit z.B. Härtern auf der Basis von Aminen, Anhydriden, Dicyandiamid, Mercaptanen, Isocyanaten oder katalytisch wirkenden Härtern,
p) Phenolharzen wie z.B. Phenol-Formaldehyd-Harze, Harnstoff-Formaldehyd-Harze, Melamin-Formaldehydharze,
q) ungesättigten Polyesterharzen aus ungesättigten Dicarbonsäuren und Diolen mit Vinylverbindungen z.B. Styrol, Alkydharze
r) Silikonen, z.B. auf der Basis von Dimethylsiloxanen, MethylPhenyl-siloxanen oder Diphenylsiloxanen z.B. Vinylgruppen terminiert;
s) sowie Mischungen, Kombinationen oder Blends aus zwei oder mehr der unter a) bis r) genannten Polymere.

7. Verwendung nach einem der vorhergehenden Ansprüche, **dadurch gekennzeichnet, dass** der zumindest eine halogenfreie Sulfonsäureestern und/oder halogenfreien Sulfinsäureester in Kombination mit einer Verbindung ausgewählt aus
i. anorganischen Flammschutzmitteln, bevorzugt Al(OH)3, Mg(OH)₂, AlO(OH), MgCO₃, Schichtsilikaten, insbesondere Montmorillonit der unmodifiziert oder organisch modifiziert sein kann, Sepiolit, Attapulgit, Vermiculit, Wollastonit, Doppelsalzen, insbesondere Mg-Al-Silikate, POSS-(Polyhedral Oligomeric Silsesquioxane) Verbindungen, Huntit, Hydromagnesit oder Halloysit sowie Sb2O3, Sb₂O₅, MoO₃, Zinkstannat, Zinkhydroxystannat, Mica, Calciumcarbonat;
ii. stickstoffhaltigen Flammschutzmitteln, bevorzugt Melamin, Melem, Melam, Melon, Melaminderivaten, Melaminkondensationsprodukten oder Melaminsalzen, Benzoguanamin, Polyisocyanuraten, Allantoin, Phosphacenen, insbesondere Melamincyanurat, Melaminphosphat, Dimelaminphosphat, Melaminhypophosphit, Melaminpyrophosphat, Melaminpolyphosphat, Melamin-Metall-Phosphaten, insbesondere Melaminaluminumphosphat, Melaminzinkphosphat, Melaminmagnesiumphopsphat, sowie den entsprechenden Pyrophosphaten und Polyphosphaten, Poly-[2,4-(piperazin-1,4-yl)-6-(morpholin-4-yl)-1,3,5-triazin], Ammoniumpolyphosphat, Melaminborat und Melaminhydrobromid;
iii. Radikalbildnern, bevorzugt Alkoxyaminen, Hydroxylaminestern, Azoverbindungen, Dicumyl oder Polycumyl;
iv. Phosphorhaltigen Flammschutzmitteln, bevorzugt roter Phosphor, Phosphate, insbesondere Resorcindiphosphat, Bisphenol-A-diphosphat und ihre Oligomere, Bisphenol-A-bis (dicresyl)phosphat, Triphenylphosphat, Ethylendiamindiphosphat, Phosphinate, insbesondere Salze der hypophosphorigen Säure und ihrer Derivate, insbesondere Alkylphosphinatsalzen, besonders bevorzugt Aluminiumdiethylphosphinat, Zinkdiethylphosphinat oder Aluminiumphosphinat, Aluminiumhypophosphit, Calciumhypophosphit, Natriumhypophosphit, Aluminiumphosphit, Aluminiumphosphonat, Phosphonatester, Aluminiummethylmethylphosphonat, oligomere und polymere Derivate der Methanphosphonsäure, 9,10- Dihydro-9-oxa-10-phosphorylphenanthren-10-oxid (DOPO) und deren substituierte Verbindungen, polymeres Phosphordiamidat, 4,4'-Bishydroxydeoxybenzoin-polyphosphonat, 2-Carboxy-ethylmethylphosphinsäure-2-carboxyethylphenylphosphinsäure, Diethyl-N,N'-bis(2-hydroxyethyl)aminomethylphosphonat, Dimethyl propyl phosphonat, Dimethylspirophosphonat, Diphenylcresyl phosphate, Hydrochinon-bis-(diphenyl phosphat)Halogenhaltigen Flammschutzmitteln auf Chlor- und Brombasis, bevorzugt polybromierte Diphenyloxide, insbesondere Decabromdiphenyloxid, Tris(3-bromo-2,2-bis(bromomethyl)propyl-phosphat, Tris(tribromneopentyl)phosphat, Tetrabromphthalsäure, 1,2-Bis(tribromphenoxy)ethan, Hexabromcyclododecan, Dibromoneopentylglycol, bromiertes Diphenylethan, 1,3,5-Tris-(2,3-dibrompropyl)isocyanurat, Tris-(2,3-dibrompropyl)-isocyanurat, Ethylen- bis(tetrabromophthalimid), Tetrabromo-bisphenol A, Tris(tribromoneopentyl)alkohol, bromiertes Polystyrol, bromiertes Polybutadien, Polystyrol-bromiertes, Polybutadien-Copolymere, bromiertes Epoxidharz, bromiertes Polycarbonat mit oder ohne Endgruppen-Blockierung, Polypentabrombenzylacrylat, bevorzugt in Kombination mit Sb₂O₃ und/oder Sb₂O₅;
v. Boraten, insbesondere Zinkborat oder Calciumborat mit und ohne Trägermaterial;
vi. Schwefelhaltigen Verbindungen, bevorzugt elementarer Schwefel, Disulfide und Polysulfide, Thiuramsulfid, Dithiocarbamate, Mercaptobenzthiazol und Sulfenamiden;
vii. Antidrip-Mitteln, insbesondere Polytetrafluorethylen;
viii. siliciumhaltigen Verbindungen, insbesondere Polyphenylsiloxanen;
ix. Salze von Sulfonsäuren wie z.B. Phosphoniumsulfonat, Kaliumperfluorobutansulfonat, Kalium-p-toluolsulfonat, Kaliumdiphenylsulfonsulfonat
x. Smoke suppressants wie z.B. Molybdänoxid, Ammoniumoctamolybdat, Kupfermolybdat, Zinkmolybdat, Molybdatkomplexe z.B. Calcium-molybdat, Calcium-molybdat-zink, Zinkmolybdat auf Magnesium-Silikat Träger;
xi. Naturstoffe mit flammhemmender Wirkung wie Lignin, Chitosan, Phytinsäure
xii. sowie Mischungen, Kombinationen oder Blends aus zwei oder mehr der unter i. bis xii. genannten Stoffe,
verwendet wird.

8. Verwendung nach einem der vorhergehenden Ansprüche, **dadurch gekennzeichnet, dass** der zumindest eine halogenfreie Sulfonsäureester und/oder halogenfreie Sulfinsäureester in Kombination mit einer Verbindung ausgewählt aus den bromhaltigen Flammschutzmitteln unter Ausschluss von Antimonoxid-enthaltenden Flammschutzmitteln als Flammschutzmittel und/oder Flammschutzmittelsynergist in Antimonoxid-freien Kunststoffen verwendet wird.

9. Flammgeschützte Kunststoffzusammensetzung bestehend aus den Komponenten (A) bis (D):
(A) 30 bis 99,9 Gew.-% mindestens eines Kunststoffes ausgewählt aus der Gruppe bestehend aus thermoplastischen Kunststoffen, elastomeren Kunststoffen, duroplastischen Kunststoffen und Mischungen daraus;
(B) 0,1 bis 20 Gew.-% mindestens eines Flammschutzmittels wie in einem der Ansprüche 1 bis 5 angegeben und Mischungen davon;
(C) 0 bis 70 Gew.-% mindestens eines von (B) verschiedenen Flammschutzmittels oder Flammschutzmittelsynergisten und Mischungen hiervon;
(D) 0 bis 50 Gew.-% mindestens eines Additivs oder Zusatzstoffes;
wobei sich die Gewichtsanteile der Komponenten (A) bis (D) auf 100 Gew.% ergänzen,
wobei Komponente (C) ausgewählt ist aus der Gruppe bestehend aus
i. anorganischen Flammschutzmitteln;
ii. stickstoffhaltigen Flammschutzmitteln;
iii. Radikalbildnern;
iv. Phosphorhaltigen Flammschutzmitteln;
v. Halogenhaltigen Flammschutzmitteln auf Chlor- und Brombasis;
vi. Boraten;
vii. Schwefelhaltigen Verbindungen;
viii. Antidrip-Mitteln;
ix. siliciumhaltigen Verbindungen;
x. Salze von Sulfonsäuren;
xi. Smoke suppressants;
xii. Naturstoffe mit flammhemmender Wirkung;
xiii. sowie Mischungen, Kombinationen oder Blends aus zwei oder mehr der unter i. bis xii. genannten Stoffe;
und
wobei Komponente (D) ausgewählt ist aus der Gruppe bestehend aus UV-Absorbern, Lichtstabilisatoren, UV-Stabilisatoren, bevorzugt phenolischen, aminischen und/oder schwefelhaltigen Antioxidantien, sterisch gehinderten Aminen, Phosphiten, Phosphoniten, Hydroxylaminen, Benzofuranonen, Metalldesaktivatoren, Füllstoffdesaktivatoren, Nukleierungsmittel, Schlagzähigkeitsverbesserer, Weichmacher, Gleitmittel, Rheologiemodifikatoren, Verarbeitungshilfsmitteln, Pigmenten, Farbstoffen, optischen Aufhellern, antimikrobiellen Wirkstoffen, Antistatika, Slipmitteln, Antiblockmitteln, Kopplungsmitteln, Dispergiermitteln, Kompatibilisatoren, Sauerstofffänger, Säurefänger, Markierungsmittel oder Antifoggingmittel und Mischungen hiervon.

10. Flammgeschützte Kunststoffzusammensetzung nach vorhergehendem Anspruch, **dadurch gekennzeichnet, dass** Komponente (C) ausgewählt ist aus der Gruppe bestehend aus
i. Al(OH)₃, Mg(OH)₂, AlO(OH), MgCO₃, Schichtsilikaten, insbesondere Montmorillonit der unmodifiziert oder organisch modifiziert sein kann, Sepiolit, Attapulgit, Vermiculit, Wollastonit, Doppelsalzen, insbesondere Mg-Al-Silikate, POSS-(Polyhedral Oligomeric Silsesquioxane) Verbindungen, Huntit, Hydromagnesit oder Halloysit sowie Sb2O3, Sb₂O₅, MoO₃, Zinkstannat, Zinkhydroxystannat, Mica, Calciumcarbonat;
ii. Melamin, Melem, Melam, Melon, Melaminderivaten, Melaminkondensationsprodukten oder Melaminsalzen, Benzoguanamin, Polyisocyanuraten, Allantoin, Phosphacenen, insbesondere Melamincyanurat, Melaminphosphat, Dimelaminphosphat, Melaminpyrophosphat, Melaminpolyphosphat, Melaminhypophosphit, Melamin-Metall-Phosphaten, insbesondere Melaminaluminumphosphat, Melaminzinkphosphat, Melaminmagnesiumphopsphat, sowie den entsprechenden Pyrophosphaten und Polyphosphaten, Poly-[2,4-(piperazin-1,4-yl)-6-(morpholin-4-yl)-1,3,5-triazin], Ammoniumpolyphosphat, Melaminborat und Melaminhydrobromid, Polymer aus Ethylendiamin und 4,6-dichloro-N-phenyl-1,3,5-triazin-2-amine, Po-ly(1,3,5-triazine-2-aminoethanol diethylenetriamine, Ammoniumsulfamat;
iii. Alkoxyaminen, Hydroxylaminestern, Azoverbindungen, Dicumyl oder Polycumyl;
iv. roter Phosphor, Phosphate, insbesondere Resorcindiphosphat, Bisphenol-A-diphosphat und ihre Oligomere, Bisphenol-A-bis (dicresyl)phosphat, Triphenylphosphat, Ethylendiamindiphosphat, Phosphinate, insbesondere Salze der hypophosphorigen Säure und ihrer Derivate, insbesondere Alkylphosphinatsalzen, besonders bevorzugt Aluminiumdiethylphosphinat, Zinkdiethylphosphinat oder Aluminiumphosphinat, Aluminiumhypophosphit, Calciumhypophosphit, Natriumhypophosphit, Aluminiumphosphit, Aluminiumphosphonat, Phosphonatester, Aluminiummethylmethylphosphonat, oligomere und polymere Derivate der Methanphosphonsäure, 9,10- Dihydro-9-oxa-10-phosphorylphen-anthren-10-oxid (DOPO) und deren substituierte Verbindungen, polymeres Phosphordiamidat, 4,4'-Bishydroxydeoxybenzoin-polyphosphonat, 2-Carboxyethylmethylphosphin-säure-2-carboxyethylphenylphosphinsäure, Diethyl-N,N'-bis(2-hydroxyethyl)aminomethylphosphonat, Dimethyl propyl phosphonat, Dimethylspirophosphonat, Diphenylcresyl phosphate, Hydrochinon-bis-(diphenyl phosphat);
v. polybromierte Diphenyloxide, insbesondere Decabromdiphenyloxid, Tris(3-bromo-2,2-bis(bromomethyl)-propyl-phosphat, Tris(tribromneopentyl)phosphat, Tetrabromphthalsäure, 1,2-Bis(tribromphenoxy)ethan, Hexabromcyclododecan, bromiertes Diphenylethan, Tris-(2,3-dibrompropyl)isocyanurat, Ethylen- bis(tetrabromo-phthalimid), Tetrabromo-bisphenol A, bromiertes Polystyrol, bromiertes Polybutadien, Polystyrol-bromiertes, Polybutadien-Copolymere, bromiertes Epoxidharz, Polypentabrombenzylacrylat, bevorzugt in Kombination mit Sb₂O₃ und/oder Sb₂O₅;
vi. Zinkborat oder Calciumborat;
vii. elementarer Schwefel, Disulfide und Polysulfide, Thiuramsulfid, Dithiocarbamate, Mercaptobenzthiazol und Sulfenamiden;
viii. Polytetrafluorethylen;
ix. Polyphenylsiloxanen;
x. Phosphoniumsulfonat, Kaliumperfluorobutansulfonat, Kalium-p-toluolsulfonat, Kaliumdiphenylsulfonsulfonat
xi. Molybdänoxid, Ammoniumoctamolybdat, Kupfermolybdat, Zinkmolybdat, Molybdatkomplexe z.B. Calcium-molybdat, calcium-molybdat-zink, zink molybdat auf Magnesium-Silikat Träger;
xii. Lignin, Chitosan, Phytinsäure
xiii. sowie Mischungen, Kombinationen oder Blends aus zwei oder mehr der unter i. bis xii. genannten Stoffe.

11. Flammgeschützte Kunststoffzusammensetzung nach Anspruch 9 oder 10, **dadurch gekennzeichnet, dass** sie frei von Antimonverbindungen ist.

12. Flammgeschützte Kunststoffzusammensetzung nach einem der beiden vorhergehenden Ansprüche, **dadurch gekennzeichnet, dass** die Säurefänger ausgewählt sind aus der Gruppe bestehend aus Salzen von langkettigen Carbonsäuren, insbesondere Calciumstearat, Magnesiumstearat, Zinkstearat, Calciumlactat, Calciumstearoyl-2-lactylat, Hydrotalciten;
die Licht- und UV-Stabilisatoren ausgewählt sind aus der Gruppe bestehend aus phenolischen Antioxidantien, Phosphiten Phosphoniten, sterisch gehinderten Aminen (HALS) und Mischungen hiervon;
die phenolischen Antioxidantien ausgewählt sind aus der Gruppe bestehend aus Octadecyl-3-(3, 5-di-tert-butyl-4-hydro xyphenyl)-propionat, Pentaerythritol-tetrakis[ 3-(3, 5-di*-tert-b* utyl-4-hydroxyphenyl)propionat, Tris(3,5-di-tert-butyl-4- hydroxyphenyl)isocya nurat, 1,3,5-Trimethyl-2,4,6-tris(3,5-di-tert-butyl-4-hydroxyphenyl)isocya nurat, 1,3,5-Trimethyl-2 ,4,6-tris(3, 5-di-tert-butyl-4-hydro xybenzyl)benzol, Triethylenglycol-bis[3-(3-tert-butyl-4-hydro xy-5-methylphenyl)propionat, N,N'-Hexan-1,6-diyl- bis[3-(3, 5-di-tert-butyl-4-hyd roxyphenyl)propionsäureamid und Mischungen hiervon;
die Phosphite und Phosphonite ausgewählt sind aus der Gruppe bestehend aus Tris-(2,4-di-tert-butylphenyl)phosphit, Diisodecylpentaerythritoldiphosphit, Bis(2,4-di-tert-butylphenyl)penta-erythritoldiphosphit, Bis(2,4-di-cumylphenyl)pentaerythritol-diphosphit, Bis(2,6-di-tert-butyl-4- methylphenyl)pentaerythritol-diphosphit, Diisodecyloxypentaerythritoldiphosphit, Bis(2,4-di-tert-butyl-6-methylphenyl)pentaerythritoldiphosph it, Bis(2 ,4,6-tris(tert-butylphenyl)pentaeryth ritoldiphosphit, Tetrakis(2, 4-di-tert-butylphenyl)-4,4'- biphenylendiphosphonit und Mischungen hiervon;
die aminischen Antioxidantien ausgewählt sind aus der Gruppe bestehend aus N,N'-Di-isopropyl-p-phenylendiamin, N,N'-Di-sec-butyl-p-phenylendiamin, N,N'-Bis(1,4-dimethylpentyl)-p-phenylendiamin, N,N'-Bis(1-ethyl-3- methylpentyl)-p-phenylendiamin, N,N'-Bis( 1-methylheptyl)-p-phenylendiamin, N,N'-Dicyclohexyl-p-phenylendiamin, N,N'-Diphenyl-p-phenylendiamin, N,N'-Bis(2-naphthyl)-p-phenylendiamin, N-Isopropyl-N'-phenyl-p-phenylendiamin, N-( 1,3-Dimethylbutyl)-N' -phenyl-p-phenylendiamin, N-( 1-Methylheptyl)-N' -phenyl-p-phenylendiamin, N-Cyclohexyl-N'-phenyl-p-phenylendiamin und Mischungen hiervon;
die schwefelhaltigen Antioxidantien ausgewählt sind aus der Gruppe bestehend aus Distearylthiodipropionat, Dilauryldipropionat und Mischungen hiervon;
die Hydroxylamine ausgewählt sind aus der Gruppe bestehend aus N,N-Dialkylhydroxylamin, N,N-Dibenzyl-hydroxylamin, N,N-Dilaurylhydroxylamin, N,N-Distearylhydro xylamin, N-Benzyl-α-phenylnitron, N-Octadecyl-α-hexadecylnitron;
die sterisch gehinderten Amine ausgewählt sind aus der Gruppe bestehend aus 1,1-Bis(2,2,6,6-tetramethyl-4-piperidyl)succinat, Bis(1,2,2,6,6-pentamethyl- 4-piperidyl)sebazat, Bis( 1-octyloxy-2, 2,6,6-tetramethyl-4-piperidyl)sebazat, Bis( 1,2,2,6,6- pentamethyl-4-piperidyl)-n-butyl-3,5-di-tert-butyl-4-hydroxybenzylmalonat, das Kondensationsprodukt aus 1-(2-Hydroxyethyl)-2 ,2,6,6-tetramethyl-4-hydroxypiperidin und Succinsäure, lineare oder zyklische Kondensationsprodukte von N,N'-Bis(2 ,2,6,6-tetramethyl-4-piperidyl)hexamethylendiamin und 4-tert-Octylamino-2,6-di-chloro-1,3,5-triazin, Tris(2 ,2,6,6- tetramethyl-4-piperidyl)nitrilotriacetat, Tetrakis(2,2,6,6-tetra-methyl-4-piperidyl)-1,2,3,4-butantetracarboxylat, 1,1'-(1,2-Ethandiyl)-bis(3,3,5,5-tetramethylpiperazinon), 4-Benzoyl-2,2,6,6-tetramethylpiperidin, 4-Stearyloxy-2,2,6,6-tetramethylpiperidin, lineare oder zyklische Kondensationsprodukte aus N,N'-Bis(2,2,6,6-tetramethyl-4-piperidyl)hexamethylendiamin und 4-Morpholino-2,6-dichloro-1,3,5-triazin, das Reaktionsprodukt von 7,7,9,9-Tetramethyl-2-cycloundecyl-1-oxa-3,8-diaza-4-oxospiro-[4,5)decan und Epichlorhydrin und Mischungen hiervon; und/oder Komponente (A) ausgewählt aus einem oder mehreren der in Anspruch 6 angegebenen Polymere ist.

13. Flammgeschützte Kunststoffzusammensetzung nach einem der Ansprüche 9 bis 12, **dadurch gekennzeichnet, dass**
Komponente (A) zu 60 bis 99 Gew.-%, bevorzugt 60 bis 95 Gew.-% und besonders bevorzugt zu 60 bis 90 Gew.-% bezogen auf das Gesamtgewicht der flammgeschützten Kunstoffzusammensetzung enthalten ist;
Komponente (B) zu 0,5 bis 15 Gew.-%, bevorzugt 1,0 bis 12 Gew.-% und besonders bevorzugt zu 2 bis 10 Gew.-% bezogen auf das Gesamtgewicht der flammgeschützten Kunstoffzusammensetzung enthalten ist;
Komponente (C) zu 1 bis 60 Gew.-%, bevorzugt 2 bis 30 Gew.-% und besonders bevorzugt zu 5 bis 25 Gew.-% bezogen auf das Gesamtgewicht der flammgeschützten Kunstoffzusammensetzung enthalten ist;
Komponente (D) zu 0,05 bis 50 Gew.-%, bevorzugt 0,1 bis 40 Gew.-% und besonders bevorzugt zu 0,2 bis 30 Gew.-% oder 0,1 bis 1 Gew.-% bezogen auf das Gesamtgewicht der flammgeschützten Kunstoffzusammensetzung enthalten ist; wobei
Komponente (A) bevorzugt ein thermoplastisches Polymer ist.

14. Verwendung einer flammgeschützten Kunststoffzusammensetzung nach einem der Ansprüche 9 bis 13 in der Elektro- oder Elektronikindustrie, Maschinen- und Apparatebau, Bauindustrie, Transportindustrie, vorzugsweise Autos, Flugzeuge Eisenbahnen und Schiffe, für medizinische Anwendungen, für Haushaltsgeräte, Fahrzeugteile, Kabel, Konsumartikel, Verpackungen, Möbel und Textilien.

## Claims

1. Use of at least one halogen-free sulfonic ester and/or at least one halogen-free sulfinic ester as a flame retardant and/or flame retardant synergist in plastics, **characterized in that** the halogen-free sulfonic esters and/or halogen-free sulfinic esters are halogen-free sulfonic acid azanyl esters of the general formula (la) and/or halogen-free sulfinic acid azanyl esters of the general formula (Ib);
where the radicals R¹ and R² each independently of one an- 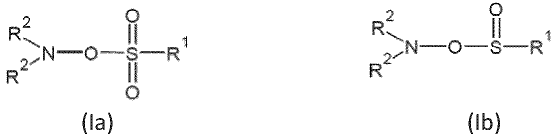 other are selected from the group consisting of substituted or unsubstituted alkyl groups, heteroalkyl groups, cycloalkyl groups, heterocycloalkyl groups, acyl groups, aryl groups und heteroaryl groups, and two radicals R² can form a cyclic system.

2. The use according to claim 1, **characterized in that** the halogen-free sulfonic ester is a sulfonic acid azanyl ester selected from the group consisting of one of the compounds having the following formulae, or mixtures thereof: 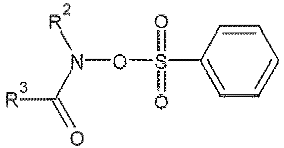 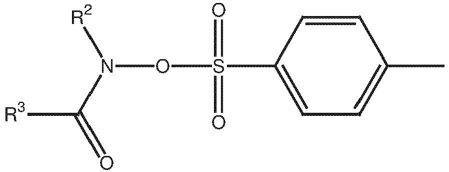 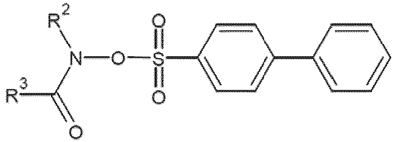 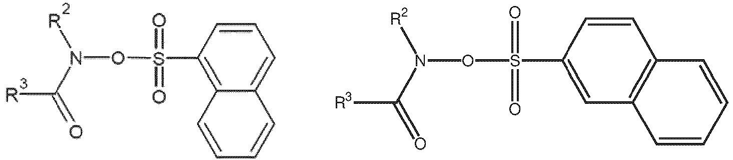 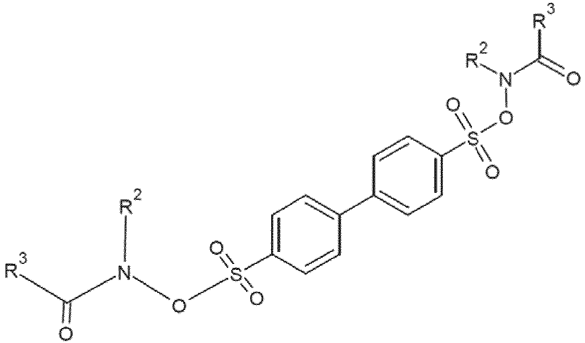
wherein R² has the same definition as indicated above and is selected from the group consisting of substituted or unsubstituted alkyl groups, heteroalkyl groups, cycloalkyl groups, heterocycloalkyl groups; and
R³ is selected from the group consisting of substituted or unsubstituted alkyl groups, heteroalkyl groups, cycloalkyl groups, heterocycloalkyl groups;
wherein R² and R³ can form a cyclic system; and wherein the aromatic structural units can be substituted; where alkyl groups are preferred as substituents.

3. The use according to claim 1 or 2, **characterized in that** the halogen-free sulfonic acid ester is a sulfonic acid azanyl ester having the formula given below; 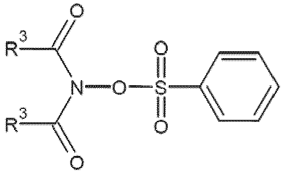 where R³ is selected from the group consisting of substituted or unsubstituted alkyl groups, heteroalkyl groups, cycloalkyl groups, heterocycloalkyl groups and a cyclic system formed from two radicals R³.

4. The use according to claim 1 or 2, **characterized in that** the halogen-free sulfonic ester is a sulfonic acid azanyl ester selected from the group consisting of one of the compounds having the following formulae, or mixtures thereof:

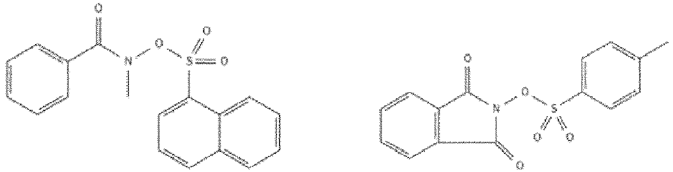

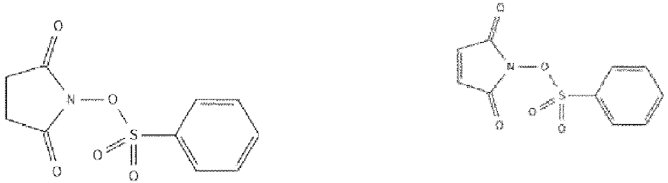

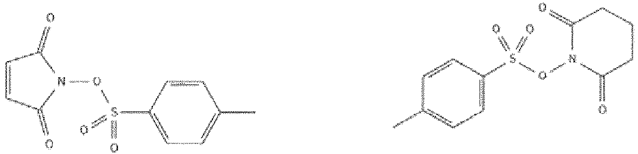

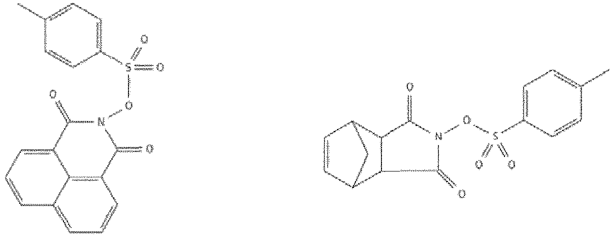

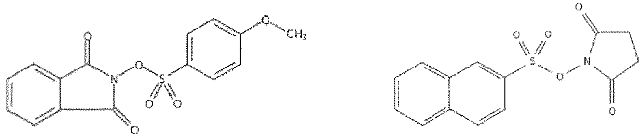

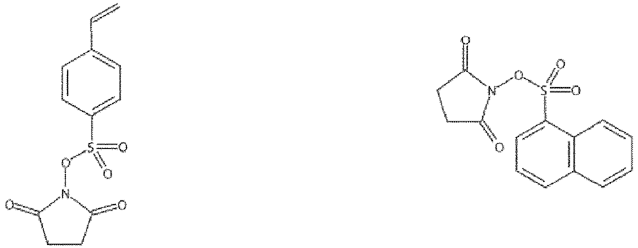

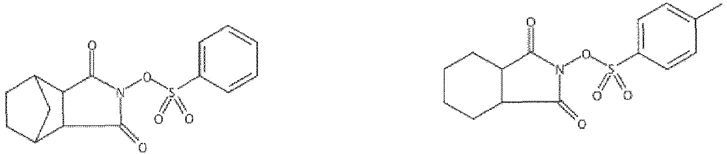

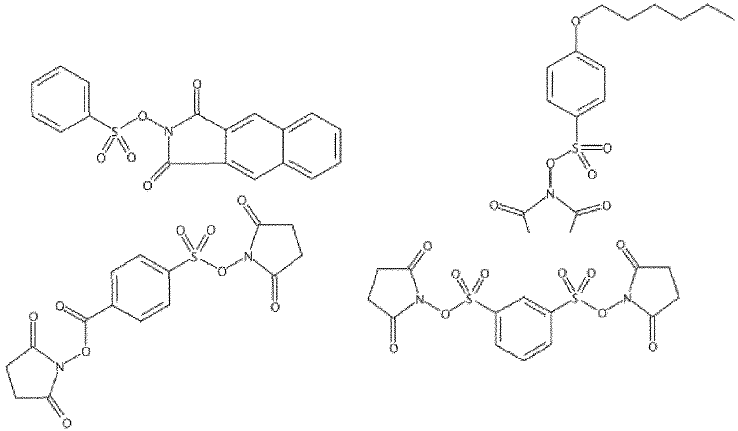

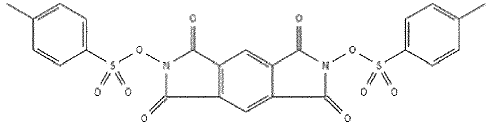

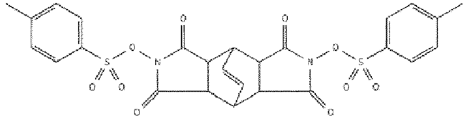

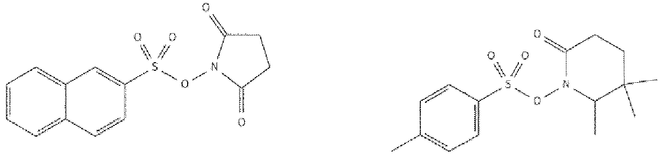

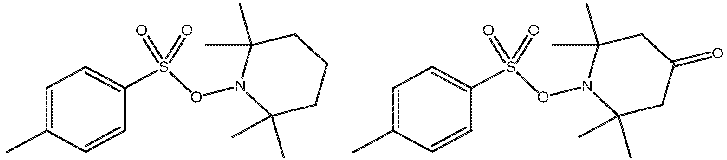

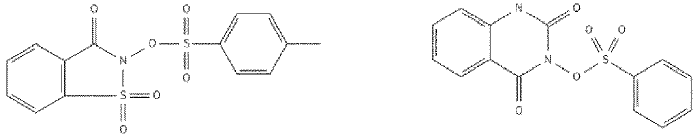

5. The use according to claim 1, **characterized in that** the halogen-free sulfonic acid ester is a sulfonic acid azanyl ester in oligomeric or polymeric form, which is preferably prepared by polymerization or polymer-analogous reaction from monomers selected from the group consisting of one of the compounds of the following formulae or mixtures thereof:

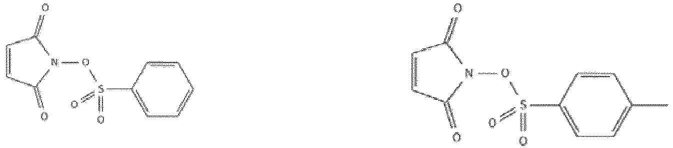

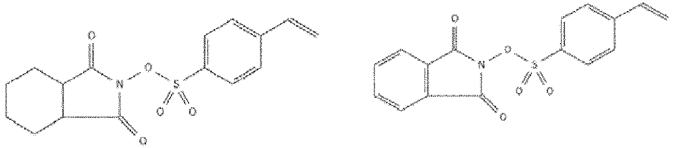

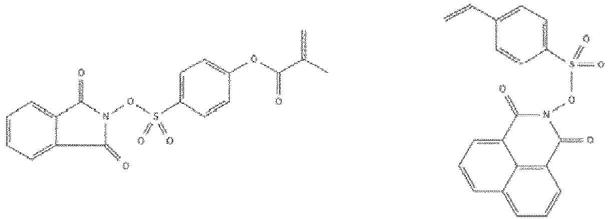

6. The use according to any one of the preceding claims, **characterized in that** the plastic material is selected from the group consisting of
a) polymers of olefins or diolefins, preferably polyethylene, especially preferably LDPE, LLDPE, VLDPE, ULDPE, MDPE, HDPE, UHMWPE, polyethylene prepared using metallocene catalysts, polypropylene, long-chain-branched polypropylene-copolymers prepared with alpha-olefins as comonomers, polyisobutylene, poly-4-methyl-1-pentene, polybutadiene, polyisoprene, polycy-clooctene, polyalkylene-carbon monoxide copolymers, copolymers in the form of random or block structures, especially polypropylene-polyethylene (EP), EPM or EPDM, ethylene-vinyl acetate (EVA), ethylene-acrylate, especially ethylene-butyl acrylate, ethylene-acrylic acid and salts thereof, and also terpolymers, especially ethylene-acrylic acid-glycidyl acrylate, graft polymers, especially polypropylene-g-maleic anhydride, polypropylene-g-acrylic acid and polyethylene-g-acrylic acid, polyethylene-polybutyl acrylate-graft-maleic anhydride;
b) polystyrene, poly-alpha-methyl styrene, polyvinylnaphthalene, polyvinylbiphenyl, polyvinyltoluene, styrene-butadiene (SB), styrene-butadiene-styrene (SBS), styrene-ethylene-butylene-styrene (SEBS), styrene-ethylene-propylene-styrene, styrene-isoprene, styrene-isoprene-styrene (SIS), styrene-butadiene-acrylonitrile (ABS), styrene-acrylonitrile (SAN), styrene-acrylonitrile-acrylate (ASA), styrene-ethylene, styrene-maleic anhydride polymers including corresponding graft copolymers, especially styrene on butadiene, maleic anhydride on styrene-butadiene-styrene or styrene-ethylene-butylene-styrene, and also graft copolymers of methyl methacrylate, styrene-butadiene and styrene-butadiene-acrylonitrile (ABS) or styrene-butadiene-methacrylonitrile (MABS), and also hydrogenated polystyrene derivatives such as, for example, polyvinylcyclohexane;
c) halogen-containing polymers, especially polyvinyl chloride (PVC), polychloroprene and polyvinylidene chloride (PVDC), copolymers of vinyl chloride and vinylidene chloride or of vinyl chloride and vinyl acetate, chlorinated polyethylene, polyvinylidene fluoride, epichlorohydrin homopolymers and copolymers, especially with ethylene oxide (ECO);
d) polymers of unsaturated esters, especially polyacrylates and polymethacrylates, more preferably polymethyl methacrylate (PMMA), polybutyl acrylate, polylauryl acrylate, polystearyl acrylate, polyacrylonitrile, polyacrylamides, copolymers, especially polyacrylonitrile-polyalkyl acrylate;
e) polymers of unsaturated alcohols and derivatives, especially polyvinyl alcohol, polyvinyl acetate, polyvinylbutyral, polyallyl phthalate, polyallylmelamine;
f) polyacetals, especially polyoxymethylene (POM) or copolymers especially with butanal;
g) polyphenylene oxides and blends with polystyrene or polyamides;
h) polymers of cyclic ethers, especially polyethylene glycol, polypropylene glycol, polyethylene oxide, polypropylene oxide;
i) polyurethanes, preferably made of hydroxy-terminated polyethers or polyesters and aromatic or aliphatic isocyanates, in particular linear polyurethanes and polyureas;
j) polyamides, especially PA 6, PA 6.6, PA 6.10, PA 4.6, PA 4.10, PA 10.10, PA 6.12, PA 12.12, PA 11, PA 12, and also semiaromatic and aromatic polyamides, especially polyphthalamides, more preferably prepared from terephthalic acid and/or isophthalic acid and aliphatic diamines, or from aliphatic dicarboxylic acids, especially adipic acid or sebacic acid, and aromatic diamines, especially 1,4- or 1,3-diaminobenzene;
k) polyimides, especially polyamide imides, polyetherimides, poly-esterimides, poly(ether)ketones, polysulfones, especially polyethersulfones, polyarylsulfones, polyphenylene sulfides, polybenzimidazoles, polyhydantoins;
l) polyesters of aliphatic or aromatic dicarboxylic acids and diols or of hydroxycarboxylic acids such as, for example, polyethylene terephthalate (PET), polybutylene terephthalate (PBT), polypropylene terephthalate, polyethylene naphthylate, poly-1,4-dimethylolcyclohexane terephthalate, polyhydroxybenzo-ate, polyhydroxynaphthalate, polylactic acid (PLA), polybutylene succinate (PBS), polyhydroxyalkanoates (PHA) such as, for example, polyhydroxybutyric acid (PHB) or polyhydroxyvaleric acid (PHV); polycaprolactone;
m) polycarbonates, polyester carbonates, and also blends of polycarbonates with other polymers, especially PC/ABS, PC/PBT, PC/PET/PBT;
n) cellulose derivatives, especially cellulose nitrate, cellulose acetate, cellulose propionate, cellulose butyrate;
o) epoxy resins, consisting of di- or polyfunctional epoxide compounds in combination with, for example, hardeners based on amines, anhydrides, dicyandiamide, mercaptans, isocyanates or catalytic hardeners,
p) phenolic resins such as phenol-formaldehyde resins, urea-formaldehyde resins, melamine-formaldehyde resins,
q) unsaturated polyester resins made from unsaturated dicarboxylic acids and diols with vinyl compounds, e.g. styrene, alkyd resins
r) silicones, for example based on dimethylsiloxanes, methyl-phenyl-siloxanes or diphenylsiloxanes, for example terminated with vinyl groups;
s) and also mixtures, combinations or blends of two or more of the polymers stated under a) to r).

7. The use in accordance with one of the preceding claims, **characterized in that characterized in that** the at least one halogen-free sulfonic acid ester and/or halogen-free sulfinic acid ester is used in combination with a compound selected from
i. inorganic flame retardants, preferably Al(OH)₃, Mg(OH)₂, AlO(OH), MgCO₃, phyllosilicates, especially montmorillonite, which may be unmodified or organically modified, sepiolite, attapulgite, vermiculite, wollastonite, double salts, especially Mg Al silicates, POSS (Polyhedral Oligomeric Silsesquioxane) compounds, huntite, hydromagnesite or halloysite, and also Sb₂O₃, Sb₂O₅, MoO₃, zinc stannate, zinc hydroxystannate, mica, calcium carbonate;
ii. nitrogen-containing flame retardants, preferably melamine, melem, melam, melon, melamine derivatives, melamine condensation products or melamine salts, benzoguanamine, polyisocyanurates, allantoin, phosphacenes, especially melamine cyanurate, melamine phosphate, dimelamine phosphate, melamine hypophosphite, melamine pyrophosphate, melamine polyphosphate, melamine metal phosphates, especially melamine aluminum phosphate, melamine zinc phosphate, melamine magnesium phosphate, and the corresponding pyrophosphates and polyphosphates, poly[2,4-(piperazin-1,4-yl)-6-(morpholin-4-yl)-1,3,5-triazine], ammonium polyphosphate, melamine borate and melamine hydrobromide;
iii. Radical initiators, preferably alkoxyamines, hydroxylamine esters, azo compounds, dicumyl or polycumyl;
iv. Phosphorus-containing flame retardants, preferably red phosphorus, phosphates, in particular resorcinol diphosphate, bisphenol A diphosphate and its oligomers, bisphenol abis (dicresyl) phosphate, triphenyl phosphate, ethylenediamine diphosphate, phosphinates, in particular salts of hypophosphorous acids and their derivatives, in particular alkyl phosphinate salts, particularly preferably aluminum diethyl phosphinate, zinc diethyl phosphinate or aluminum phosphinate, aluminum hypophosphite and its derivatives.ure and derivatives thereof, in particular alkyl phosphinate salts, especially preferably aluminum diethyl phosphinate, zinc diethyl phosphinate or aluminum phosphinate, aluminum hypophosphite, calcium hypophosphite, sodium hypophosphite, aluminum phosphite, aluminum phosphonate, phosphonate ester, aluminum methyl methyl phosphonate, oligomeric and polymeric derivatives of methane phosphonic acidure, 9,10- dihydro-9-oxa-10-phosphor-ylphenanthrene-10-oxide (DOPO) and substituted compounds thereof, polymeric phosphorus diamidate, 4,4'-bishydroxydeox-ybenzoin polyphosphonate, 2-carboxyethylmethylphosphinic acid-2-carboxyethylphenylphosphinic acid, diethyl-N,N'-bis(2-hydroxyethyl)aminomethyl phosphonate, dimethyl propyl phosphonate, dimethyl spirophosphonate, diphenylcresyl phosphate, hydroquinone bis(diphenyl phosphate)Halogen-containing chlorine- and bromine-based flame retardants, preferably polybrominated diphenyl oxides, in particular decabromodiphenyl oxide, tris(3-bromo-2,2-bis(bromomethyl)propyl phosphate, tris(tribromone neopentyl)phosphate, tetrabromophthalic acidure, 1,2-bis(tribromophenoxy)ethane, hexabromocyclododecane, dibromoneopentylglycol, brominated diphenylethane, 1,3,5-tris(2,3-dibromopropyl)isocyanurate, tris(2,3-dibromopropyl)isocyanurate, ethylene bis(tetrabromophthalimide), tetrabromobisphenol A, tris(tribromoneopentyl)alcohol, brominated polystyrene, brominated polybutadiene, brominated polystyrene, polybutadiene copolymers, brominated epoxy resin, brominated polycarbonate with or without end group blocking, polypentabromobenzyl acrylate, preferably in combination with Sb₂O₃ and/or Sb₂O₅;
v. borates, especially zinc borate or calcium borate with and without carrier material;
vi. sulfur-containing compounds, preferably elemental sulfur, disulfides and polysulfides, thiuram sulfide, dithiocarbamates, mercaptobenzothiazole and sulfenamides;
vii. antidrip agents, especially polytetrafluoroethylene;
viii. silicon-containing compounds, especially polyphenylsiloxanes;
ix. salts of sulfonic acids such as, for example, phosphonium sulfonate, potassium perfluorobutanesulfonate, potassium p-toluenesulfonate, potassium diphenylsulfone sulfonate
x. smoke suppressants such as, for example, molybdenum oxide, ammonium octamolybdate, copper molybdate, zinc molybdate, molybdate complexes e.g. calcium molybdate, calcium molybdate zinc, zinc molybdate on magnesium silicate carriers;
xi. natural substances with flame-retardant effect such as lignin, chitosan, phytic acid
xii. and also mixtures, combinations or blends of two or more of the substances stated under i. to xii.

8. The use according to one of the preceding claims, **characterized in that** the at least one halogen-free sulfonic acid ester and/or halogen-free sulfinic acid ester is used in combination with a compound selected from the bromine-containing flame retardants to the exclusion of antimony oxide-containing flame retardants as a flame retardant and/or flame retardant synergist in antimony oxide-free plastics.

9. A flame-retarded plastics composition comprising components (A) to (D) or consisting of these components:
(A) 30 to 99.9 wt% of at least one plastic selected from the group consisting of thermoplastics, elastomeric plastics, thermoset plastics and mixtures thereof;
(B) 0.1 to 20 wt% of at least one flame retardant as specified in any of claims 1 to 5, and mixtures thereof;
(C) 0 to 70 wt% of at least one non-(B) flame retardant or flame retardant synergist, and mixtures thereof;
(D) 0 to 50 wt% of at least one additive or adjuvant;
where the weight fractions of components (A) to (D) add up to 100 wt%,
component (C) is selected from the group consisting of
i. inorganic flame retardants;
ii. nitrogen-containing flame retardants;
iii. radical initiators;
iv. phosphorus-containing flame retardants;
v. halogen-containing flame retardants based on chlorine and bromine;
vi. borates;
vii. sulfur-containing compounds;
viii. antidrip agents;
ix. silicon-containing compounds;
x. salts of sulfonic acids;
xi. smoke suppressants;
xii. natural substances with flame-retardant effect;
xiii. and also mixtures, combinations or blends of two or more of the substances stated under i. to xii;
and
wherein component (D) is selected from the group consisting of UV absorbers, light stabilizers, UV stabilizers, preferably phenolic, aminic and/or sulfur-containing antioxidants, sterically hindered amines, phosphites, phosphonites, hydroxylamines, benzofuranones, metal deactivators, filler deactivators, nucleating agents, impact tougheners, plasticizers, lubricants, rheological modifiers, processing assistants, pigments, dyes, optical brighteners, active antimicrobial ingredients, antistats, slip agents, antiblocking agents, coupling agents, dispersants, compatibilizers, oxygen scavengers, acid scavengers, tag-gants or antifogging agents, and mixtures thereof.

10. The flame-retarded plastics composition as claimed in the preceding claim, **characterized in that** component (C) is selected from the group consisting of
i. Al(OH)₃, Mg(OH)₂, AlO(OH), MgCO₃, phyllosilicates, especially montmorillonite, which may be unmodified or organically modified, sepiolite, attapulgite, vermiculite, wollastonite, double salts, especially Mg Al silicates, POSS (Polyhedral Oligomeric Silsesquioxane) compounds, huntite, hydromagnesite or halloysite, and also Sb₂O₃, Sb₂O₅, MoO₃, zinc stannate, zinc hydroxystannate, mica, calcium carbonate;
ii. melamine, melem, melam, melon, melamine derivatives, melamine condensation products or melamine salts, benzoguanamine, polyisocyanurates, allantoin, phosphacenes, especially melamine cyanurate, melamine phosphate, dimelamine phosphate, melamine hypophosphite, melamine polyphosphate, melamine pyrophosphate, melamine metal phosphates, especially melamine aluminum phosphate, melamine zinc phosphate, melamine magnesium phosphate, and the corresponding pyrophosphates and polyphosphates, poly[2,4-(piperazin-1,4-yl)-6-(morpholin-4-yl)-1,3,5-triazine], ammonium polyphosphate, melamine borate and melamine hydrobromide, polymer of ethylenediamine and 4,6-dichloro-N-phenyl-1,3,5-triazine-2-amines, poly(1,3,5-triazine-2-aminoethanol diethylenetri-amines, ammonium sulfamate;
iii. alkoxyamines, hydroxylamine esters, azo compounds, dicumyl or polycumyl;
iv. red phosphorus, phosphates, especially resorcinol diphosphate, bisphenol A diphosphate and oligomers thereof, bisphenol A bis(dicresyl)phosphate, triphenyl phosphate, ethylenediamine diphosphate, phosphinates, especially salts of hypophosphorous acid and derivatives thereof, particularly preferably alkyl phosphinate salts, more preferably aluminum diethylphosphinate, zinc diethylphosphinate or aluminum phosphinate, aluminum hypophosphite, calcium hypophosphite, sodium hypophosphite, aluminum phosphite, aluminum phosphonate, phosphonate esters, aluminum methyl methylphosphonate, oligomeric and polymeric derivatives of methanephosphonic acid, 9,10-dihydro-9-oxa-10-phosphor-ylphenanthrene-10-oxide (DOPO) and substituted compounds thereof, polymeric phosphorodiamidate, 4,4'-bishydroxydeox-ybenzoin polyphosphonate, 2-carboxyethylmethylphosphinic acid-2-carboxyethylphenylphosphinic acid, diethyl N,N'-bis(2-hydroxyethyl)aminomethylphosphonate, dimethyl propyl phosphonate, dimethylspirophosphonate, diphenylcresyl phosphate, hydroquinone bis(diphenyl phosphate);
v. polybrominated diphenyl oxides, especially decabromodiphenyl oxide, tris(3-bromo-2,2-bis(bromo¬methyl)propyl) phosphate, tris(tribromoneopentyl) phosphate, tetrabromophthalic acid, 1,2-bis(tribromophenoxy)ethane, hexabromocyclododecane, brominated diphenylethane, tris(2,3-dibromopropyl) isocyanurate, ethylenebis (tetrabromophthalimide), tetrabromo-bisphenol A, brominated polystyrene, brominated polybutadiene, polystyrene-brominated, polybutadiene copolymers, brominated epoxy resin, polypentabrombenzyl acrylate, preferably in combination with Sb₂O₃ and/or Sb₂O₅;
vi. zinc borate or calcium borate;
vii. elemental sulfur, disulfides and polysulfides, thiuram sulfide, dithiocarbamates, mercaptobenzothiazole and sulfenamides;
viii. polytetrafluoroethylene;
ix. polyphenylsiloxanes;
x. phosphonium sulfonate, potassium perfluorobutanesulfonate, potassium p-toluenesulfonate, potassium diphenylsulfone sulfonate
xi. molybdenum oxide, ammonium octamolybdate, copper molybdate, zinc molybdate, molybdate complexes e.g. calcium molybdate, calcium molybdate zinc, zinc molybdate on magnesium silicate carriers;
xii. lignin, chitosan, phytic acid
xiii. and also mixtures, combinations or blends of two or more of the substances stated under i. to xii.

11. The flame-retarded plastics composition as claimed in claim 9 or 10, **characterized in that** it is free from antimony compounds.

12. The flame-retarded plastics composition as claimed in either of the two preceding claims, **characterized in that**
the acid scavengers here are selected from the group consisting of salts of long-chain carboxylic acids, especially calcium stearate, magnesium stearate, zinc stearate, calcium lactate, calcium stearoyl-2-lactylate, hydrotalcites;
the light stabilizers and UV stabilizers are selected from the group consisting of phenolic antioxidants, phosphites, phosphonites, sterically hindered amines (HALS), and mixtures thereof;
the phenolic antioxidants are selected from the group consisting of octadecyl 3-(3,5-di-tert-butyl-4-hydroxyphenyl)propionate, pentaerythritol tetrakis[3-(3,5-di-tert-butyl-4-hydroxyphenyl)propionate, tris(3,5-di-tert-butyl-4-hydroxyphenyl) isocyanurate, 1,3,5-trimethyl-2,4,6-tris(3,5-di-tert-butyl-4-hydroxyphenyl) isocyanurate, 1,3,5-trimethyl-2,4,6-tris(3,5-di-tert-butyl-4-hydroxybenzyl)benzene, triethylene glycol bis[3-(3-tert-butyl-4-hydroxy-5-methylphenyl)propionate, N,N'-hexane-1,6-diylbis[3-(3,5-di-tert-butyl-4-hydroxyphenyl)propionamide, and mixtures thereof;
the phosphites and phosphonites are selected from the group consisting of tris(2,4-di-tert-butylphenyl) phosphite, diisodecyl pentaerythritol diphosphite, bis(2,4-di-tert-butylphenyl) pentaerythritol diphosphite, bis(2,4-dicumylphenyl) pentaerythritol diphosphite, bis(2,6-di-tert-butyl-4-methylphenyl) pentaerythritol diphosphite, diisodecyloxypentaerythritol diphosphite, bis(2,4-di-tert-butyl-6-methylphenyl) pentaerythritol diphosphite, bis(2,4,6-tris(tert-butylphenyl) pentaerythritol diphosphite, tetrakis(2,4-di-tert-butylphenyl)-4,4'-biphenylenediphosphonite, and mixtures thereof;
the aminic antioxidants are selected from the group consisting of N,N'-diisopropyl-p-phenylenediamine, N,N'-di-sec-butyl-p-phenylenediamine, N,N'-bis(1,4-dimethylpentyl)-p-phenylenediamine, N,N'-bis(1-ethyl-3- methylpentyl)-p-phenylenediamine, N,N'-bis(1-methylheptyl)-p-phenylenediamine, N,N'-dicyclohexyl-p-phenylenediamine, N,N'-diphenyl-p-phenylenediamine, N,N'-bis(2-naphthyl)-p-phenylenediamine, N-isopropyl-N'-phenyl-p-phenylenediamine, N-(1,3-dimethylbutyl)-N'-phenyl-p-phenylenediamine, N-(1-methylheptyl)-N'-phenyl-p-phenylenediamine, N-cyclohexyl-N'-phenyl-p-phenylenediamine, and mixtures thereof;
the sulfur-containing antioxidants are selected from the group consisting of distearyl thiodipropionate, dilauryl dipropionate, and mixtures thereof;
the hydroxylamines are selected from the group consisting of N,N-dialkylhydroxylamine, N,N-dibenzylhydroxylamine, N,N-dilaurylhy-droxylamine, N,N-distearylhydroxylamine, N-benzyl α-phenyl nitrone, N-octadecyl α-hexadecyl nitrone;
the sterically hindered amines are selected from the group consisting of 1,1-bis(2,2,6,6-tetramethyl-4-piperidyl) succinate, bis(1,2,2,6,6-pentamethyl- 4-piperidyl) sebacate, bis(1-octyloxy-2,2,6,6-tetramethyl-4-piperidyl) sebacate, bis(1,2,2,6,6-pentamethyl-4-piperidyl) n-butyl-3,5-di-tert-butyl-4-hydroxybenzylmalonate, the condensation product of 1-(2-hydroxyethyl)-2,2,6,6-tetramethyl-4-hydrox-ypiperidine and succinic acid, linear or cyclic condensation products of N,N'-bis(2,2,6,6-tetramethyl-4-piperidyl)hexamethylendiamine and 4-tert-octylamino-2,6-di-chloro-1,3,5-triazine, tris(2,2,6,6-tetramethyl-4-piperidyl) nitrilotriacetate, tetrakis(2,2,6,6-tetra-methyl-4-piperidyl) 1,2,3,4-butanetetracarboxylate, 1,1'-(1,2-ethanediyl)bis(3,3,5,5-tetramethylpiperazinone), 4-benzoyl-2,2,6,6-tetramethylpiperidine, 4-stearyloxy-2,2,6,6-tetramethylpiperidine, linear or cyclic condensation products of N,N'-bis(2,2,6,6-tetramethyl-4-piperidyl)hexamethylendia-mine and 4-morpholino-2,6-dichloro-1,3,5-triazine, the reaction product of 7,7,9,9-tetramethyl-2-cycloundecyl-1-oxa-3,8-diaza-4-oxo-spiro[4.5]decane and epichlorohydrin, and mixtures thereof; and/or
component (A) is selected from one or more of the polymers specified in claim 6.

13. The flame-retarded plastics composition as claimed in any of claims 9 to 12, **characterized in that**
component (A) is present at 60 to 99 wt%, preferably 60 to 95 wt% and more preferably at 60 to 90 wt%, based on the total weight of the flame-retarded plastics composition;
component (B) is present at 0.5 to 15 wt%, preferably 1.0 to 12 wt% and more preferably at 2 to 10 wt%, based on the total weight of the flame-retarded plastics composition;
component (C) is present at 1 to 60 wt%, preferably 2 to 30 wt% and more preferably at 5 to 25 wt%, based on the total weight of the flame-retarded plastics composition;
component (D) is present at 0.05 to 50 wt%, preferably 0.1 to 40 wt% and more preferably at 0.2 to 30 wt% or 0.1 to 1 wt%, based on the total weight of the flame-retarded plastics composition; and
component (A) is preferably a thermoplastic polymer.

14. The use of a flame-retarded plastics composition as claimed in any of claims 9 to 13 in the electrical or electronics industry, mechanical engineering and apparatus construction, building industry, transport industry, preferably automobiles, aircraft, railroads and ships, for medical applications, for household appliances, vehicle parts, cables, consumer goods, packaging, furniture, and textiles.

## Revendications

1. Utilisation d'au moins un ester d'acide sulfonique non halogéné et/ou d'au moins un ester d'acide sulfinique non halogéné comme agent ignifuge et/ou synergiste d'agent ignifuge dans des matières plastiques, **caractérisée en ce qu'**il s'agit, pour les esters d'acide sulfonique non halogénés et/ou les esters d'acide sulfinique non halogénés, d'esters azaniques d'acide sulfonique non halogénés de formule générale (la) et/ou d'esters azaniques d'acide sulfinique non halogénés de formule générale (Ib) ; 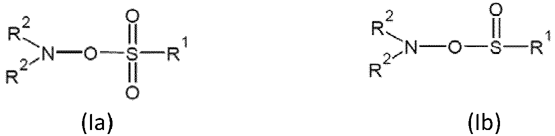 R¹ et R² étant chacun indépendamment choisis dans le groupe constitué par les groupes alkyle, les groupes hétéroalkyle, les groupes cycloalkyle, les groupes hétérocycloalkyle, les groupes acyle, les groupes aryle et les groupes hétéroaryle substitués ou non substitués, 2groupes R² pouvant former un système cyclique.

2. Utilisation selon la revendication 1, **caractérisée en ce que** l'ester d'acide sulfonique non halogéné est un ester d'azanyle d'acide sulfonique choisi dans le groupe constitué par l'un des composés ayant les formules suivantes ou des mélanges de ceux-ci : 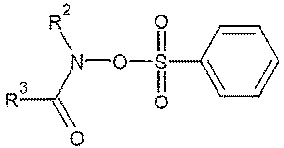 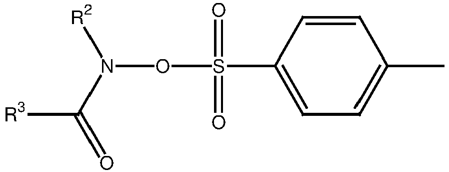 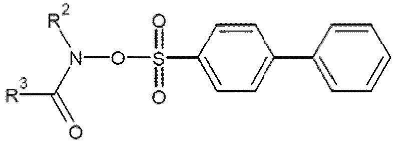 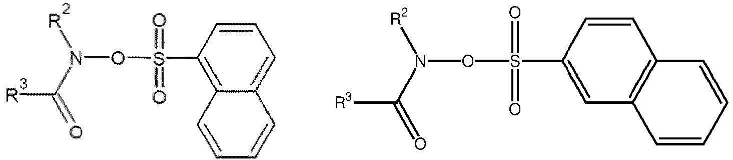 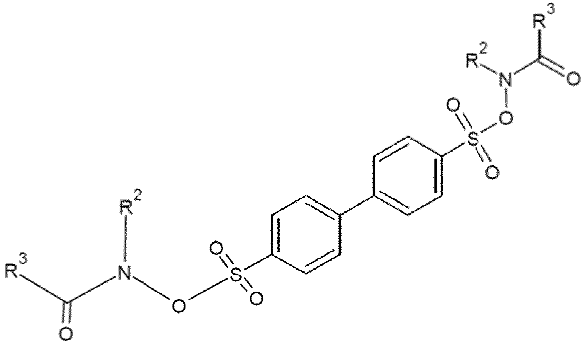
R² ayant la même signification que celle indiquée ci-dessus et étant de préférence choisi dans le groupe constitué par les groupes alkyle substitués ou non substitués, les groupes hétéroalkyle, les groupes cycloalkyle, les groupes hétérocycloalkyle ; et
R³ étant choisi dans le groupe constitué par les groupes alkyle substitués ou non substitués, les groupes hétéroalkyle, les groupes cycloalkyle, les groupes hétérocycloalkyle ;
R² et R³ pouvant former un système cyclique ; les unités structurelles aromatiques pouvant être substituées ; les groupes alkyles étant préférés comme substituants.

3. Utilisation selon la revendication 1 ou 2, **caractérisée en ce que** l'ester d'acide sulfonique non halogéné est un ester d'azanyle d'acide sulfonique ayant la formule indiquée ci-dessous ; 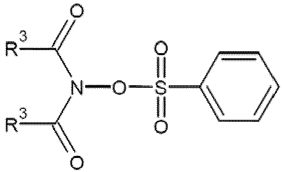 R³ étant choisi dans le groupe constitué par les groupes alkyle substitués ou non substitués, les groupes hétéroalkyle, les groupes cycloalkyle, les groupes hétérocycloalkyle et un système cyclique formé de 2 radicaux R³.

4. Utilisation selon la revendication 1 ou 2, **caractérisée en ce que** l'ester d'acide sulfonique non halogéné est un ester d'azanyle d'acide sulfonique choisi dans le groupe constitué par l'un des composés ayant les formules suivantes ou des mélanges de ceux-ci :

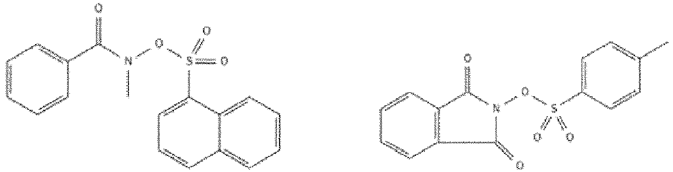

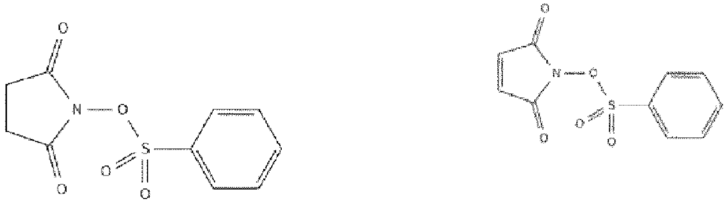

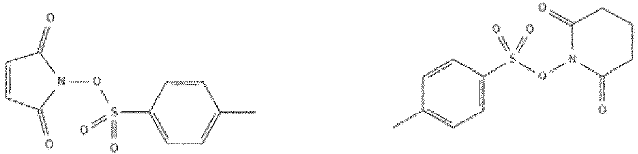

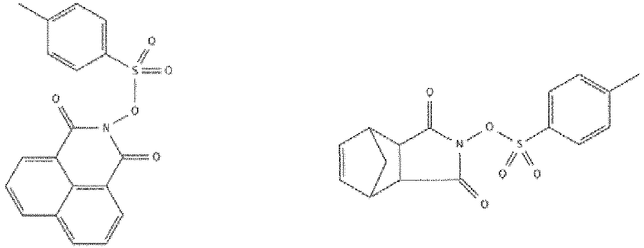

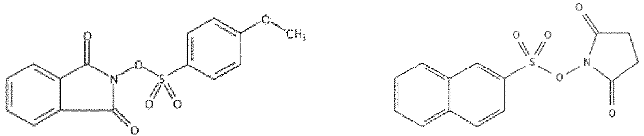

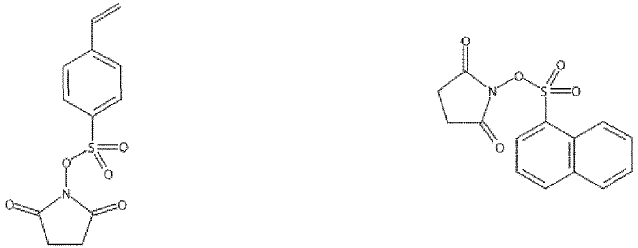

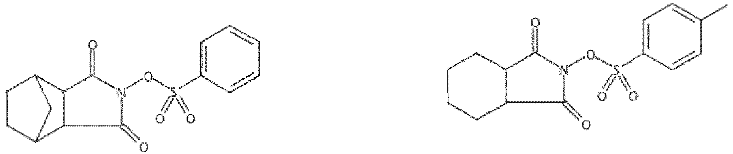

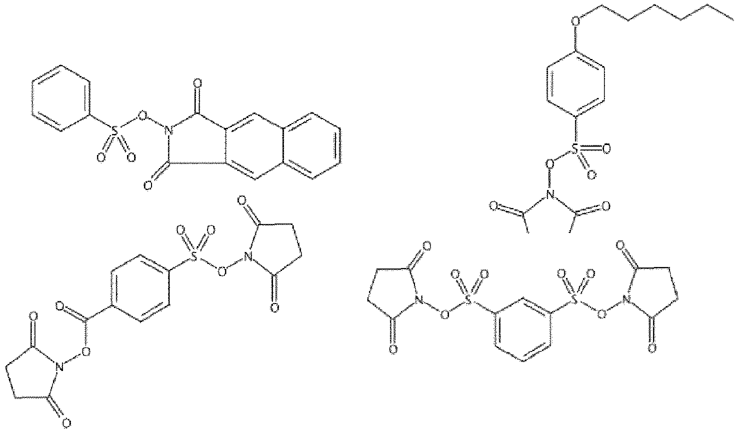

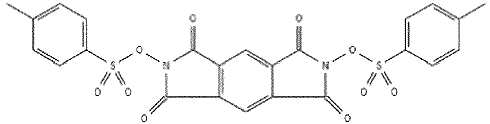

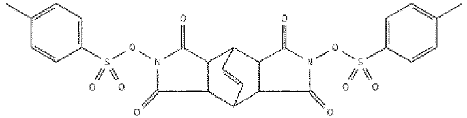

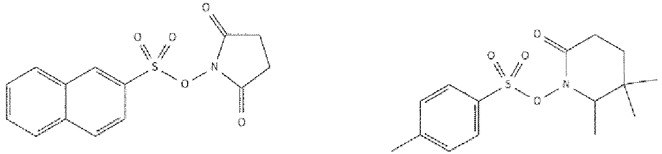

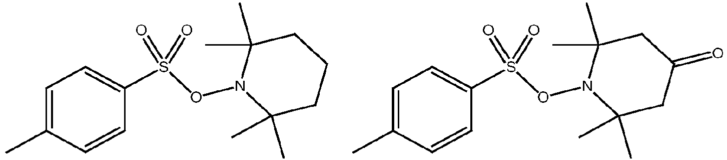

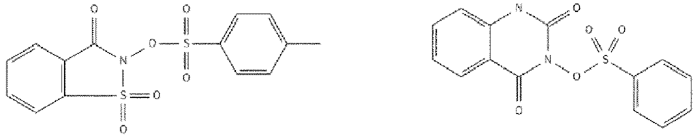

5. Utilisation selon la revendication 1, **caractérisée en ce que** l'ester d'acide sulfonique non halogéné est un ester d'acide sulfonique azany-lique sous forme oligomère ou polymère, qui est de préférence préparé par polymérisation ou réaction analogue à une polymérisation à partir de monomères choisis dans le groupe constitué par l'un des composés répondant aux formules suivantes ou des mélanges de ceux-ci :

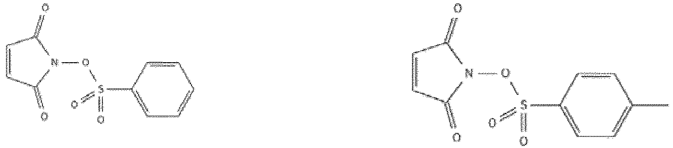

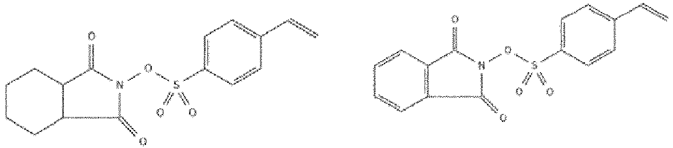

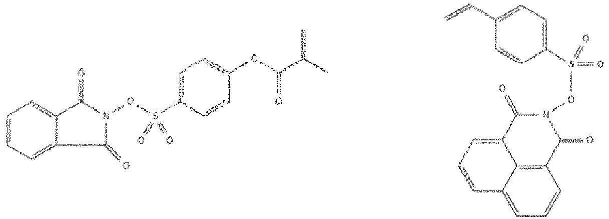

6. Utilisation selon l'une des revendications précédentes, **caractérisée en ce que** la matière plastique est choisie parmi le groupe constitué de
a) polymères d'oléfines ou de dioléfines, de préférence polyéthylène, en particulier LDPE, LLDPE, VLDPE, ULDPE, MDPE, HDPE, UHMWPE, polyéthylène fabriqué à l'aide de catalyseurs métal-locènes, polypropylène, copolymères de polypropylène à longue chaîne ramifiée fabriqués avec des alpha-oléfines comme comonomères, polyisobutylène, poly-4-méthyl-pen-tène-1, polybutadiène, polyisoprène, polycyclooctène, copolymères de polyalkylène et de monoxyde de carbone, copolymères sous forme de structures statistiques ou en blocs, en particulier polypropylène-polyéthylène (EP), EPM ou EPDM, éthylène-vinylacétate (EVA), éthylène-acrylate, en particulier l'éthylène-butylacrylate, l'éthylène-acide acrylique et ses sels, ainsi que les terpolymères, en particulier l'éthylène-acide acrylique-glycidylacrylate, les polymères greffés, en particulier le polypropylène-g-anhydride maléique, polypropylène-acide g-acrylique et polyéthylène-acide-g-acrylique, polyéthylène-poly-butylacrylate-greffé-anhydride maléique ;
b) polystyrène, polyalpha-méthylstyrène, polyvinylnaphtalène, polyvinylbiphényle, polyvinyl toluène, styrène-butadiène (SB), styrène-butadiène-styrène (SBS), styrène-éthylène-butylène-styrène (SEBS), styrène-éthylène-propylène-styrène, styrène-isoprène, styrène-isoprène-styrène (SIS), styrène-butadiène-acrylonitrile (ABS), styrène-acrylonitrile (SAN), styrène-acrylonitrileacrylate (ASA), styrène-éthylène, styrène-anhydride maléiquepolymères, y compris les copolymères greffés correspondants, en particulier le styrène sur butadiène, l'anhydride maléique sur le styrène-butadiène-styrène ou le styrène-éthylène-butylène-styrène, ainsi que les copolymères greffés de méthacrylate de méthyle, styrène-butadiène et styrène-butadiène-acrylonitrile (ABS) ou styrène-butadiène-méthacrylonitrile (MABS) ainsi que des dérivés de polystyrène hydrogéné tels que le polyvinylcyclohexane ;
c) polymères halogénés, en particulier le polychlorure de vinyle (PVC), le polychloroprène et le chlorure de polyvinylidène (PVDC), les copolymères de chlorure de vinyle et de chlorure de vinylidène ou de chlorure de vinyle et d'acétate de vinyle, le polyéthylène chloré, le polyfluorure de vinylidène, l'épichlorhydrine et ses copolymères, en particulier avec l'oxyde d'éthylène (ECO) ;
d) polymères d'esters insaturés, en particulier polyacrylates et polyméthacrylates, de préférence polyméthacrylate de méthyle (PMMA), polybutylacrylate, polylaurylacrylate, polystéarylacrylate, polyacrylonitrile, polyacrylamides, copolymères, en particulier polyacrylonitrile-polyalkylacrylate ;
e) polymères d'alcools insaturés et dérivés, en particulier alcool polyvinylique, acétate de polyvinyle, butyral de polyvinyle, polyallylphthalat, polyallylmélamine ;
f) polyacétals, en particulier polyoxyméthylène (POM) ou copolymères, en particulier avec du butanal ;
g) oxydes de polyphénylène et mélanges avec du polystyrène ou des polyamides ;
h) polymères d'éthers cycliques, en particulier polyéthylène glycol, polypropylène glycol, polyéthylène oxyde, polypropylène oxyde ;
i) polyuréthanes, de préférence à base de polyéthers ou de polyesters à terminaison hydroxy et d'isocyanates aromatiques ou aliphatiques, en particulier polyuréthanes linéaires et polyurées ;
j) polyamides, en particulier PA 6, PA 6.6, PA 6.10, PA 4.6, PA 4.10, PA 10.10, PA 6.12, PA 12.12, PA 11, PA 12 ainsi que des polyamides partiellement aromatiques et aromatiques, en particulier des polyphthalamides, de préférence fabriqués à partir d'acide téréphtalique et/ou d'acide isophtalique et de diamines aliphatiques ou à partir d'acides dicarboxyliques aliphatiques, en particulier l'acide adipique ou l'acide sébacique et des diamines aromatiques, en particulier le 1,4- ou le 1,3-diaminobenzène ;
k) polyimides, en particulier polyamide-imides, polyétherimides, polyesterimides, poly(éther)cétones, polysulfones, en particulier polyéthersulfones, polyarylsulfones, polyphénylènesulfures, polybenzimidazoles, polyhydantoïnes ;
l) polyesters d'acides dicarboxyliques aliphatiques ou aromatiques et de diols ou d'acides hydroxycarboxyliques tels que le polyéthylène téréphtalate (PET), le polybutylène téréphtalate (PBT), le polypropylène téréphtalate, le polyéthylène naphtylate, le poly-1,4-diméthylolcyclohexane téréphtalate, le polyhydroxybenzoate, polyhydroxynaphthalate, l'acide polymlélique (PLA), le polybutylène succinate (PBS), les polyhydroxyalcanoates (PHA) tels que l'acide polyhydroxybutyrique (PHB) ou l'acide polyhydroxyvalérique (PHV), le polycaprolactone ;
m) polycarbonates, polyesters carbonates et mélanges de polycarbonates avec d'autres polymères, en particulier PC/ABS, PC/PBT, PC/PET/PBT ;
n) dérivés de cellulose, en particulier nitrate de cellulose, acétate de cellulose, propionate de cellulose, butyrate de cellulose ;
o) résines époxy consistant en des composés époxy di- ou polyfonctionnels en combinaison avec, par exemple, des durcisseurs à base d'amines, d'anhydrides, de dicyanamide, de mercaptans, d'isocyanates ou de durcisseurs à action catalytique ;
p) résines phénoliques telles que les résines phénol-formaldéhyde, les résines urée-formaldéhyde, les résines mélamine-formaldéhyde ;
q) résines polyester insaturées issues d'acides dicarboxyliques insaturés et de diols avec des composés vinyliques, par exemple styrène, résines alkydes
r) silicones, par exemple à base de diméthylsiloxanes, méthylphénylsiloxanes ou diphénylsiloxanes, par exemple terminés par des groupes vinyliques ;
s) ainsi que les mélanges, combinaisons ou alliages de deux ou plusieurs des polymères mentionnés aux points a) à r).

7. Utilisation selon l'une des revendications précédentes, **caractérisée en ce que** le ou les esters d'acide sulfonique non halogénés et/ou esters d'acide sulfinique non halogénés sont utilisés en combinaison avec un composé choisi parmi
i. des agents ignifuges inorganiques, de préférence Al(OH)₃, Mg(OH)₂, AlO(OH), MgCO₃, silicates stratifiés, en particulier la montmorillonite qui peut être non modifiée ou modifiée organiquement, la sépiolite, l'attapulgite, la vermiculite, la wollastonite, les sels doubles, en particulier les silicates de Mg-Al, les composés POSS (Polyhedral Oligomeric Silsesquioxane), la huntite, l'hydromagnesite ou l'halloysite ainsi que Sb₂O₃, Sb₂O₅, MoO₃, le stannate de zinc, l'hydroxystannate de zinc, le mica, le carbonate de calcium ;
ii. des agents ignifuges contenant de l'azote, de préférence la mélamine, le méryne, le melam, le melon, les dérivés de la mélamine, les produits de condensation de la mélamine ou les sels de mélamine, la benzoguanamine, les polyisocyanurates, l'allantoïne, les phosphacènes, en particulier le cyanurate de mélamine, le phosphate de mélamine, le phosphate de dimélamine, l'hypophosphite de mélamine, le pyrophosphate de mélamine, le polyphosphate de mélamine, les phosphates de mélamine-métal, en particulier le phosphate d'aluminate de mélamine, le phosphate de zinc de mélamine, le phosphate de magnésium de mélamine ainsi que les pyrophosphates et polyphosphates correspondants, poly-[2,4-(pipérazin-1,4-yl)-6-(morpholin-4-yl)-1,3,5-triazine], polyphosphate d'ammonium, borate de mélamine et bromhydrate de mélamine ;
iii. des agents radicaux, de préférence les alcoxyamines, les esters d'hydroxylamine, les composés azoïques, le dicumyle ou le polycumyle ;
iv. des agents ignifuges contenant du phosphore, de préférence du phosphore rouge, des phosphates, en particulier le diphosphate de résorcine, le bisphénol-A-diphosphate et ses oligomères, le bisphénol-A-bis(dicrésyl)phosphate, le triphénylphosphate, l'éthylènediamine diphosphate, les phosphinates, en particulier les sels de l'acide hypo-phosphoreux et ses dérivés, en particulier les sels de phosphinate d'alkyle, de préférence le diéthylphosphinate d'aluminium, le diéthylphosphinate de zinc ou le phosphinate d'aluminium, l'hypophosphite d'aluminium, l'hypophosphite de calcium, l'hypophosphite de sodium, le phosphite d'aluminium, le phosphonate d'aluminium, les esters phosphonates, le méthylméthylphosphonate d'aluminium, les dérivés oligomères et polymères de l'acide méthane phosphonique, les 9,10- dihydro-9-oxa-10-phosphorylphénanthrène-10-oxyde (DOPO) et leurs composés substitués, le phosphorodiamide polymère, le 4,4'-bishydroxydeoxybenzoine-polyphosphonate, l'acide 2-carboxyéthylméthylphosphinique-2-carboxyéthylphénylphosphinique, le diéthyl-N,N'-bis(2-hydroxyéthyl)aminométhylphosphonate, le diméthylpropylphosphonate, le diméthylspirophosphonate, le diphénylcrésyl phosphate, les agents ignifuges hydrogénés d'hydroquinone bis (diphényl phosphate) à base de chlore et de brome, de préférence les dioxyures de diphényle polybromés, en particulier le décabromodiphényle, le tris(3-bromo-2,2-bis(bromométhyl)propyl phosphate, le tris(tribromonéopentyl)phosphate, l'acide tétrabromophtalique, les 1,2-bis(tribromophénoxy)éthane, l'hexabromocyclododécane, le dibromononopentylglycol, le diphényléthane bromé, le 1,3,5-tris-(2,3-dibromopropyl)isocyanurate, le tris-(2,3-dibromopropyl)isocyanurate, l'éthylènebis(tétrabromophtalimide), tétrabromobisphénol A, l'alcool tris(tribromonopentyl), le polystyrène bromé, le polybutadiène bromé, les copolymères de polystyrène bromé et de polybutadiène, la résine époxy bromée, le polycarbonate bromé avec ou sans blocage des groupes terminaux, le polypentabromobenzylacrylate, de préférence en combinaison avec Sb₂O₃ et/ou Sb₂O₅ ;
v. des borates, en particulier le borate de zinc ou le borate de calcium avec ou sans matériau support ;
vi. des composés soufrés, de préférence le soufre élémentaire, les disulfures et les polysulfures, le sulfure de thiuram, les dithiocarbamates, le mercaptobenzothiazole et les sulfenamides ;
vii. des agents anti-gouttes, en particulier le polytétrafluoroéthylène ;
viii. des composés contenant du silicium, en particulier des polyphénylsiloxanes ;
ix. des sels d'acides sulfoniques tels que le phosphonium sulfonate, le perfluorobutane sulfonate de potassium, le p-toluène sulfonate de potassium, le diphenylsulfonate de potassium
x. des inhibiteurs de fumée tels que l'oxyde de molybdène, l'octamolybdate d'ammonium, le molybdate de cuivre, le molybdate de zinc, les complexes de molybdate tels que le molybdate de calcium, le molybdate de calcium et de zinc, le molybdate de zinc sur support de silicate de magnésium ;
xi. des substances naturelles à effet ignifuge telles que la lignine, le chitosane, l'acide phytique
xii. ainsi que des mélanges, combinaisons ou mélanges de deux ou plusieurs des substances mentionnées sous i. à xii.

8. Utilisation selon l'une des revendications précédentes, **caractérisée en ce que** le ou les esters d'acide sulfonique non halogénés et/ou les esters d'acide sulfinique non halogénés sont utilisés en combinaison avec un composé choisi parmi les agents ignifuges bromés, à l'exclusion des agents ignifuges contenant de l'oxyde d'antimoine, comme agent ignifuge et/ou synergiste d'agent ignifuge dans des matières plastiques exemptes d'oxyde d'antimoine.

9. Composition plastique ignifugée comprenant les composants (A) à (D) :
(A) 30 à 99,9 % en poids d'au moins une matière plastique choisie dans le groupe constitué par les matières thermoplastiques, les matières élastomères, les matières thermodurcissables et leurs mélanges ;
(B) 0,1 à 20 % en poids d'au moins un agent ignifuge tel que décrit dans l'une des revendications 1 à 5 et leurs mélanges ;
(C) 0 à 70 % en poids d'au moins un agent ignifuge ou synergiste d'agent ignifuge différent de (B) et des mélanges de ceux-ci ;
(D) 0 à 50 % en poids d'au moins un additif ou adjuvant ;
les proportions en poids des composants (A) à (D) se complétant à 100 % en poids,
le composant (C) étant choisi parmi le groupe constitué
i. d'agents ignifuges inorganiques ;
ii. d'agents ignifuges contenant de l'azote ;
iii. d'agents radicalaires ;
iv. d'agents ignifuges contenant du phosphore ;
v. d'agents ignifuges halogénés à base de chlore et de brome ;
vi. de borates ;
vii. de composés soufrés ;
viii. d'agents anti-gouttes ;
ix. de composés siliciés ;
x. de sels d'acides sulfoniques ;
xi. d'inhibiteurs de fumée ;
xii. de substances naturelles ayant un effet ignifuge ;
xiii. ainsi que les mélanges, combinaisons ou mélanges de deux ou plusieurs des substances mentionnées aux points i. à xii ;
et
le composant (D) étant choisi parmi le groupe constitué d'absorbeurs d'UV, de stabilisateurs de lumière, de stabilisateurs d'UV, de préférence d'antioxydants phénoliques, aminés et/ou soufrés, d'amines à encombrement stérique, de phosphites, de phosphonites, d'hydroxylamines, de benzofuranones, de désactivateurs de métaux, de désactivateurs de charges, d'agents de nucléation, d'améliorants de la résistance aux chocs, de plastifiants, de lubrifiants, de modificateurs de rhéologie, d'adjuvants de mise en œuvre, de pigments, de colorants, d'azurants optiques, d'agents antimicrobiens, d'antistatiques, d'agents de glissement, d'agents antiblocage, d'agents de couplage, d'agents dispersants, d'agents compatibilisants, de capteurs d'oxygène, de capteurs d'acide, d'agents de marquage ou d'agents antibuée et leurs mélanges.

10. Composition plastique ignifugée selon la revendication précédente, **caractérisée en ce que** le composant (C) est choisi dans le groupe constitué par
i. les Al(OH)₃, Mg(OH)₂, AlO(OH), MgCO₃, silicates stratifiés, en particulier la montmorillonite qui peut être non modifiée ou modifiée organiquement, la sépiolite, l'attapulgite, la vermiculite, la wollastonite, les sels doubles, en particulier les silicates de Mg-Al, les composés POSS (Polyhedral Oligomeric Silsesquioxane), la huntite, l'hydromagnesite ou l'halloysite ainsi que Sb₂O₃, Sb₂O₅, MoO₃, le stannate de zinc, l'hydroxystannate de zinc, le mica, le carbonate de calcium ;
ii. les mélamine, mérienne, melam, melon, dérivés de la mélamine, produits de condensation de la mélamine ou sels de mélamine, benzoguanamine, polyisocyanurates, allantoïne, phosphacènes, en particulier cyanurate de mélamine, phosphate de mélamine, phosphate de dimélamine, pyrophosphate de mélamine, polyphosphate de mélamine, hypophosphite de mélamine, phosphates de mélamine-métal, en particulier le phosphate d'aluminométhylmélamine, le phosphate de zinc-mélamine, le phosphate de magnésium-mélamine ainsi que les pyrophosphates et polyphosphates correspondants, poly-[2,4-(pipérazin-1,4-yl)-6-(morpholin-4-yl)-1,3,5-triazine], polyphosphate d'ammonium, borate de mélamine et bromhydrate de mélamine, polymère d'éthylènediamine et de 4,6-dichloro-*N*-phényl-1,3,5-triazine-2-amine, poly(1,3,5-triazine-2-aminoéthanol diéthylènetriamine, sulfamate d'ammonium ;
iii. les alcoxyamines, esters d'hydroxylamine, composés azoïques, dicumyle ou polycumyle ;
iv. le phosphore rouge, les phosphates, en particulier le diphosphate de résorcine, le bisphénol-A-diphosphate et leurs oligomères, le bisphénol-A-bis (dicrésyl)phosphate, le triphénylphosphate, éthylènediamine diphosphate, phosphinates, en particulier les sels de l'acide hypophosphoreux et ses dérivés, en particulier les sels de phosphinate d'alkyle, de préférence le diéthylphosphinate d'aluminium, le diéthylphosphinate de zinc ou le phosphinate d'aluminium, l'hypophosphite d'aluminium, l'hypophosphite de calcium, l' hypophosphite de sodium, le phosphite d'aluminium, le phosphonate d'aluminium, les esters de phosphonate, méthylméthylphosphonate d'aluminium, les dérivés oligomères et polymères de l'acide méthane phosphonique, le 9,10-dihydro-9-oxa-10-phosphorylphénanthra-10-oxyde (DOPO) et ses composés substitués, le phosphoramidate de polymère, le 4,4'-bishydroxy-désoxy-benzoin-polyphosphonate, acide 2-carboxyéthylméthylphosphinique-2-carboxyéthylphénylphosphinique, diéthyl-N,N'-bis(2-hydroxyéthyl)aminométhylphosphonate, le diméthylpropylphosphonate, le diméthylspirophosphonate, le diphénylcrésyl phosphate, l'hydroquinonebis-(diphényl phosphate) ;
v. les oxydes de diphényle polybromés, en particulier l'oxyde de décabromodiphényle, le phosphate de tris(3-bromo-2,2-bis(bromométhyl)propyle, le phosphate de tris(tribromonéopentyle), l'acide tétrabromophtalique, le 1,2-bis(tribromophénoxy)éthane, hexabromocyclododécane, le diphényléthane bromé, le tris-(2,3-dibromopropyl)isocyanurate, l'éthylènebis(tétrabromophtalimide), le tétrabromo-bisphénol A, le polystyrène bromé, le polybutadiène bromé, le polystyrène bromé, les copolymères de polybutadiène, la résine époxy bromée, le polypentabromobenzylacrylate, de préférence en combinaison avec Sb₂O₃ et/ou Sb₂O₅ ;
vi. le borate de zinc ou borate de calcium ;
vii. le soufre élémentaire, les disulfures et polysulfures, le sulfure de thiuram, les dithiocarbamates, le mercaptobenzothiazole et les sulfenamides ;
viii. le polytétrafluoroéthylène ;
ix. les polyphénylsiloxanes ;
x. le sulfonate de phosphonium, le perfluorobutane sulfonate de potassium, le sulfonate de p-toluène de potassium, le diphénylsulfonate de potassium
xi. l'oxyde de molybdène, l'octamolybdate d'ammonium, le molybdate de cuivre, le molybdate de zinc, les complexes de molybdate, par exemple le molybdate de calcium, le molybdate de calcium et de zinc, le molybdate de zinc sur support de silicate de magnésium ;
xii. la lignine, le chitosane, l'acide phytique
xiii. ainsi que des mélanges, combinaisons ou mélanges de deux ou plusieurs des substances mentionnées sous i. à xii.

11. Composition plastique ignifugée selon la revendication 9 ou 10, **caractérisée en ce qu'**elle est exempte de composés d'antimoine.

12. Composition plastique ignifugée selon l'une des deux revendications précédentes, **caractérisée en ce que**
les capteurs d'acide sont choisis dans le groupe constitué par les sels d'acides carboxyliques à longue chaîne, en particulier le stéarate de calcium, le stéarate de magnésium, le stéarate de zinc, le lactate de calcium, le stéaroyl-2-lactylate de calcium, les hydrotalcites ;
les stabilisateurs de lumière et UV sont choisis parmi le groupe constitué d'antioxydants phénoliques, de phosphites, de phosphonites, d'amines stériquement encombrées (HALS) et de mélanges de ceux-ci ;
les antioxydants phénoliques sont choisis parmi le groupe constitué par l'octadécyl-3-(3, 5-di-tert-butyl-4-hydroxyphényl)propionate, le pentaérythritol-tétrakis[3-(3, 5-di-*tert*-butyl-4-hydroxyphényl)propionate, le tris(3,5-di-tert-butyl-4-hydroxyphényl)isocyanurate, le 1,3,5-triméthyl-2,4,6-tris(3,5-di-tert-butyl-4-hydroxyphényl)isocyanurate, le 1,3,5-triméthyl-2,4, le 6-tris(3,5-di-tert-butyl-4-hydroxybenzyl)benzène, le triéthylèneglycol-bis[3-(3-tert-butyl-4-hydroxy-5-méthylphényl)propionate, le N,N'-hexane-1,6-diyl-bis[3-(3,5-di-tert-butyl-4-hydroxyphényl)propionamide et leurs mélanges ;
les phosphites et phosphonites étant choisis parmi le groupe constitué du tris-(2,4-di-tert-butylphényl)phosphite, diisodécylpentérythritoldiphosphite, du bis(2,4-di-tert-butylphényl)pentaérythritoldiphosphite, du bis(2,4-di-cumylphényl)pentaérythritoldiphosphite, du bis(2,6-di-tert-butyl-4-méthylphényl), pentaérythritoldiphosphite, diisodécyloxypentaérythritoldiphosphite, du bis(2,4-di-tert-butyl-6-méthylphényl)pentaérythritoldiphosphite, du bis(2,4,6-tris(tert-butylphényl)pentaérythritoldiphosphite, du tétrakis(2, 4-di-tert-butylphényl)-4,4'-biphénylènediphosphonite et leurs mélanges ;
les antioxydants aminés sont choisis parmi le groupe constitué de N,N'-di-isopropyl-p-phénylènediamine, de N,N'-di-sec-butyl-p-phénylènediamine, de N,N'-bis(1,4-diméthylpentyl)-p-phénylènediamine, de N,N'-bis(1-éthyl-3-méthylpentyl)-p-phénylènediamine, de N,N'-bis(1-méthylheptyl)-p-phénylènediamine, de N,N'-dicyclohexyl-p-phénylènediamine, de N,N'-diphényl-p-phénylènediamine, de N,N'-bis(2-naphtyl)-p-phénylènediamine, de N-isopropyl-N'-phényl-p-phénylènediamine, de N-(1,3-diméthylbutyl)-N'-phényl-p-phénylènediamine, de N-(1-méthylheptyl)-N' -phényl-p-phénylènediamine, N-cyclohexyl-N'-phényl-p-phénylènediamine et leurs mélanges ;
les antioxydants soufrés sont choisis parmi le groupe constitué du distéarylthiodipropionate, du dilauryl dipropionate et de leurs mélanges ;
les hydroxylamines sont choisies parmi le groupe constitué par la N,N-dialkylhydroxylamine, la N,N-dibenzylhydroxylamine, la N,N-dilaurylhydroxylamine, la N,N-distéarylhexylamine, la N-benzyl-α-phénylnitrone, la N-octadécyl-α-hexadécylnitrone ;
les amines à encombrement stérique étant choisies dans le groupe constitué par le 1,1-bis(2,2,6,6-tétraméthyl-4-pipéridyl)succinate, le bis(1,2,2,6,6-pentaméthyl-4-pipéridyl)sébacate, le bis(1-octyloxy-2,2,6,6-tétraméthyl-4-pipéridyl)sébacate, le bis(1,2,2,6,6-pentaméthyl-4-pipéridyl)-n-butyl-3,5-di-tert-butyl-4-hydroxybenzylmalonate, le produit de condensation de la 1-(2-hydroxyéthyl)-2,2,6,6-tétraméthyl-4-hydroxypipéridine et l'acide succinique, les produits de condensation linéaires ou cycliques de N,N'-bis(2,2,6,6-tétraméthyl-4-pipéridyl)hexaméthylènediamine et de 4-tert-octylamino-2,6-dichloro-1,3,5-triazine, le tris(2,2,6,6-tétraméthyl-4-pipéridyl)nitrilotriacétate, le tétrakis(2,2,6,6-tétraméthyl-4-pipéridyl)-1,2,3,4-butanetétracarboxylate, le 1,1'-(1,2-éthanediyl)-bis(3,3,5,5-tétraméthylpipérazinone), le 4-benzoyl-2,2,6,6-tétraméthylpipéridine, le 4-stéaryloxy-2,2,6,6-tétraméthylpipéridine, les produits de condensation linéaires ou cycliques de N,N'-bis(2,2,6,6-tétraméthyl-4-pipéridyl)hexaméthylènediamine et de 4-morpholino-2,6-dichloro-1,3,5-triazine, le produit de réaction de 7,7,9,9-tétraméthyl-2-cycloundécyl-1-oxa-3,8-diaza-4-oxospiro-[4,5)décane et d'épichlorhydrine et leurs mélanges ; et/ou
le composant (A) est choisi parmi un ou plusieurs des polymères indiqués dans la revendication 6.

13. Composition plastique ignifugée selon l'une des revendications 9 à 12, **caractérisée en ce que**
le composant (A) est présent à raison de 60 à 99 % en poids, de préférence de 60 à 95 % en poids et de manière particulièrement préférée de 60 à 90 % en poids par rapport au poids total de la composition plastique ignifugée ;
le composant (B) est présent à raison de 0,5 à 15 % en poids, de préférence de 1,0 à 12 % en poids et de manière particulièrement préférée de 2 à 10 % en poids par rapport au poids total de la composition plastique ignifugée ;
le composant (C) est présent à raison de 1 à 60 % en poids, de préférence de 2 à 30 % en poids et de manière particulièrement préférée de 5 à 25 % en poids par rapport au poids total de la composition plastique ignifugée ;
le composant (D) est présent à raison de 0,05 à 50 % en poids, de préférence de 0,1 à 40 % en poids et de manière particulièrement préférée de 0,2 à 30 % en poids ou de 0,1 à 1 % en poids par rapport au poids total de la composition plastique ignifugée ;
le composant (A) étant de préférence un polymère thermoplastique.

14. Utilisation d'une composition plastique ignifugée selon l'une des revendications 9 à 13 dans l'industrie électrique ou électronique, la construction de machines et d'appareils, l'industrie du bâtiment, l'industrie des transports, de préférence les automobiles, les avions, les chemins de fer et les bateaux, pour des applications médicales, pour des appareils ménagers, des pièces de véhicules, des câbles, des articles de consommation, des emballages, des meubles et des textiles.
